(19) Europäisches Patentamt
European Patent Office
Office européen des brevets

(11) EP 2 868 717 B1

(12) # EUROPEAN PATENT SPECIFICATION

(45) Date of publication and mention of the grant of the patent:
**19.04.2017 Bulletin 2017/16**

(51) Int Cl.:
***C09D 1/00*** *(2006.01)* ***C09D 5/00*** *(2006.01)*
***C09D 7/00*** *(2006.01)*

(21) Application number: **14191532.2**

(22) Date of filing: **03.11.2014**

(54) **Titania-containing coating composition and coated article**

Titandioxidhaltige Beschichtungszusammensetzung und beschichteter Artikel

Composition de revêtement contenant du titane et article revêtu

(84) Designated Contracting States:
**DE FR GB**

(30) Priority: **01.11.2013 JP 2013228162**
**16.04.2014 JP 2014084096**

(43) Date of publication of application:
**06.05.2015 Bulletin 2015/19**

(73) Proprietor: **Shin-Etsu Chemical Co., Ltd.**
**Chiyoda-ku**
**Tokyo (JP)**

(72) Inventors:
- **Masuda, Kohei**
**Annaka-shi, Gunma (JP)**
- **Aoki, Yukimasa**
**Annaka-shi, Gunma (JP)**
- **Higuchi, Koichi**
**Annaka-shi, Gunma (JP)**

(74) Representative: **Stoner, Gerard Patrick et al**
**Mewburn Ellis LLP**
**City Tower**
**40 Basinghall Street**
**London EC2V 5DE (GB)**

(56) References cited:
**EP-A1- 2 239 308** **EP-A1- 2 463 231**
**EP-A1- 2 708 513**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 868 717 B1

## Description

### TECHNICAL FIELD

This invention relates to titania-containing coating compositions and coated articles using the same. More particularly, it relates to a coating composition which can be coated onto a plastic or organic resin substrate and heat cured to form a film having visible light transparency, UV-shielding and long-term weatherability, and to coated articles using the same. The methods of making and using the compositions are further aspects herein. It also relates to a coated article comprising a cured film of the coating composition as primer and a silicone hard coating film thereon, exhibiting mar resistance as well.

### BACKGROUND

As a substitute for transparent flat glass, transparent materials having non-shattering nature or greater shatter resistance than glass have been widely used in recent years. For example, plastic substrates, especially polycarbonate resins, due to their excellent properties including transparency, impact resistance, and heat resistance, are currently used as structural members in place of glass, in various applications including windows in buildings and vehicles, meter covers and the like.

However, it is strongly desired to improve the surface properties of molded polycarbonate resins because their surface properties like mar resistance and weatherability are poor as compared with glass. Nowadays, polycarbonate resins intended for use as vehicle windows, road noise barriers or the like are desired to withstand weathering over ten years.

Known means for improving the weatherability of molded polycarbonate resins include lamination of an acrylic resin film having good weatherability to the surface of polycarbonate resin substrates, and provision of a UV absorber-containing resin layer on the polycarbonate resin surface by coextrusion or the like.

Also, known means for improving the mar resistance of molded polycarbonate resins include coating of thermosetting resins such as polyorganosiloxane and melamine resins and coating of polyfunctional acrylic photo-curable resins.

Further, a method of producing a transparent part having both weatherability and mar resistance is disclosed in JP-A S56-92059 and JP-A H01-149878. UV-absorbing transparent articles are known comprising a resin substrate, an undercoat layer having a large loading of UV absorber added, and a protective coating of a colloidal silica-laden polysiloxane coating composition formed on the undercoat layer.

However, the heavy loading of UV absorber into the undercoat layer gives rise to several problems. The heavy loading can adversely affect the adhesion of the undercoat layer to the underlying substrate or the overlying protective coating of a colloidal silica-laden polysiloxane coating composition. The UV absorber will escape from the undercoat composition via volatilization during heat curing step. On outdoor use over a long period of time, the UV absorber will gradually bleed out, exerting detrimental effects like cracking and whitening or yellowing. It is unacceptable from the standpoint of mar resistance to add a large amount of UV absorber to the colloidal silica-laden polysiloxane coating composition of which the overlying protective coating is made.

It is known from JP-A H08-151415 to form a protective coating on the surface of a synthetic resin or the like, using a mixture of a benzotriazole or benzophenone-derived UV-absorbing vinyl monomer and a vinyl monomer copolymerizable therewith as a coating component. This protective coating, however, has only limited mar resistance since it is made of a vinyl polymer.

It is also known to form a coating on a resin substrate to produce a multilayer resin article using a copolymer of a benzotriazole or benzophenone-derived UV-absorbing vinyl monomer, an alkoxysilyl-containing vinyl monomer, and a vinyl monomer copolymerizable therewith as a coating component, the coating having adhesion to the resin substrate and imparting weatherability to the article. See JP-A 2001-114841, JP 3102696, JP-A 2001-214122, JP-A 2001-047574, JP-A 2007-231060, and JP-A 2008-120986.

In these patent documents, coated articles having mar resistance and weatherability are manufactured by using a copolymer-containing composition to form an undercoat, and forming a colloidal silica-laden polysiloxane resin coating on the undercoat. These articles are noticeably improved in the adhesion of the polysiloxane resin coating and weatherability. Since the crosslinking network formation of alkoxysilyl groups in the undercoat does not proceed to a full extent, post-crosslinking of residual (or uncured) alkoxysilyl or hydroxysilyl groups can occur with the passage of time, inviting a likelihood of introducing strain to the coating and thus causing defects like cracks and delamination. That is, the coated articles are still insufficient in long-term weathering. In addition, when the coating is exposed to rapid changes of the ambient temperature, especially changes at relatively high temperature, the likelihood of crack occurrence by post-crosslinking is increased.

It is also known to use zinc oxide nanoparticles as the metal oxide nanoparticles having UV shielding property

(see JP-A 2010-261012 and JP-A 2011-225660). However, the amount of zinc oxide loaded must be increased in order to impart satisfactory UV shielding property, eventually giving rise to problems of storage instability and whitening on outdoor exposure. Titanium oxide has a higher absorption coefficient than zinc oxide and thus has a possibility of solving the problems associated with zinc oxide. However, it is difficult to disperse titanium oxide in a polyacrylate coating composition to form a stable and transparent dispersion. In addition, because of its photocatalytic activity, titanium oxide induces cracking and choking phenomena when blended in a polyacrylate coating composition and so, is believed not to contribute to weather resistance.

JP-A 2012-077267 discloses preparation of an organic solvent dispersion of titanium oxide having exceptionally low photocatalytic activity. However, the inventors learned that the titanium oxide obtained by this method is detrimental to dispersion stability in polyacrylate compositions and film formation.

As discussed above, a number of attempts have been made to improve the weather resistance, mar resistance and other properties of polyacrylate coating compositions. However, there is not available a coating composition whose cured film exhibits mar resistance, UV shielding property, and sufficient weather resistance and durability to withstand prolonged outdoor exposure while maintaining visible light transparency. As yet, titanium oxides of certain type, titanium oxide-containing composition, and coated article, which solve the outstanding problems are unknown.

Citation List

Patent Document 1: JP-A S56-92059
Patent Document 2: JP-A H01-149878
Patent Document 3: JP-A H08-151415
Patent Document 4: JP-A 2001-114841
Patent Document 5: JP 3102696
Patent Document 6: JP-A 2001-214122
Patent Document 7: JP-A 2001-047574
Patent Document 8: JP-A 2007-231060
Patent Document 9: JP-A 2008-120986
Patent Document 10: JP-A 2010-261012 (USP 8809438, EP 2239308)
Patent Document 11: JP-A 2011-225660
Patent Document 12: JP-A 2012-077267


THE INVENTION

The aim herein is to provide new and useful coating compositions whose cured films maintain visible light transparency, have mar resistance and UV shielding property, and also have sufficient weather resistance and durability to withstand prolonged outdoor exposure. Methods of making and using the compositions and articles coated with the compositions are further aspects.

The invention pertains to a coating composition comprising a resin and titanium oxide microparticles as a UV-shielding agent. The inventors have found that when a dispersion of titanium oxide microparticles obtained by incorporating a specific element into titanium oxide microparticles so as to suppress photocatalytic activity to a substantial extent and surface treating the microparticles with a specific surface treating agent so as to improve dispersibility, is compounded in the coating composition, the cured film exhibits adhesion, mar resistance and UV shielding property, maintains visible light transparency, and offers weather resistance, crack resistance and whitening resistance against prolonged outdoor exposure which could not be achieved in the prior art. Specifically, a coating composition comprising (A) surface-treated titanium oxide comprising core/shell type microparticles each consisting of a core of titanium oxide which may be complexed with another inorganic oxide, and a shell of silicon oxide around the core, which are treated with two surface treating components having the general formulae (I) and (II) defined below, (B) a vinyl copolymer obtained from copolymerization of (b-1) a vinyl monomer having an alkoxysilyl group, (b-2) a UV-absorbing vinyl monomer, and (b-3) another monomer copolymerizable therewith, and (C) a solvent, when coated and cured into a cured film, is found to have the desired properties.

More particularly, the inventors have found the following. A coating composition comprising (A) a dispersion of surface-treated titanium oxide microparticles, (B) a vinyl copolymer having alkoxysilyl and organic UV-absorbing groups attached to side chains, and (C) a solvent can be coated and cured into a cured film which has a lower coefficient of linear expansion than prior art coating films. In the film, alkoxysilyl groups in vinyl copolymer (B) and/or SiOH groups resulting from hydrolysis thereof form siloxane crosslinks together, and alkoxysilyl groups in vinyl copolymer (B) and/or SiOH groups resulting from hydrolysis thereof form crosslinks with surface OH groups on the surface-treated titanium

oxide microparticles in dispersion (A). These crosslinks form a dense three-dimensional crosslink network, which contributes to a low coefficient of linear expansion, together with the low expansion of the surface-treated titanium oxide microparticles themselves. Further, when a polysiloxane base hard resin coating is laid on this coating film which serves as a primer, the resulting coating system is found to be resistant to cracking and delamination over a long period of time and to have whitening resistance during outdoor exposure.

The vinyl copolymer (B) has organic UV-absorbing groups attached to side chains which are crosslinked within the film of the coating composition. That is, UV-absorbing groups are anchored within the film to control a propensity of UV-absorbing groups to migrate toward the film surface. This obviates a whitening phenomenon of outer appearance and a loss of adhesion, prevents dissolution or leaching of UV-absorbing groups in water or solvent, minimizes a reduction with time of the UV-absorbing effect, and prevents volatilization of UV-absorbing groups from the film during heat curing treatment at high temperature. In addition, these effects of vinyl copolymer (B) are found to be in synergy with the effective UV shielding property of surface-treated titanium oxide microparticles in dispersion (A), which provides outstanding UV resistance which has not been available in the prior art.

When an organopolysiloxane base hard protective coating layer is laid on a primer layer of the coating composition, alkoxysilyl groups in vinyl copolymer (B) and/or SiOH groups resulting from hydrolysis thereof and OH groups pendent from surfaces of surface-treated titanium oxide microparticles in dispersion (A) offer reactivity with the organopolysiloxane base hard protective coating layer, contributing to adhesion. Also the alkoxysilyl groups and/or SiOH groups resulting from hydrolysis thereof form crosslinks, contributing to heat resistance as well as mar resistance and weatherability. The present invention is predicated on these findings.

In one aspect according to claim 1 the invention provides a coating composition comprising

(A) surface-treated titanium oxide comprising 100 parts by weight of core/shell type microparticles each consisting of a core of titanium oxide which may be complexed with another inorganic oxide, and a shell of silicon oxide around the core, which are treated with 11 to 200 parts by weight of two surface treating components having the general formulae (I) and (II):

$$R^1Si(OR^2)_3 \qquad (I)$$

wherein $R^1$ is a $C_1$-$C_{15}$ organic group which may have a (meth) acrylic moiety, and $R^2$ is $C_1$-$C_4$ alkyl,

$$(R^3R^4{}_2Si)_2NH \qquad (II)$$

wherein $R^3$ is a $C_1$-$C_{15}$ organic group which may have a (meth) acrylic moiety, and $R^4$ is $C_1$-$C_6$ alkyl,

(B) a vinyl copolymer having alkoxysilyl and organic UV-absorbing groups attached on side chains and obtainable from copolymerization of (b-1) 1 to 50% by weight of a vinyl monomer having an alkoxysilyl group, (b-2) 5 to 40% by weight of a vinyl monomer having organic UV-absorbing group and vinyl polymerizable group in the molecule, comprising benzotriazole compound having the general formula (2):

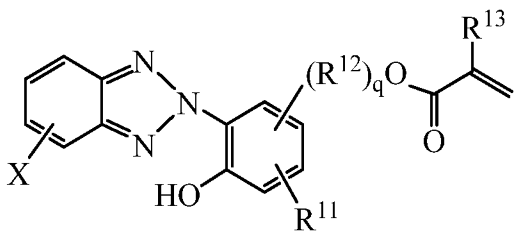

(2)

wherein X is hydrogen or chlorine, $R^{11}$ is hydrogen, methyl, or a tertiary $C_4$-$C_8$ alkyl group, $R^{12}$ is a straight or branched $C_2$-$C_{10}$ alkylene group, $R^{13}$ is hydrogen or methyl, and q is 0 or 1, or benzophenone compound having the general formula (3):

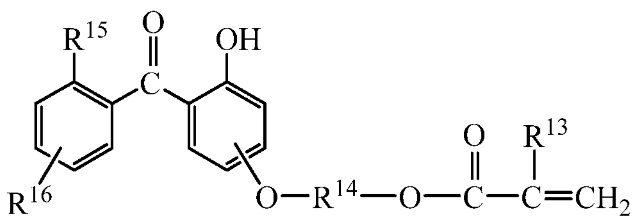

(3)

wherein $R^{13}$ is as defined above, $R^{14}$ is a substituted or unsubstituted, straight or branched $C_2$-$C_{10}$ alkylene group, $R^{15}$ is hydrogen or hydroxyl, and $R^{16}$ is hydrogen, hydroxyl or a $C_1$-$C_6$ alkoxy group, and (b-3) 10 to 94% by weight of another monomer copolymerizable therewith, not being vinyl monomer having an alkoxysilyl group or vinyl monomer having an organic UV-absorbing group in the molecule, and

(C) a solvent,

wherein 1 to 50 parts by weight of the surface-treated titanium oxide (A) is present per 100 parts by weight of the vinyl copolymer (B).

In a preferred embodiment, the surface-treated titanium oxide is prepared by a method comprising the steps of: (i) furnishing a water dispersion of core/shell type microparticles, (ii) adding an alcohol which is not fully compatible with water and forms a two-phase system, (iii) adding a silane compound having the general formula (I) and/or a (partial) hydrolytic condensate thereof, (iv) irradiating microwave, (v) adding an organic solvent, (vi) azeotroping off water, (vii) optionally removing water to 1,000 ppm or less, and (viii) reacting with a silane compound having the general formula (II).

In this case, the weight ratio of the surface treating component of formula (I) and the surface treating component of formula (II) is preferably 10:190 to 199:1.

In a preferred embodiment, the water dispersion of core/shell type microparticles in step (i) is a water dispersion of core/shell type tetragonal titanium oxide solid-solution microparticles each consisting of a core of tetragonal titanium oxide having tin and manganese incorporated in solid solution and a shell of silicon oxide around the core. The cores have a volume average 50% cumulative distribution diameter of up to 30 nm, and the core/shell type microparticles have a volume average 50% cumulative distribution diameter of up to 50 nm, both as measured by the dynamic light scattering method. The amount of tin incorporated in solid solution is to provide a molar ratio of titanium to tin (Ti/Sn) of 10/1 to 1,000/1, and the amount of manganese incorporated in solid solution is to provide a molar ratio of titanium to manganese (Ti/Mn) of 10/1 to 1,000/1.

Preferably the surface treating component having formula (I) is 3-acryloyloxypropyltrimethoxysilane or 3-methacryloyloxypropyltrimethoxysilane.

The coating composition may further comprise (D) colloidal silica, and optionally a UV absorber and/or UV stabilizer.

Preferably component (b-3) is selected from the group consisting of a (meth)acrylic monomer having a cyclic hindered amine structure, (meth)acrylate, (meth)acrylonitrile, (meth)acrylamide, alkyl vinyl ether, alkyl vinyl ester, styrene, and derivatives thereof.

Preferably the coating composition is used as a primer, especially for silicone hard coating film.

Preferably in this case the silicone hard coating film is a cured film of a silicone composition comprising (a) a silicone resin obtained from (co)hydrolytic condensation of an alkoxysilane having the formula (4):

$$(R^{01})_m(R^{02})_nSi(OR^{03})_{4-m-n} \qquad (4)$$

wherein $R^{01}$ and $R^{02}$ are each independently hydrogen or a substituted or unsubstituted monovalent hydrocarbon group and may bond together, $R^{03}$ is $C_1$-$C_3$ alkyl, m and n are each independently 0 or 1, m+n is 0, 1 or 2, a partial hydrolytic condensate thereof, or a mixture thereof, (b) colloidal silica, (c) a curing catalyst, (d) a solvent, and optionally (e) titanium oxide.

Another aspect is a method of making the present compositions by mixing the specified components thereof, optionally comprising the preparation of the surface-treated titanium oxide by any method disclosed herein.

In another aspect, the invention provides a coated article comprising a substrate and a cured film of the coating composition disposed on at least one surface of the substrate directly or via at least one layer. The substrate is typically an organic resin substrate. The method of making the article by coating is a further aspect.

## ADVANTAGEOUS EFFECTS

We find that a cured film of the coating composition proposed herein displays mar resistance and UV shielding property while maintaining visible light transparency, and also has sufficient weather resistance and durability to withstand prolonged outdoor exposure. An article coated with a cured film of the composition has the same advantages.

## BRIEF DESCRIPTION OF DRAWING

FIG. 1 is a diagram showing a particle size distribution of surface-treated titanium oxide (A-1) synthesized in Synthesis Example 1, as analyzed by the dynamic light scattering method.

FIG. 2 is a TEM photomicrograph (magnification ×300,000) of surface-treated titanium oxide (A-1).
FIG. 3 is a chart showing $^{29}$Si NMR spectrum of surface-treated titanium oxide (A-1).
FIG. 4 is a chart showing $^{29}$Si NMR spectrum of surface-treated titanium oxide (A-2) obtained in Synthesis Example 2, with an internal standard (cyclooctamethyltetrasiloxane) added thereto.
FIG. 5 is a chart showing $^{29}$Si NMR spectrum of surface-treated titanium oxide (RA-1) synthesized in Comparative Synthesis Example 1.
FIG. 6 is a chart showing $^{29}$Si NMR spectrum of surface-treated titanium oxide (RA-2) synthesized in Reference Example 1.

## FURTHER EXPLANATIONS; OPTIONS AND PREFERENCES

The terms "a" and "an" herein do not denote a limitation of quantity, but rather denote the presence of at least one of the referenced item. As used herein, the notation ($C_n$-$C_m$) means a group containing from n to m carbon atoms per group. The terminology "(meth)acrylic" refers collectively to acrylic and methacrylic. UV is the abbreviation of ultraviolet radiation. The term "microparticles" is interchangeable with ultra-fine particles and nano-size particles.

For the avoidance of doubt it is confirmed that in the general description herein, in the usual way the proposal of general preferences and options in respect of different features of the composition, methods, laminate and sheet constitutes the proposal of general combinations of those general preferences and options for the different features, insofar as they are combinable and compatible and are put forward in the same context.

In respect of numerical ranges disclosed in the present description it will of course be understood that in the normal way the technical criterion for the upper limit is different from the technical criterion for the lower limit, i.e. the upper and lower limits are intrinsically distinct proposals.

Components of the coating composition of the invention are described in detail below.

## Component A: Surface-treated titanium oxide

Component (A) is surface-treated titanium oxide which is obtained by furnishing core/shell type microparticles each consisting of a core of titanium oxide which may be complexed with another inorganic oxide, especially metal oxide (other than titanium oxide) and a shell of silicon oxide enclosing the core, and treating 100 parts by weight of the core/shell type microparticles with 11 to 200 parts by weight (in total) of two surface treating components having the general formulae (I) and (II).

$$R^1Si(OR^2)_3 \qquad (I)$$

Herein $R^1$ is a $C_1$-$C_{15}$ organic group which may have a (meth)acrylic moiety, and $R^2$ is a $C_1$-$C_4$ alkyl group.

$$(R^3R^4{}_2Si)_2NH \qquad (II)$$

Herein $R^3$ is a $C_1$-$C_{15}$ organic group which may have a (meth)acrylic moiety, and $R^4$ is a $C_1$-$C_6$ alkyl group.

In formula (I), $R^1$ is a $C_1$-$C_{15}$ organic group which may have a (meth)acrylic moiety, typically an alkyl group of 1 to 15 carbon atoms, preferably 4 to 12 carbon atoms, optionally having (meth)acryloyloxy moiety. Exemplary of the compound having formula (I) are silane compounds having a carbon group which may be substituted with (meth)acryloyloxy moiety, including methyltrimethoxysilane, methyltriethoxysilane, ethyltrimethoxysilane, ethyltriethoxysilane, propyltrimethoxysilane, propyltriethoxysilane, (meth)acryloyloxymethyltrimethoxysilane, (meth)acryloyloxymethyltriethoxysilane, (meth)acryloyloxyethyltrimethoxysilane, (meth)acryloyloxyethyltriethoxysilane, (meth)acryloyloxypropyltrimethoxysilane, (meth)acryloyloxypropyltriethoxysilane, (meth)acryloyloxyoctyltrimethoxysilane, and (meth)acryloyloxyoctyltriethoxysilane.

These compounds may be synthesized or commercially available. Commercial products include methyltrimethoxysilane "KBM-13", propyltrimethoxysilane "KBM-3033", acryloyloxypropyltrimethoxysilane "KBM-5103", and methacryloyloxypropyltrimethoxysilane "KBM-503", all available from Shin-Etsu Chemical Co., Ltd.

In formula (II), $R^3$ is a $C_1$-$C_{15}$ organic group which may have a (meth)acrylic moiety, typically an alkyl group of 1 to 15 carbon atoms, preferably 4 to 12 carbon atoms, optionally having (meth)acryloyloxy moiety. Exemplary of the compound having formula (II) are hexamethyldisilazane, bis[(acryloyloxymethyl)dimethylsilyl]azane, bis[(acryloyloxypropyl)dimethylsilyl]azane, hexaethyldisilazane, and hexapropyldisilazane. These compounds may be synthesized by the well-known method (JP-A 2009-67778). One or both of compounds (I) and (II) may have a said (meth)acrylic moiety.

The total treating amount of the two surface treating components of formulae (I) and (II) is 11 to 200 parts, preferably 40 to 190 parts, more preferably 60 to 180 parts by weight per 100 parts by weight of the core/shell type microparticles.

In this case, the weight ratio of the surface treating component of formula (I) and the surface treating component of formula (II) is preferably 10:190 to 199:1, more preferably 20:170 to 170:20, most preferably 30:150 to 150:30.

The method for preparing surface-treated titanium oxide is not particularly limited. For example, titanium oxide particles obtained by starting with a commercially available dispersion of titanium oxide in organic solvent (for example, titania sol "Optolake" series from JGC C&C) and surface treating it with silane compounds having formulae (I) and (II) may be used. Preferably, the surface-treated titanium oxide is prepared by a method comprising the steps of: (i) furnishing a water dispersion of core/shell type microparticles, (ii) adding an alcohol which is not fully compatible with water and forms a two-phase system, (iii) adding a silane compound having the general formula (I) and/or a (partial) hydrolytic condensate thereof, (iv) applying microwave, (v) adding an organic solvent, (vi) azeotroping off water, (vii) optionally removing water to 1,000 ppm or less, and (viii) reacting with a silane compound having the general formula (II).

Step (i)

Step (i) is to furnish a titanium oxide dispersion, preferably a water dispersion of inorganic oxide colloid. The inorganic oxide colloid water dispersion is desirably a dispersion wherein inorganic oxide particles having an average cumulative particle size of 1 to 200 nm are dispersed in a dispersing medium, typically water, without agglomeration.

Dispersed phase of colloidal solution

The dispersed phase of colloidal solution is titanium oxide which may be complexed with another inorganic oxide, especially metal oxide (sometimes referred to simply as "titanium oxide," hereinafter). The metal (exclusive of titanium) of the metal oxide which may be complexed with titanium oxide is selected from among Group 13 elements, Group 14 elements (exclusive of carbon), first transition series elements, second transition series elements, third transition series elements, and lanthanoids. Inter alia, tin and manganese are preferred.

The metal oxide which can be complexed with titanium oxide may be one or more metal oxides whose metal is selected from the foregoing group, or a complex of such metal oxides. As used herein, the term "complexed" is used in a broad sense and refers to a composite or complex oxide formed through simple mixing or chemical bonding. The complex oxide formed through chemical bonding refers to the form represented by the following formula (X).

$$(M^1O_x)_m(M^2O_y)_n \qquad (X)$$

Herein $M^1$ is an element selected from among Al, B, In, Si, Ge, Sn, Ti, Mn, Zn, Y, Zr, Hf, Ta, La, Ce, Pr, Nd, Tb, Dy, and Yb. $M^2$ is an element selected from among Al, B, In, Si, Ge, Sn, Ti, Mn, Zn, Y, Zr, Hf, Ta, La, Ce, Pr, Nd, Tb, Dy, and Yb, provided that the element of $M^2$ is not identical with the element of $M^1$. Letters x and y are given as $x = a/2$ wherein a is the valence number of $M^1$, and $y = b/2$ wherein b is the valence number of $M^2$. Letters m and n are real numbers meeting $m+n = 1$, $0 < m < 1$ and $0 < n < 1$. That is, the structure has a unit in which $M^1$ bonds with $M^2$ via oxygen. In the structure, $M^1$ and $M^2$ may be sparsely or locally distributed. The structure wherein $M^1$ and $M^2$ are sparsely distributed is as observed in a co-hydrolysate of two or more metal alkoxides. The structure wherein $M^1$ and $M^2$ are locally distributed is as observed in core/shell type particles (i.e., particles each consisting of a core of microparticulate metal oxide and a shell of another metal oxide enclosing the core) and is formed, for example, by hydrolysing a plurality of metal alkoxides in stages depending on the type of metal alkoxide. Inter alia, tin and manganese are preferred.

The particle size (specifically, average cumulative particle diameter) of titanium oxide microparticles as dispersed phase may be measured by a variety of methods. The range of particle size is described herein as a volume basis 50% cumulative distribution diameter ($D_{50}$) as measured by the dynamic light scattering method using laser light while the particle size may be observed as supporting evidence under electron microscope. Although the value determined by such a measurement method does not depend on a particular measuring instrument, such an instrument as Nanotrac UPA-EX150 (Nikkiso Co., Ltd.) may be used for the dynamic light scattering method. For the electron microscopy, a transmission electron microscope H-9500 (Hitachi High-Technologies Corp.) may be used. When the colloidal solution is added to a coating composition, for example, the average cumulative particle diameter of dispersed phase should preferably in a range of 1 to 200 nm, more preferably 1 to 100 nm, even more preferably 1 to 80 nm, and most preferably 1 to 50 nm, because transparency in the visible region is crucial. If the average cumulative particle diameter of dispersed phase exceeds 200 nm, it is larger than the wavelength of the visible region, often leading to noticeable scattering. If the particle diameter is less than 1 nm, the total surface area of dispersed phase may become very large in the system, and so the titanium oxide dispersion become difficult to handle.

Dispersing medium of titanium oxide dispersion

The colloid solution furnished in step (i) is characterized by water as dispersing medium. The water used herein

may be fresh water available as city water, industrial water, well water, natural water, rain water, distilled water, and deionized water, with deionized water being preferred. Deionized water may be prepared through a desalinator (e.g., FW-10 by Organo Corp. or Direct-QUV3 by Merck Millipore). The dispersing medium may contain a monohydric alcohol which is miscible with water in any ratio, when it is added in the step of preparing titanium oxide dispersion as will be described later. The water-miscible monohydric alcohol may also be contained as resulting from the co-solvent during preparation of core/shell type microparticles and the by-product on hydrolysis of metal alkoxide in the sol-gel reaction. The water-miscible monohydric alcohol may be contained in an amount of preferably 0 to 30% by weight, more preferably 0 to 25% by weight, and even more preferably 0 to 20% by weight, based on water. If the amount of the water-miscible monohydric alcohol exceeds 30 wt%, the results may become unfavorable because it can serve as a compatibilizing agent for the alcohol which is not fully compatible with water and to be added in step (ii).

Concentration of titanium oxide dispersion

The titanium oxide dispersion in step (i) should preferably have a concentration of 1 to 35% by weight, more preferably 5 to 30% by weight, and even more preferably 10 to 25% by weight. If the concentration of the titanium oxide dispersion is less than 1 wt%, preparation efficiency may become low. If the concentration exceeds 35 wt%, the dispersion may tend to gel, depending on such conditions as pH and temperature. As used herein, the concentration is a percentage of the weight of dispersed phase divided by the weight of the overall titanium oxide dispersion (total of dispersed phase and dispersing medium). The concentration may be computed from a weight change which is determined by weighing a certain amount of the titanium oxide dispersion and evaporating the dispersing medium to dryness.

Dispersion of core/shell structure titanium oxide

The titanium oxide dispersion used herein is preferably a dispersion of titanium oxide microparticles of core/shell structure each consisting of a core of titanium oxide which may be complexed with one or more other metal oxides (described above) and a shell of one or more other metal oxides (described above) enclosing the core. The dispersion of core/shell type titanium oxide microparticles is typically a dispersion of core/shell type titanium oxide microparticles each consisting of a core of complex oxide, specifically titanium oxide-tin oxide-manganese oxide (i.e., titanium oxide microparticle having tin and manganese incorporated in solid solution) and a shell of silicon oxide enclosing the core. Hereinafter, reference is made to a dispersion of core/shell type titanium oxide microparticles (or core/shell type tetragonal titanium oxide solid solution).

Colloidal dispersion of core/shell type tetragonal titanium oxide solid solution microparticles

The colloidal dispersion of core/shell type tetragonal titanium oxide solid solution is a dispersion of microparticles each consisting of a core of tetragonal titanium oxide having tin and manganese incorporated in solid solution and a shell of silicon oxide enclosing the core, dispersed in an aqueous dispersing medium, typically water.

Titanium oxide (or titania) generally includes three types, rutile, anatase and brookite types. Herein titanium oxide of tetragonal rutile type is preferably used as solvent for tin and manganese because it has a low photocatalytic activity and high UV-shielding capability.

Tin and manganese form a solid solution with titanium oxide. The tin component as one solute is not particularly limited as long as it is derived from a tin salt. Included are tin oxide and tin chalcogenides such as tin sulfide, with tin oxide being preferred. Exemplary tin salts include tin halides such as tin fluoride, tin chloride, tin bromide and tin iodide, tin halogenoids such as tin cyanide and tin isothiocyanide, and tin mineral acid salts such as tin nitrate, tin sulfate and tin phosphate. Of these, tin chloride is preferred for stability and availability. Tin in the tin salt may have a valence of 2 to 4, with tetravalent tin being preferred.

The manganese component as another solute is not particularly limited as long as it is derived from a manganese salt. Included are manganese oxide and manganese chalcogenides such as manganese sulfide, with manganese oxide being preferred. Exemplary manganese salts include manganese halides such as manganese fluoride, manganese chloride, manganese bromide and manganese iodide, manganese halogenoids such as manganese cyanide and manganese isothiocyanide, and manganese mineral acid salts such as manganese nitrate, manganese sulfate and manganese phosphate. Of these, manganese chloride is preferred for stability and availability. Manganese in the manganese salt may have a valence of 2 to 7, with divalent manganese being preferred.

When tin and manganese form a solid solution with tetragonal titanium oxide, the amount of tin incorporated in solid solution is to provide a molar ratio of titanium to tin (Ti/Sn) of 10/1 to 1,000/1, preferably 20/1 to 200/1, and the amount of manganese incorporated in solid solution is to provide a molar ratio of titanium to manganese (Ti/Mn) of 10/1 to 1,000/1, preferably 20/1 to 200/1. If the amount of tin or manganese in solid solution form is to provide a Ti/Sn or Ti/Mn molar ratio of less than 10, there is observed considerable light absorption in the visible region assigned to tin

and manganese. If the Ti/Sn or Ti/Mn molar ratio exceeds 1,000, photocatalytic activity is not fully deprived, and undesirably, the crystal system transitions to anatase type having low visible absorptivity.

The solid solution form of tin and manganese components may be either substitutional or interstitial. The substitutional solid solution refers to a solid solution form in which tin and manganese substitute at the site of titanium(IV) ion in titanium oxide. The interstitial solid solution refers to a solid solution form in which tin and manganese fit in the space between crystal lattices of titanium oxide. The interstitial type tends to create F-center which causes coloring, and due to poor symmetry around a metal ion, the Franck-Condon factor of electro-vibronic transition at the metal ion increases, leading to more absorption of visible light. For this reason, the substitution type is preferred.

A shell of silicon oxide is formed around the nanosized core of tetragonal titanium oxide having tin and manganese incorporated in solid solution. The following descriptions of methods, materials and parameters can also be applied with other types of titanium oxide cores herein. The shell may contain silicon oxide as the major component and another component(s) such as tin, aluminum and the like while it may be formed by any desired techniques. For example, the silicon oxide shell may be formed by hydrolytic condensation of a tetraalkoxysilane. Suitable tetraalkoxysilanes include commonly available ones such as tetramethoxysilane, tetraethoxysilane, tetra(n-propoxy)silane, tetra(isopropoxy)silane, and tetra(n-butoxy)silane. Of these, tetraethoxysilane is preferred from the standpoints of reactivity and safety. For example, useful tetraethoxysilane is commercially available under the tradename: KBE-04 from Shin-Etsu Chemical Co., Ltd. Hydrolytic condensation of a tetraalkoxysilane may be performed in water, optionally in the presence of a condensation catalyst such as ammonia, aluminum salts, organoaluminum compounds, tin salts, or organotin compounds. Inter alia, ammonia is especially preferred because it also serves as a dispersant for the nanosized cores.

Shells of silicon oxide are formed around nanosized cores of tetragonal titanium oxide having tin and manganese incorporated in solid solution, yielding core/shell type tetragonal titanium oxide solid-solution particles. The silicon oxide shells preferably account for 20 to 50%, more preferably 25 to 45%, and even more preferably 30 to 40% by weight based on the overall core/shell type tetragonal titanium oxide particles. If the shell amount is less than 20 wt%, then shell formation may be insufficient. If the shell amount exceeds 50 wt%, then the resulting particles tend to agglomerate together, rendering the dispersion opaque.

In the dispersion of core/shell type tetragonal titanium oxide solid-solution particles, the nanosized cores of tetragonal titanium oxide having tin and manganese incorporated in solid solution should preferably have a volume basis 50% cumulative distribution diameter $D_{50}$ of up to 30 nm, more preferably up to 20 nm, and the core/shell type tetragonal titanium oxide particles should preferably have a volume basis 50% cumulative distribution diameter $D_{50}$ of up to 50 nm, more preferably up to 30 nm, both as measured by the dynamic light scattering method using laser light. If the diameters ($D_{50}$) of the cores and the core/shell type particles exceed the upper limits, undesirably the dispersion may become opaque. The lower limit of diameter $D_{50}$ of the cores is at least 5 nm, though not critical. The lower limit of diameter $D_{50}$ of the core/shell type particles is at least 6 nm, though not critical. Notably, the volume basis 50% cumulative distribution diameter ($D_{50}$, also known as "average particle size") is as measured by Nanotrac UPA-EX150 (Nikkiso Co., Ltd.), for example.

Examples of the aqueous dispersing medium in which core/shell type tetragonal titanium oxide solid-solution particles are dispersed include water and a mixture of water and a hydrophilic organic solvent in an arbitrary ratio. Water is preferably deionized water (ion exchanged water), distilled water, or pure water. Preferred hydrophilic organic solvents are alcohols such as methanol, ethanol, and isopropanol. An amount of the hydrophilic organic solvent mixed is preferably 0 to 30% by weight based on the aqueous dispersing medium. If the amount of the hydrophilic organic solvent exceeds 30 wt%, undesirably it can serve as a compatibilizing agent for the alcohol which is not fully compatible with water and to be added in step (ii). Inter alia, deionized water or pure water is most preferred for productivity and cost.

In the colloidal dispersion of the core/shell type tetragonal titanium oxide particles in the aqueous dispersing medium, the core/shell type tetragonal titanium oxide solid-solution particles are preferably present in a concentration of 0.1% to less than 10% by weight, more preferably 0.5 to 5% by weight, and even more preferably 1 to 3% by weight. It is acceptable that the aqueous dispersing medium contains a basic substance (dispersant) and other agents which are used in the preparation of the core/shell type tetragonal titanium oxide solid-solution particles. In particular, since the basic substance has the functions of pH adjusting agent and dispersing agent, it may be used as an aqueous solution having a suitable concentration along with the aqueous dispersing medium. However, it is preferred that the colloidal dispersion of core/shell type tetragonal titanium oxide solid-solution particles be free of any dispersant (basic substance) other than ammonia, alkali metal hydroxides, phosphates, hydrogenphosphates, carbonates, and hydrogencarbonates. This is because the inclusion of a selected basic substance eliminates a positive need for a polymeric dispersant which is otherwise necessary as a dispersant for titanium oxide microparticles in the prior art, and accordingly avoids any detrimental impacts which are exerted on mar resistance and substrate adhesion of a coating or cured film when a titanium oxide microparticle water dispersion containing a polymeric dispersant is applied to coating compositions.

Examples of the basic substance (dispersant) which can be present in the colloidal dispersion of core/shell type tetragonal titanium oxide solid-solution particles include ammonia, lithium hydroxide, sodium hydroxide, potassium hydroxide, cesium hydroxide, monolithium dihydrogenphosphate, monosodium dihydrogenphosphate, monopotassium

dihydrogenphosphate, monocesium dihydrogenphosphate, dilithium hydrogenphosphate, disodium hydrogenphosphate, dipotassium hydrogenphosphate, dicesium hydrogenphosphate, trilithium phosphate, trisodium phosphate, tripotassium phosphate, tricesium phosphate, lithium hydrogencarbonate, sodium hydrogencarbonate, potassium hydrogencarbonate, cesium hydrogencarbonate, lithium carbonate, sodium carbonate, potassium carbonate, and cesium carbonate. Inter alia, ammonia and sodium hydroxide are preferred.

The colloidal dispersion of core/shell type tetragonal titanium oxide solid-solution particles thus constructed has high transparency. Specifically, the dispersion gives a transmittance of preferably at least 80%, more preferably at least 85%, and even more preferably at least 90%, when measured by transmitting light of wavelength 550 nm through a quartz cell having an optical path length of 1 mm which is filled with the colloidal dispersion of core/shell type tetragonal titanium oxide solid-solution particles diluted to a concentration of 1% by weight. The transmittance is readily determined by UV/visible transmission spectroscopy.

When a colloidal dispersion of core/shell type tetragonal titanium oxide particles having tin and manganese incorporated in solid solution is prepared by the method to be described below, the solid-solution particles having a specific cumulative particle size distribution diameter can be formed without mechanical unit operations like pulverizing and sifting steps. Thus the method ensures very high production efficiency as well as very high transparency.

Method for preparation of colloidal dispersion of core/shell type tetragonal titanium oxide solid-solution particles

The method for preparing a water dispersion of core/shell type tetragonal titanium oxide particles having tin and manganese incorporated in solid solution involves the following steps (a) and (b) which are described below in detail.

Step (a)

In step (a), a water dispersion of tetragonal titanium oxide microparticles having tin and manganese incorporated in solid solution is first prepared. The technique of preparing the water dispersion is not particularly limited. In the preferred procedure, starting materials including a titanium compound, tin compound, manganese compound, basic substance and hydrogen peroxide are reacted in an aqueous dispersing medium to form a solution of peroxotitanate containing tin and manganese, which is subjected to hydrothermal reaction, yielding a water dispersion of tetragonal titanium oxide microparticles having tin and manganese incorporated in solid solution.

The former stage of reaction to form a solution of peroxotitanate containing tin and manganese may follow one procedure involving the steps of adding a basic substance to a starting titanium compound in an aqueous dispersing medium to form titanium hydroxide, removing impurity ions, adding hydrogen peroxide to form peroxotitanate, adding a tin and manganese compound thereto to form a tin and manganese-containing peroxotitanate solution; or another procedure involving the steps of adding a tin and manganese compound to a starting titanium compound in an aqueous dispersing medium, adding a basic substance thereto to form titanium hydroxide containing tin and manganese, removing impurity ions, and adding hydrogen peroxide to form a tin and manganese-containing peroxotitanate solution.

Examples of the starting titanium compound include salts of titanium with mineral acids such as hydrochloride, nitrate and sulfate, salts of titanium with organic acids such as formate, citrate, oxalate, lactate and glycolate, and titanium hydroxide which is precipitated by adding alkali to such aqueous solution for hydrolysis. One or a mixture of two or more of the foregoing may be used.

The tin compound may be derived from any of tin salts, while other candidates include tin oxide and tin chalcogenides such as tin sulfide, with tin oxide being preferred. Suitable tin salts include tin halides such as tin fluoride, tin chloride, tin bromide and tin iodide, tin halogenoids such as tin cyanide and tin isothiocyanide, and tin mineral acid salts such as tin nitrate, tin sulfate, and tin phosphate. Of these, tin chloride is preferably used for stability and availability. In the tin salts, tin may have a valence of 2 to 4, with tetravalent tin being preferred. The tin salt is used so as to give the solid-solution content defined above. Also the aqueous dispersing medium and basic substance may be selected from the afore-mentioned examples and used in the afore-mentioned formulation.

The manganese compound may be derived from any of manganese salts, while other candidates include manganese oxide and manganese chalcogenides such as manganese sulfide, with manganese oxide being preferred. Suitable manganese salts include manganese halides such as manganese fluoride, manganese chloride, manganese bromide and manganese iodide, manganese halogenoids such as manganese cyanide and manganese isothiocyanide, and manganese mineral acid salts such as manganese nitrate, manganese sulfate, and manganese phosphate. Of these, manganese chloride is preferably used for stability and availability. In the manganese salts, manganese may have a valence of 2 to 7, with divalent manganese being preferred.

Hydrogen peroxide serves to convert the starting titanium compound or titanium hydroxide to peroxotitanate, that is, a titanium oxide-base compound having Ti-O-O-Ti bond. Typically aqueous hydrogen peroxide is used. The amount of hydrogen peroxide added is preferably 1.5 to 5 times the total moles of Ti, Sn and Mn. The reaction of hydrogen peroxide to convert the starting titanium compound or titanium hydroxide to peroxotitanate is preferably conducted at a

temperature of 5 to 60°C and for a time of 30 minutes to 24 hours.

The tin and manganese-containing peroxotitanate solution may contain a basic or acidic substance for pH adjustment or the like. Exemplary basic substances include ammonia and analogs as mentioned above. Exemplary acidic substances include mineral acids such as sulfuric acid, nitric acid, hydrochloric acid, carbonic acid, phosphoric acid, and hydrogen peroxide, and organic acids such as formic acid, citric acid, oxalic acid, lactic acid, and glycolic acid. The tin and manganese-containing peroxotitanate solution is preferably at pH 1 to 7, more preferably pH 4 to 7, for safe handling.

The later stage of reaction to form a colloidal dispersion of tetragonal titanium oxide microparticles having tin and manganese incorporated in solid solution is by subjecting the tin and manganese-containing peroxotitanate solution to hydrothermal reaction under conditions: a pressure of 0.01 to 4.5 MPa, preferably 0.15 to 4.5 MPa, a temperature of 80 to 250°C, preferably 120 to 250°C, and a time of 1 minute to 24 hours. By this reaction, the tin and manganese-containing peroxotitanate is converted to tetragonal titanium oxide microparticles having tin and manganese incorporated in solid solution.

In step (i), the colloidal dispersion of tetragonal titanium oxide microparticles having tin and manganese incorporated in solid solution is blended with a monohydric alcohol, ammonia, and a tetraalkoxysilane (e.g., tetraethoxysilane).

Examples of the monohydric alcohol used herein include methanol, ethanol, propanol, isopropyl alcohol, and a mixture thereof, with ethanol being preferred. An appropriate amount of the monohydric alcohol used is up to 100 parts, more preferably up to 30 parts by weight per 100 parts by weight of the titanium oxide particle dispersion. By changing the amount of the monohydric alcohol blended, the thickness of silicon oxide shells formed around cores of tetragonal titanium oxide having tin and manganese incorporated in solid solution in the subsequent step (b) can be controlled. In general, as the amount of the monohydric alcohol blended increases, the thickness of silicon oxide shells increases because the solubility of silicon reactant (tetraalkoxysilane) in the reaction system increases while the dispersed state of titanium oxide is not adversely affected at all. That is, the water dispersion of core/shell type tetragonal titanium oxide particles having tin and manganese incorporated in solid solution can be formed in the subsequent step so as to fall in a specific cumulative distribution diameter, without mechanical unit operations like pulverizing and sifting steps, while the dispersion can be endowed with transparency in the visible region. Although the preferred amount of the monohydric alcohol used is up to 30 parts by weight as mentioned above, a more amount of the alcohol may be used. Since the alcohol can be selectively removed in the subsequent concentration step, a suitable operation may be added if necessary. The lower limit of the amount of the monohydric alcohol used is preferably at least 5 parts, more preferably at least 10 parts by weight.

Ammonia used herein is typically aqueous ammonia. Instead of addition of aqueous ammonia, ammonia gas may be blown into the water dispersion of tetragonal titanium oxide particles having tin and manganese incorporated in solid solution. It is also acceptable to add a reagent capable of generating ammonia in the dispersion, instead of addition of aqueous ammonia. The concentration of aqueous ammonia is not particularly limited, and any commercially available aqueous ammonia may be used. In the preferred procedure, 28 wt% conc. aqueous ammonia is used and added in increments until the water dispersion of tetragonal titanium oxide particles having tin and manganese incorporated in solid solution reaches pH 9 to 12, more preferably pH 9.5 to 11.5.

The tetraalkoxysilane may be selected from the aforementioned examples, with tetraethoxysilane being preferred. Tetraethoxysilane may be used as such while a (partial) hydrolysate of tetraethoxysilane is also useful. Tetraethoxysilane or (partial) hydrolysate thereof may be any of commercially available products, for example, KBE-04 (tetraethoxysilane by Shin-Etsu Chemical Co., Ltd.), Silicate 35 and Silicate 45 (partial hydrolytic condensate of tetraethoxysilane, Tama Chemicals Co., Ltd.), and ESI40 and ESI48 (partial hydrolytic condensate of tetraethoxysilane, Colcoat Co., Ltd.). Tetraethoxysilane or tetraalkoxysilanes may be used alone or in admixture of two or more.

The tetraalkoxysilane is blended in such an amount as to give 20 to 50%, preferably 25 to 45%, and more preferably 30 to 40% by weight of silicon oxide after hydrolysis, based on the silicon oxide-coated titanium oxide. Less than 20 wt% of silicon oxide indicates insufficient shell formation whereas more than 50 wt% of silicon oxide may promote agglomeration of particles, rendering the dispersion opaque.

When the water dispersion of tetragonal titanium oxide microparticles having tin and manganese incorporated in solid solution is blended with a monohydric alcohol, ammonia, and a tetraalkoxysilane (e.g., tetraethoxysilane), any suitable mixer, for example, a magnetic stirrer, mechanical mixer, or shaker may be used.

<u>Step (b)</u>

In step (b), the mixture of step (a) is rapidly heated for forming core/shell type tetragonal titanium oxide solid-solution particles each consisting of a nanosized core of tetragonal titanium oxide having tin and manganese incorporated in solid solution and a shell of silicon oxide around the core.

The means of rapidly heating the mixture of step (a) may be any of the existing heating means, for example, microwave heating, a microreactor of high heat exchange efficiency, and heat exchanger with an external heat source

of a high heat capacity. Inter alia, microwave heating is preferred because of uniform and rapid heating ability. The step of heating the mixture by applying microwave radiation may be either batchwise or continuous.

The rapid heating step is preferably at such a rate as to elevate the temperature from room temperature to immediately below the boiling point of the dispersing medium (typically lower by about 10 to 80°C than the boiling point) within a time of 10 minutes. If the heating step takes more than 10 minutes, undesirably the particles tend to agglomerate together.

Where the rapid heating step includes microwave heating, the electromagnetic wave may be selected from the frequency range of 300 MHz to 3 THz. For example, according to the Radio Law of Japan, the microwave frequency band that can be utilized is limited to 2.45 GHz, 5.8 GHz, 24 GHz and the like. Of these, the 2.45 GHz band is most often utilized on a commercial basis, and magnetron oscillators in this frequency band are available at an acceptable price. The microwave standard differs depending on the law, economical status and the like of a particular country or region. Technically the frequency need not be limited. As long as the rated power is in the range of 100 W to 24 kW, preferably 100 W to 20 kW, any commercial microwave heater may be used, for example, μReactor Ex (Shikoku Instrumentation Co., Inc.) or Advancer (Biotage Japan Ltd.).

Desired microwave heating may be completed within a time of 10 minutes by adjusting the power of the microwave heater and by adjusting the volume of reaction solution in the case of batchwise reaction or the flow rate of reaction solution in the case of continuous reaction.

The colloidal dispersion of core/shell type tetragonal titanium oxide microparticles having tin and manganese incorporated in solid solution, thus obtained, may be used in the manufacture of the organosol according to the invention.

The inorganic oxide colloidal water dispersion preferably has a solids concentration of 1 to 30%, more preferably 5 to 25%, and even more preferably 10 to 20% by weight of inorganic oxide particles. A concentration of less than 1 wt% may be detrimental to the industrial efficiency of organosol manufacture. If the concentration exceeds 30 wt%, undesirably the colloidal dispersion may lose fluidity and gel.

Also preferably the inorganic oxide colloidal dispersion is at pH 2 to 12, more preferably pH 3 to 11, even more preferably pH 4 to 10. If the pH is below 2 or above 12, undesirably the colloidal dispersion may lose fluidity and gel.

<u>Step (ii)</u>

Step (ii) is to add an alcohol which is not fully compatible with water and forms a two-phase system, to the inorganic oxide colloidal dispersion. Under ordinary conditions, the alcohol is not miscible with the inorganic oxide colloidal dispersion, and the inorganic oxide disperse phase does not migrate from the dispersion to the alcohol.

The alcohol to be added in step (ii) is at least one member selected from among straight, branched or cyclic monohydric alcohols of 4 to 8 carbon atoms which optionally have an aromatic moiety, and monohydric alcohols of 3 to 8 carbon atoms which are (partially) substituted with fluorine. Alcohols of up to 2 carbon atoms cannot be used herein because they are miscible with water at an arbitrary ratio under ordinary conditions whereas alcohols of more than 8 carbon atoms may be difficult to apply in step (ii) because of stronger paraffinic nature. The straight, branched or cyclic monohydric alcohols of 4 to 8 carbon atoms which optionally have an aromatic moiety are more preferred. The fluorine substitution may be either all substitution (perfluoroalkyl) or partial substitution. Since alcohols of long-chain alkyl of all substitution type are rather expensive, the number of substitution may be adjusted while taking into account the cost. If the hydroxyl number is 2 or more, alcohols tend to become more water-soluble and too viscous to handle.

Examples of the alcohol added in step (ii) include straight, branched or cyclic alcohols such as 1-butanol, 2-butanol, isobutyl alcohol, 1-pentanol, 2-pentanol, 3-pentanol, neopentyl alcohol, cyclopentanol, 1-hexanol, 2-hexanol, 3-hexanol, tert-hexyl alcohol, and cyclohexanol; aromatic alcohols such as phenol, o-cresol, m-cresol, p-cresol, and benzyl alcohol; and fluorine (partially) substituted straight or cyclic alcohols such as heptafluoropropan-1-ol, heptafluoropropan-2-ol, 3,3,4,4,4-pentafluorobutan-1-ol, nonafluorobutan-1-ol, and nonafluorobutan-2-ol.

The alcohol added in step (ii) should preferably have a solubility in water at 20°C of 1 (= 1 g alcohol/100 g water) to 30 (= 30 g alcohol/100 g water), more preferably 5 to 28, and even more preferably 10 to 26. An alcohol having a solubility of less than 1 may not exert the desired effect whereas an alcohol having a solubility of more than 30 may be fully compatibilized under the action of the alcohol miscible with water at an arbitrary ratio used in step (i).

The solubility of an alcohol in water may be measured by the standard technique. For example, the alcohol is fed to a burette at 20°C. With stirring, the alcohol is added dropwise to 100 g of pure water in a conical beaker. Dropwise addition is terminated at the time when the alcohol is no longer dissolved, i.e., a two-phase system is formed. The weight gain at this point represents the solubility of the alcohol in 100 g water.

The amount of the alcohol added in step (ii) is preferably 10 to 1,000% by weight, more preferably 15 to 500% by weight, and even more preferably 20 to 300% by weight, based on the water content in the inorganic oxide colloidal water dispersion from step (i). If the amount of the alcohol is less than 10 wt%, extraction efficiency may not be high. An amount of the alcohol in excess of 1,000 wt% may be undesirable because industrial and environmental problems arise from the massive use of organic solvent.

Step (iii)

Step (iii) is to add a silane compound having the general formula (I) and/or a (partial) hydrolytic condensate thereof to the inorganic oxide colloidal water dispersion.

$$R^1Si(OR^2)_3 \qquad (I)$$

Herein $R^1$ is a $C_1$-$C_{15}$ organic group which may have a (meth)acrylic moiety, and $R^2$ is $C_1$-$C_4$ alkyl.

Exemplary of the compound having formula (I) are silane compounds having a carbon group which may be substituted with (meth)acryloyloxy moiety, including methyltrimethoxysilane, methyltriethoxysilane, ethyltrimethoxysilane, ethyltriethoxysilane, propyltrimethoxysilane, propyltriethoxysilane, (meth)acryloyloxymethyltrimethoxysilane, (meth)acryloyloxymethyltriethoxysilane, (meth)acryloyloxyethyltrimethoxysilane, (meth)acryloyloxyethyltriethoxysilane, (meth)acryloyloxypropyltrimethoxysilane, (meth)acryloyloxypropyltriethoxysilane, (meth)acryloyloxyoctyltrimethoxysilane, and (meth)acryloyloxyoctyltriethoxysilane.
These compounds may be synthesized or commercially available. Commercial products include methyltrimethoxysilane "KBM-13", propyltrimethoxysilane "KBM-3033", acryloyloxypropyltrimethoxysilane "KBM-5103", and methacryloyloxypropyltrimethoxysilane "KBM-503", all available from Shin-Etsu Chemical Co., Ltd.

The surface-treated titanium oxide of the present invention is obtained by treating the inorganic oxide with 11 to 200% by weight, preferably 40 to 190% by weight, more preferably 60 to 180% by weight of the total amount of the silane compound of formula (I) and/or a (partial) hydrolytic condensate thereof and the surface treating component having the general formula (II) in step (viii) described later, based on the solid content of the inorganic oxide colloidal water dispersion of step (i). If the amount exceeds 200 wt%, the proportion of inorganic oxide (as effective component) in the organosol becomes relatively low, resulting in insufficient UV-shielding capability. If the amount is less than 11 wt%, it is difficult to ensure the dispersion stability of inorganic oxide microparticles in the organic solvent.

The amount of the silane compound and/or a (partial) hydrolytic condensate thereof added in step (iii) is preferably 10 to 199% by weight, more preferably 20 to 170% by weight, and even more preferably 30 to 150% by weight, based on the solid content of the inorganic oxide colloidal water dispersion of step (i). If the amount exceeds 199 wt%, the proportion of inorganic oxide (as effective component) in the organosol may become relatively low. If the amount is less than 10 wt%, it may be difficult to ensure the dispersion stability of inorganic oxide microparticles in the organic solvent.

In step (iii), the mode of addition of the silane compound and/or a (partial) hydrolytic condensate thereof may be dropwise addition in liquid, dropwise addition outside liquid, or addition in portions, with the dropwise addition in liquid being preferred.

In step (iii), the dispersion is preferably kept at a temperature of 0 to 45°C, more preferably 5 to 40°C, and even more preferably 10 to 35°C during the addition of the silane compound and/or a (partial) hydrolytic condensate thereof. At a temperature below 0°C, the inorganic oxide colloidal water dispersion may be altered via a state change by freezing. At a temperature above 45°C, the silane compound and/or a (partial) hydrolytic condensate thereof may unexpectedly undergo hydrolytic condensation reaction.

Step (iv)

Step (iv) is to irradiate microwave to the inorganic oxide colloidal water dispersion. For microwave irradiation, the electromagnetic wave may be selected from the frequency range of 300 MHz to 3 THz. For example, according to the Radio Law of Japan, the microwave frequency band that can be utilized is limited to 2.45 GHz, 5.8 GHz, 24 GHz and the like. Of these, the 2.45 GHz band is most often utilized on a commercial basis, and magnetron oscillators in this frequency band are available at an acceptable price. The microwave standard differs depending on the law, economical status and the like of a particular country or region. Technically the frequency need not be limited. As long as the rated power is in the range of 100 W to 24 kW, preferably 100 W to 20 kW, any commercial microwave heater may be used, for example, μReactor Ex (Shikoku Instrumentation Co., Inc.) or Advancer (Biotage Japan Ltd.).

Microwave irradiation brings about a temperature rise of the reaction solution. After microwave irradiation, the temperature is preferably in a range of 10 to 150°C, more preferably 60 to 100°C, and even more preferably 80 to 90°C. If the temperature is below 10°C, a longer time may be needed for reaction. If the temperature is above 150°C, the solvent of the inorganic oxide colloidal water dispersion will boil and the reaction system is difficult to handle. It is noted that the microwave irradiation may be replaced by a heating (or reactive) means capable of achieving an equivalent effect. Suitable replacement means include use of a microreactor, electromagnetic induction heating, and instantaneous contact with heating medium having a great heat capacity.

The time of microwave irradiation is preferably 60 to 3,600 seconds, more preferably 120 to 1,800 seconds, and even more preferably 180 to 900 seconds. If the time is shorter than 60 seconds, insufficient reaction may take place between the silane added in step (iii) and surface hydroxyl groups on the inorganic oxide microparticles. A time

of longer than 3,600 seconds may be undesirable in industrial efficiency. Microwave irradiation is performed while adjusting other reaction conditions (pH and concentration) such that the reaction time may fall in the above range.

In step (iv), microwave irradiation is accompanied by stirring. Stirring may be mechanical stirring, magnetic stirring or shaking. With stirring, the hydrophobic alcohol added in step (ii) and the inorganic oxide water dispersion become suspended, allowing microparticles surface treated with microwave to effectively migrate to the hydrophobic alcohol. Stirring is preferably turbulent stirring. The degree of stirring may be estimated by computing a Reynolds number of a system. Stirring preferably provides a Reynolds number of 3,000 to 1,000,000, more preferably 5,000 to 500,000, and even more preferably 10,000 to 200,000. A Reynolds number of less than 3,000 may become laminar flow stirring, interfering with efficient suspension. If the Reynolds number is more than 1,000,000, the amount of energy required for stirring may become unnecessarily large, which is undesirable in industrial efficiency. It is noted that Reynolds number (Re) is determined from equation (1):

$$Re = \rho \cdot n \cdot d^2/\mu \qquad \text{equation (1)}$$

wherein $\rho$ is a density (kg/$m^3$), n is a revolution (rps), d is an impeller length (m), and $\mu$ is a viscosity (Pa·s).

The titanium oxide dispersion (or organosol) that the invention deals with has a density $\rho$ of 900 to 2,000 kg/$m^3$, preferably 1,000 to 1,500 kg/$m^3$, and a viscosity $\mu$ of 0.001 to 0.05 Pa·s, preferably 0.002 to 0.01 Pa·s. For example, when a titanium oxide dispersion with a density $\rho$ of 1,000 kg/$m^3$ and a viscosity $\mu$ of 0.002 Pa·s is stirred by rotating a magnetic stirrer with a length of 5 cm at 700 rpm, Re is computed to be ~15,000. By a choice of n and d, Re may be adjusted to fall in the desired range.

When stirring is carried out in a baffle built-in reactor, an improvement in stirring efficiency is achievable.

Step (v)

Step (v) is to add an organic solvent. This step is preferably carried out at a temperature of 0 to 45°C, more preferably 5 to 40°C, and even more preferably 10 to 30°C. At a temperature below 0°C, the inorganic oxide colloidal water dispersion may be altered as the water component freezes. At a temperature above 45°C, volatile organic compounds (VOC) will be released to the ambient or working environment, which is unfavorable for safety and working environment or hygiene.

The organic solvent added in step (v) is typically selected from hydrocarbon compounds of 5 to 30 carbon atoms, alcohol, ether, ester, ketone, and amide compounds. Exemplary organic solvents are described below. Suitable hydrocarbon compounds of 5 to 30 carbon atoms include pentane, hexane, heptane, octane, nonane, decane, undecane, dodecane, tridecane, tetradecane, pentadecane, hexadecane, heptadecane, octadecane, nonadecane, eicosane, docosane, trieicosane, tetraeicosane, pentaeicosane, hexaeicosane, heptaeicosane, octaeicosane, nonaeicosane, triacontane, benzene, toluene, o-xylene, m-xylene, p-xylene, petroleum ether (or a mixture of the foregoing), kerosene, ligroin, and nujol. Suitable mono- to polyhydric alcohols include methanol, ethanol, 1-propanol, 2-propanol, cyclopentanol, ethylene glycol, propylene glycol, β-thiadiglycol, butylene glycol, and glycerol. Suitable ethers include diethyl ether, dipropyl ether, cyclopentyl methyl ether, ethylene glycol dimethyl ether, diethylene glycol dimethyl ether, triethylene glycol dimethyl ether, ethylene glycol monomethyl ether, ethylene glycol monoethyl ether, ethylene glycol monopropyl ether, ethylene glycol monobutyl ether, propylene glycol monomethyl ether (PGM), propylene glycol monoethyl ether, propylene glycol monopropyl ether, propylene glycol monobutyl ether, butylene glycol monomethyl ether, butylene glycol monoethyl ether, butylene glycol monopropyl ether, and butylene glycol monobutyl ether. Suitable esters include methyl formate, ethyl formate, propyl formate, butyl formate, methyl acetate, ethyl acetate, propyl acetate, butyl acetate, methyl propionate, ethyl propionate, propyl propionate, butyl propionate, methyl butyrate, ethyl butyrate, propyl butyrate, butyl butyrate, methyl benzoate, ethyl benzoate, propyl benzoate, butyl benzoate, dimethyl oxalate, diethyl oxalate, dipropyl oxalate, dibutyl oxalate, dimethyl malonate, diethyl malonate, dipropyl malonate, dibutyl malonate, ethylene glycol diformate, ethylene glycol diacetate, ethylene glycol dipropionate, ethylene glycol dibutyrate, propylene glycol diacetate, propylene glycol dipropionate, propylene glycol dibutyrate, ethylene glycol methyl ether acetate, propylene glycol methyl ether acetate (PGMEA), butylene glycol monomethyl ether acetate, ethylene glycol ethyl ether acetate, propylene glycol ethyl ether acetate, and butylene glycol monoethyl ether acetate. Suitable ketones include acetone, diacetone alcohol, diethyl ketone, methyl ethyl ketone, methyl isobutyl ketone, methyl n-butyl ketone, dibutyl ketone, cyclopentanone, cyclohexanone, cycloheptanone, and cyclooctanone. Suitable amides include dimethylformamide, dimethylacetamide, tetraacetylethylenediamide, tetraacetylhexamethylenetetramide, and N,N-dimethylhexamethylenediamine diacetate.

The amount of the organic solvent added in step (v) is preferably 50 to 1,000% by weight, more preferably 100 to 500% by weight, and even more preferably 120 to 300% by weight, based on the water component in the inorganic oxide colloidal water dispersion in step (i). If the amount of the organic solvent is less than 50 wt%, water may not be

fully removed in the subsequent step (vi). An amount of the organic solvent in excess of 1,000 wt% may be undesirable because industrial and environmental problems arise from the massive use of organic solvent.

Step (v) of adding the organic solvent ensures that surface treated inorganic oxide microparticles are uniformly dispersed in the organic solvent phase. As a result of addition of the solvent in step (v), the system may form either a uniform phase or two phases. When two phases are formed, the organic layer may be separated by decantation.

Step (vi)

Step (vi) is to remove water from the dispersion. Water removal is preferably carried out by azeotropic distillation and/or ultrafiltration.

In step (vi), azeotropic distillation intends to remove water originating from the inorganic oxide colloidal water dispersion. The organic solvent in azeotropic mixture with water may originate from step (ii) or (v). Azeotropic distillation is a phenomenon that a mixture of water and the organic solvent in a proportion as estimated from the liquid/gas equilibrium curve is distilled out when the total of vapor pressures of water and the organic solvent is in balance with the system pressure.

Step (vi) is preferably carried out under a pressure of 200 to 760 mmHg, more preferably 300 to 760 mmHg, and even more preferably 400 to 760 mmHg. Under a pressure of less than 200 mmHg, the mixture may bump and become difficult to control. A pressure beyond 760 mmHg may interfere with water evaporation.

Step (vi) is preferably carried out at a temperature of 50 to 250°C, more preferably 60 to 200°C, and even more preferably 80 to 150°C. At a temperature below 50°C, distillation takes a time. A temperature above 250°C may alter the organosol. The pressure is adjusted such that step (vi) may be carried out in the temperature range.

Heating required in step (vi) may be any of various heating modes such as heat exchange with heating medium, induction heating, and microwave heating.

In step (vi), ultrafiltration may be carried out instead of or in combination with azeotropic distillation. Ultrafiltration may be carried out by passing through pores in the surface of an inorganic and/or organic substrate. The material of the substrate is not particularly limited as long as it is porous. Preferably the substrate has pores with an average diameter of 5 to 50 nm, more preferably 5 to 30 nm. A pore diameter of less than 5 nm may lead to a slow filtration rate whereas a pore diameter in excess of 50 nm may allow the dispersed phase of the sol to flow out to the filtrate side. A suitable inorganic ceramic filter used for ultrafiltration is commercially available, for example, under the trade name Filterkeramik from ANDRITZ KMPT GmbH.

Ultrafiltration may be carried out while adding an organic solvent, which is selected in consideration of a difference in the permeability constant of filter membrane depending on the type of solvent.

Removal of water can be confirmed by measuring the water concentration at the end of this step. One typical confirmation method is amperometric titration using Karl Fischer's reagent. Suitable titrators which can be used to this end are, for example, AQV-2100 from Hiranuma Sangyo Corp. and KF-200 from Mitsubishi Chemical Analytech Co., Ltd.

At the end of step (vi), the water concentration is preferably not more than 1% by weight, more preferably not more than 0.5% by weight, and even more preferably not more than 0.1% by weight. A water concentration of more than 1 wt% may cause white haze to a mixture of the organosol and a resin. Although the lower limit of the water concentration at the end of step (vi) is not critical, the lower limit concentration is preferably about 0.1% by weight. Since the organic solvent added in step (v) sometimes contains a certain proportion of water, an attempt to reduce the water concentration below 0.1 wt% via only step (vi) is sometimes unfavorable in view of energy efficiency. If the water concentration does not reach a desired or effective level via options described above, further removal of water such as by the subsequent step (vii) may be carried out.

Step (vii)

Step (vii) is to remove a trace of water in the organosol which has not been removed in the previous step (vi). In step (vii), water is removed to a water concentration of 1,000 ppm or less, more preferably 500 ppm or less, even more preferably 100 ppm or less, and most preferably 10 ppm or less.

In the practice of step (vii), physical adsorption using a zeolite having pores with a diameter of 3 to 10 angstroms (Å) and/or chemical reaction using ortho-organic acid ester or gem-dialkoxyalkane having the general formula (III) may be used.

$$(R^5O)(R^6O)CR^7R^8 \qquad \text{(III)}$$

Herein $R^5$ and $R^6$ are each independently a $C_1$-$C_{10}$ hydrocarbon group and may bond together to form a ring, $R^7$ and $R^8$ are each independently a $C_1$-$C_{10}$ hydrocarbon group and may bond together to form a ring.

Exemplary materials which can be used as the zeolite include those of the following chemical formulae:

$K_4Na_4[Al_8Si_8O_{32}]$, $Na[AlSi_2O_6]$, $Na_2[Al_2Si_7O_{18}]$, $(K,Ba,Sr)_2Sr_2Ca_2(Ca,Na)_4[Al_{18}Si_{18}O_{72}]$, $Li[AlSi_2O_6]O$, $Ca_8Na_3[Al_{19}Si_{77}O_{192}]$, $(Sr,Ba)_2[Al_4Si_{12}O_{32}]$, $(Sr,Ba)_2[Al_4Si_{12}O_{32}]$, $(Ca_{0.5},Na,K)_4[Al_4Si_8O_{24}]$, $CaMn[Be_2Si_5O_{13}(OH)_2]$, $(Na,K,Ca_{0.5},Sr_{0.5},Ba_{0.5},Mg_{0.5})_6[Al_6Si_{30}O_{72}]$, $Ca[Al_2Si_3O_{10}]$, $(Ca_{0.5},Na,K)_{4-5}[Al_{4-5}Si_{20-19}O_{48}]$, $Ba[Al_2Si_3O_{10}]$, $(Ca,Na_2)[Al_2Si_4O_{12}]$, $K_2(Na,Ca_{0.5})_8[Al_{10}Si_{26}O_{72}]$, $(Na,Ca_{0.5},Mg_{0.5},K)_z[Al_2Si_{12-z}O_{24}]$, $(K,Na,Mg_{0.5},Ca_{0.5})_6[Al_6Si_{30}O_{72}]$, $NaCa_{2.5}[Al_6Si_{10}O_{32}]$, $Na_4[Zn_2Si_7O_{18}]$, $Ca[Al_2Si_2O_8]$, $(Na_2,Ca,K_2)_4[Al_8Si_{16}O_{48}]$, $Na_5[Al_5Si_{11}O_{32}]$, $(Na,Ca)_{6-8}[(Al,Si)_{20}O_{40}]$, $Ca[Al_2Si_6O_{16}]$, $Na_3Mg_3Ca_5[Al_{19}Si_{117}O_{272}]$, $(Ba_{0.5},Ca_{0.5},K,Na)_5[Al_5Si_{11}O_{32}]$, $(Ca_{0.5},Sr_{0.5},Ba_{0.5},Mg_{0.5},Na,K)_9[Al_9Si_{27}O_{72}]$, $Li_2Ca_3[Be_3Si_3O_{12}]F_2$, $K_6[Al_4Si_6O_{20}]B(OH)_4Cl$, $Ca_4[Al_8Si_{16}O_{48}]$, $K_4Na_{12}[Be_8Si_{28}O_{72}]$, $(Pb_7Ca_2)[Al_{12}Si_{36}(O,OH)_{100}]$, $(Mg_{2.5}K_2Ca_{1.5})[Al_{10}Si_{26}O_{72}]$, $K_5Ca_2[Al_9Si_{23}O_{64}]$, $Na_{16}Ca_{16}[Al_{48}Si_{72}O_{240}]$, $K_9[Al_9Si_{23}O_{64}]$, $(Na_2,Ca,K_2)_4[Al_8Si_{40}O_{96}]$, $Na_3Ca_4[Al_{11}Si_{85}O_{192}]$, $Na_2[Al_2Si_3O_{10}]$, $CaKMg[Al_5Si_{13}O_{36}]$, $(Ca_{5.5}Li_{3.6}K_{1.2}Na_{0.2})Li_8[Be_{24}P_{24}O_{96}]$, $Ca_2[Al_4Si_4O_{15}(OH)_2]$, $(K,Ca_{0.5},Na,Ba_{0.5})_{10}[Al_{10}Si_{32}O_{84}]$, $K_9Na(Ca,Sr)[Al_{12}Si_{24}O_{72}]$, $(K,Na,Ca_{0.5},Ba_{0.5})_z[Al_zSi_{16-z}O_{32}]$, $(Cs,Na)[AlSi_2O_6]$, $Ca_2[Be(OH)_2Al_2Si_4O_{13}]$, $Ca[Al_2Si_3O_{10}]$, $Ca[Al_2Si_7O_{18}]$, $(Ca_{0.5},Na,K)_9[Al_9Si_{27}O_{72}]$, $NaCa[Al_3Si_{17}O_{40}]$, $Ca_2Na[Al_5Si_5O_{20}]$, $Ca[Al_2Si_6O_{16}]$, $Ca_4(K_2,Ca,Sr,Ba)_3Cu_3(OH)_8[Al_{12}Si_{12}O_{48}]$, $Ca[Al_2Si_4O_{12}]$, $Ca[Be_3(PO_4)_2(OH)_2]$, $K_zCa_{(1.5-0.5z)}[Al_3Si_3O_{12}]$, and $Ca[Al_2Si_6O_{16}]$ wherein z is a number of 0 to 1. Those materials of the above chemical formulae, preferably having pores with a diameter of 3 to 10 Å may be used. The pore diameter is preferably 3 to 10 Å, more preferably 4 to 8 Å, and even more preferably 4 to 6 Å. If the pore diameter is less than 3 Å, sufficient adsorption of water may be difficult. If the pore diameter exceeds 10 Å, adsorption of water may take a time.

Suitable dewatering zeolites are commercially available under the trade name of Molecular Sieve 3A, Molecular Sieve 4A, Molecular Sieve 5A, Molecular Sieve 6A, Molecular Sieve 7A, Molecular Sieve 8A, Molecular Sieve 9A, Molecular Sieve 10A, Molecular Sieve 3X, Molecular Sieve 4X, Molecular Sieve 5X, Molecular Sieve 6X, Molecular Sieve 7X, Molecular Sieve 8X, Molecular Sieve 9X, and Molecular Sieve 10X, which may be used alone or in combination. For example, LTA framework zeolite having a pore diameter of about 4 Å is commercially available as Catalog No. 25958-08 from Kanto Kagaku Co., Ltd.

Zeolite is preferably used in an amount of 1 to 20% by weight, more preferably 2 to 15% by weight, and even more preferably 5 to 10% by weight, based on the organosol from step (vi). Less than 1 wt% of zeolite may be too small to exert the dewatering effect whereas more than 20 wt% is unnecessary in practice because the dewatering effect is no longer improved.

Alternatively, step (vii) is carried out via chemical reaction using ortho-organic acid ester or gem-dialkoxyalkane having the general formula (III):

$$(R^5O)(R^6O)CR^7R^8 \qquad (III)$$

wherein $R^5$ and $R^6$ are each independently a $C_1$-$C_{10}$ hydrocarbon group and may bond together to form a ring, $R^7$ and $R^8$ are each independently a $C_1$-$C_{10}$ hydrocarbon group and may bond together to form a ring.

Both the ortho-organic acid ester and gem-dialkoxyalkane have an acetal skeleton in the molecule. The ortho-organic acid ester is an acetal form of organic acid ester, and the gem-dialkoxyalkane is an acetal form of ketone. The acetal compound can be used for dewatering purpose since the acetal compound has the nature that it is decomposed into alcohol and carbonyl compound upon reaction with water. Since water is consumed via the reaction, the same effect as the addition of organic solvent is obtained.

Examples of the ortho-organic acid ester include methyl orthoformate, ethyl orthoformate, propyl orthoformate, butyl orthoformate, methyl orthoacetate, ethyl orthoacetate, propyl orthoacetate, butyl orthoacetate, methyl orthopropionate, ethyl orthopropionate, propyl orthopropionate, butyl orthopropionate, methyl orthobutyrate, ethyl orthobutyrate, propyl orthobutyrate, and butyl orthobutyrate.

Examples of the gem-dialkoxyalkane include acetone dimethyl acetal, acetone diethyl acetal, acetone dipropyl acetal, acetone dibutyl acetal, acetone ethylene glycol acetal, acetone propylene glycol acetal, methyl ethyl ketone dimethyl acetal, methyl ethyl ketone diethyl acetal, methyl ethyl ketone dipropyl acetal, methyl ethyl ketone dibutyl acetal, methyl ethyl ketone ethylene glycol acetal, methyl ethyl ketone propylene glycol acetal, methyl isobutyl ketone dimethyl acetal, methyl isobutyl ketone diethyl acetal, methyl isobutyl ketone dipropyl acetal, methyl isobutyl ketone dibutyl acetal, methyl isobutyl ketone ethylene glycol acetal, methyl isobutyl ketone propylene glycol acetal, cyclopentanone dimethyl acetal, cyclopentanone diethyl acetal, cyclopentanone dipropyl acetal, cyclopentanone dibutyl acetal, cyclopentanone ethylene glycol acetal, cyclopentanone propylene glycol acetal, cyclohexanone dimethyl acetal, cyclohexanone diethyl acetal, cyclohexanone dipropyl acetal, cyclohexanone dibutyl acetal, cyclohexanone ethylene glycol acetal, and cyclohexanone propylene glycol acetal.

With respect to the acetal skeleton compound, if a certain type is preferred among the molecules formed by reaction with water, the compound may be chosen from such anticipation. For example, where water is removed from the organosol and replaced by cyclohexanone and butanol, the purpose may be attained using cyclohexanone dibutyl acetal.

The acetal skeleton compound is preferably used in an amount of 0.5 to 20% by weight, more preferably 2 to

15% by weight, and even more preferably 5 to 10% by weight, based on the organosol from step (vi). Less than 0.5 wt% of the compound may be too small to exert the dewatering effect. More than 20 wt% is unnecessary in practice because in most cases, the dewatering effect is no longer improved, and when the organosol containing the acetal skeleton compound is mixed with a resin or the like, the compound can exert unexpected effects like etching.

Step (viii)

Step (viii) is surface treatment with a silane compound having the general formula (II):

$$(R^3R^4{}_2Si)_2NH \qquad (II)$$

wherein $R^3$ is a $C_1$-$C_{15}$ organic group which may have a (meth)acrylic moiety, and $R^4$ is a $C_1$-$C_6$ alkyl group.

Exemplary of the compound having formula (II) are hexamethyldisilazane, bis[(acryloyloxymethyl)dimethylsilyl]azane, bis[(acryloyloxypropyl)dimethylsilyl]azane, hexaethyldisilazane, and hexapropyldisilazane.

The amount of the silane compound of formula (II) is preferably 1 to 190% by weight, more preferably 20 to 170% by weight, and even more preferably 30 to 150% by weight, based on the solid content of the inorganic oxide colloidal water dispersion of step (i). If the amount is more than 190 wt%, the proportion of inorganic oxide (as effective component) in the organosol may become relatively low. If the amount is less than 1 wt%, it may be difficult to ensure the dispersion stability of inorganic oxide microparticles in the organic solvent.

Step (viii) may be carried out while the ammonia gas by-product formed by the reaction is removed using an ion exchange resin. The ion exchange resin which can be used to this end is typically a cation exchange resin, examples of which include Amberlite IR120B, Amberlite 200CT, Amberlite IR124, Amberlite FPC3500, and Amberlite IRC76, available from Organo Corp., Diaion SK104 and Diaion PK208 available from Mitsubishi Chemical Corp. Instead, removal of ammonia gas may also be carried out by inert gas blowing utilizing the law of partial pressures.

The progress of reaction in step (viii) may be monitored by $^{29}Si$ nuclear magnetic resonance (NMR) spectroscopy. The NMR spectroscopy may be applied to either solid or liquid. In the case of solid NMR spectroscopy, since a measurement sample must be evaporated to dryness as pre-treatment, the results do not necessarily reflect the bond states of silicon in the sample. Accordingly it is preferred to monitor by the NMR spectroscopy in liquid state. In the liquid $^{29}Si$ NMR spectroscopy, analysis is preferably made using a test tube and probe both made of silicon-free material. Exemplary of the silicon-free material which can be used in the NMR spectroscopy is polytetrafluoroethylene, typically Teflon®. In the liquid $^{29}Si$ NMR spectroscopy, an appropriate relaxation agent may be used for reducing the measurement time. As the relaxation agent, well-known reagents may be used (see, for example, Organometallics, Volume 27, Issue 4, pp500-502 (2008), and the references therein). In particular, preference is given to tris(acetylacetonato)iron(III) complex since it is fully soluble in water and organic solvents and does not cause agglomeration of titanium oxide. For example, when several droplets of a solution of tris(acetylacetonato)iron(III) complex in hexadeuterioacetone (acetone-$d_6$) in a concentration of about 1 mol/$dm^3$ are used as the relaxation agent, desirably both the relaxation effect and deuterium lock effect are available. The surface state of titanium oxide may also be examined by similar NMR spectroscopy on a composition comprising the same.

On analysis by the $^{29}Si$ NMR spectroscopy before and after step (viii), a change of the condensation state of trifunctional polysiloxane (T unit) can be examined. A change of the condensation state is determined by examining the proportion of (T0) to (T3), shown below. The condensation degree is in the order of T3 > T2 > T1 > T0, and in most cases, the detection magnetic field becomes on higher magnetic field side in the order of T3 > T2 > T1 > T0. A proportion of condensation state may be estimated from signal intensity. At this point, since $^{29}Si$ nucleus has a negative gyromagnetic ratio ($\gamma_B$), the nuclear Overhauser effect (NOE) becomes inversed, suppressing the nuclear magnetic relaxation prevailing around resonance nucleus. Therefore, measurement conditions are preferably selected such that the negative NOE may not become significant. In the case of pulse Fourier-transform NMR, this problem can be solved using an adequate pulse sequence. For example, an off-resonance pulse sequence is preferably used. A proportion of T3 in T units is preferably 50 to 90 mol%, more preferably 55 to 85 mol%. If a proportion of T3 units is less than 50 mol%, there is a tendency that silanol groups are present on surfaces of microparticles, which are thus likely to agglomerate together due to hydrophilic interaction. If a proportion of T3 units exceeds 90 mol%, there may be little contribution to dispersion stability due to interaction with alkoxysilyl groups in component (B).

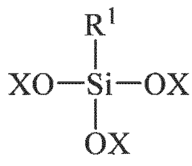
(T0)

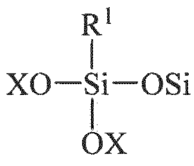
(T1)

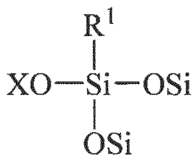
(T2)

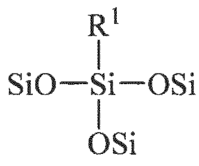
(T3)

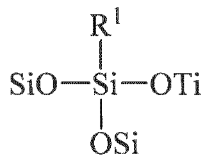
(T3')

Herein $R^1$ is a $C_1$-$C_{15}$ organic group which may have a (meth)acrylic moiety, and X is hydrogen or $C_1$-$C_4$ alkyl.

The notation of resonance magnetic field may be given by expressing in parts per million (ppm) a difference from the resonance magnetic field based on the resonance of $^{29}$Si nucleus of tetramethylsilane. According to this notation rule, most often T0 is detectable in the range of -40 to -46 ppm, preferably -42 to -45 ppm, T1 in the range of -46 to -54 ppm, preferably -48 to -52 ppm, T2 in the range of -54 to -60 ppm, preferably -56 to -58 ppm, and T3 in the range of -60 to -70 ppm, preferably -62 to -68 ppm. It is noted that T3', which is a variant of T3 wherein one substituent is changed from a siloxy group to a titanoxy group, is often detectable in the range of -45 to -55 ppm, preferably -48 to -53 ppm. Preferably T1 is discriminated from T3' by examining the spin coupling state of $^1$H nucleus and $^{29}$Si nucleus. The negative value in the notation indicates that the resonance magnetic field has a difference on a higher magnetic field side than the reference line. The width of the reference line depends on the strength of the magnetic field of the NMR instrument used in measurement. The aforementioned preferred range of resonance line is the value obtained from an example where a magnetic field of 11.75 Tesla (T) is applied. The magnetic field which can be used in the NMR instrument is in a range of 5 to 20 T, preferably 8 to 15 T, and more preferably 10 to 13 T. If the magnetic field is less than 5 T, measurement may be difficult because the S/N ratio becomes lower. If the magnetic field exceeds 20 T, measurement may be difficult because the resonance instrument becomes large sized. As a matter of course, the skilled artisan will analogize the strength of magnetic field, the width of resonance line, and the intensity of signals from the information set forth above.

Preferably, the signal intensity of T3 obtained from the $^{29}$Si NMR spectroscopy measured under the conditions set forth above, satisfies the value expressed by the following equation (2).

$$0.9 \geq \int(T3+T3')/\Sigma T = \int(T3+T3')/(\int T3+\int T3'+\int T2+\int T1+\int T0) \geq 0.5 \quad \text{equation (2)}$$

Herein $\Sigma T$ is an integrated value of $^{29}$Si NMR signals assigned to all trifunctional polysiloxane (T units), and $\int(T3+T3')$ is an integrated value of $^{29}$Si NMR signals assigned to (T3). When $\int(T3+T3')/\Sigma T$ is at least 0.5, at least 50% of the silane compound having formula (I) has been condensed to such an extent to leave no room for further condensation, and accordingly, microparticles on their surface have a high hydrophobicity and are highly compatible with acrylic resins. A $\int(T3+T3')/\Sigma T$ value of less than 0.5 indicates that silanol which is still condensable is present on surfaces of microparticles, leading to the problem that when microparticles are mixed with an acrylic resin to form a coating composition, the remaining silanol may allow agglomeration of microparticles to eventually cause whitening. A $\int(T3+T3')/\Sigma T$ value of more than 0.9 indicates insufficient interaction with silanol (Si-OH) groups in component (B) and/or coating composition. As used herein, the integrated value refers to a quadrature problem when signal intensity is plotted relative to parts per million (ppm). For the quadrature, a threshold value is preferably set by an S/N ratio at a specific standard. The S/N ratio is at least 5, preferably at least 10, and more preferably at least 20. A S/N ratio of less than 5 may be unfavorable because the base line becomes thick and the accuracy of integration is worsened. The integrated value may be determined by the Simpson method using a computer, or by cutting a printed medium having a uniform plane density representative of spectrum to the spectral profile, and measuring its weight.

Component (A) is used in such amounts that the solid content (or surface-treated titanium oxide microparticle content) of component (A) is 1 to 50% by weight, preferably 2 to 30% by weight, and more preferably 5 to 20% by weight of the solid content of the vinyl copolymer as component (B). If the amount of component (A) is less than 1 wt% (in solid content), the desired effects may not be obtained. If the amount exceeds 50 wt%, flexibility may be compromised. Blending of component (A) with component (B) may be achieved by mixing them in a standard manner. The mixing technique may be any of mechanical mixing, magnetic stirring, vibratory mixing, shearing mixing, and static mixer. The mixing procedure is preferably carried out while gradually adding divided portions of component (B) to component (A), but not limited thereto as long as dispersion stability is ensured. Besides simple mixing, blending of component (A) with component (B) may also be achieved by copolymerization via chemical bonds. When vinyl-based reactive groups, typically (meth)acrylic groups are positioned on the surface of component (A), they can be copolymerized with monomeric

units of component (B), whereby an equivalent effect to blending is obtainable. The copolymerization approach is advantageously taken in case dispersion stability of component (A) in component (B) or alternation with time in coating composition or film is a problem. The copolymerization mode may be any of radical polymerization, anionic polymerization, cationic polymerization and coordination polymerization, with the radical polymerization being preferred. For radical polymerization, suitable conditions include a radical polymerization initiator selected from peroxides (e.g., dicumyl peroxide and benzoyl peroxide) and azo compounds (e.g., azobisisobutyronitrile), a temperature of 50 to 150°C, especially 70 to 120°C, and a time of 1 to 10 hours, especially 3 to 8 hours. If the time of addition of component (A) is properly adjusted during copolymerization, the polymer may be obtained as a block copolymer and/or random copolymer. The dispersed state may be controlled in this way.

Component B

Component (B) is a vinyl copolymer having alkoxysilyl and organic UV-absorbing groups attached on side chains, preferably a vinyl copolymer having alkoxysilyl groups attached to the vinyl copolymer backbone via Si-C bonds and further preferably organic UV-absorbing groups attached to the vinyl copolymer backbone as well. The vinyl copolymer is obtainable from copolymerization of (b-1) a vinyl monomer having an alkoxysilyl group attached thereto via a Si-C bond, (b-2) a vinyl monomer having an organic UV-absorbing group, and (b-3) another monomer copolymerizable with the foregoing vinyl monomers. That is to say, the vinyl copolymer consists of polymerized residues of the mentioned monomers.

The vinyl monomer (b-1) having an alkoxysilyl group attached thereto via a Si-C bond may be any monomer having one vinyl polymerizable functional group and at least one alkoxysilyl group per molecule.

Suitable vinyl polymerizable functional groups are $C_2$-$C_{12}$ organic groups including vinyl, vinyloxy, (meth)acryloxy, and ($\alpha$-methyl)styryl. Exemplary groups include vinyl, 5-hexenyl, 9-decenyl, vinyloxymethyl, 3-vinyloxypropyl, (meth)acryloxymethyl, 3-(meth)acryloxypropyl, 11-(meth)acryloxyundecyl, vinylphenyl (or styryl), isopropenylphenyl (or $\alpha$-methylstyryl), and vinylphenylmethyl (or vinylbenzyl). Of these, (meth)acryloxypropyl is preferred for reactivity and availability.

Examples of the alkoxy moiety of alkoxysilyl group include methoxy, ethoxy, propoxy, isopropoxy, butoxy, isobutoxy, sec-butoxy, and tert-butoxy. Methoxy and ethoxy are preferred for easy control of hydrolysis and availability.

Suitable substituents other than the foregoing include alkyl groups such as methyl, ethyl, propyl, hexyl, and decyl and phenyl groups. Methyl is preferred for availability.

Examples of the vinyl monomer (b-1) having an alkoxysilyl group attached thereto via a Si-C bond include methacryloxymethyltrimethoxysilane, methacryloxypropyltrimethoxysilane, methacryloxyundecyltrimethoxysilane, methacryloxypropylmethyldimethoxysilane, methacryloxypropyldimethylmethoxysilane, methacryloxypropyltriethoxysilane, acryloxypropyltrimethoxysilane, acryloxypropylmethyldimethoxysilane, acryloxypropyldimethylmethoxysilane, acryloxypropyltriethoxysilane, acryloxymethyltrimethoxysilane, acryloxyundecyltrimethoxysilane, vinyltrimethoxysilane, vinyltriethoxysilane, vinylmethyldimethoxysilane, allyltrimethoxysilane, styryltrimethoxysilane, styrylmethyldimethoxysilane, styryltriethoxysilane. Of these, methacryloxypropyltrimethoxysilane, methacryloxypropylmethyldimethoxysilane, methacryloxypropyldimethylmethoxysilane, acryloxypropyltrimethoxysilane, and acryloxypropylmethyldimethoxysilane are preferred for availability, ease of handling, crosslinking density and reactivity.

An appropriate amount of the vinyl monomer (b-1) having an alkoxysilyl group attached thereto via a Si-C bond is 1 to 50% by weight, preferably 3 to 40% by weight based on the copolymer composition. Less than 1 wt% of monomer (b-1) may lead to insufficient formation of a siloxane network by crosslinking with the surface-treated titanium oxide microparticles in dispersion (A) and between vinyl copolymer molecules, failing to form a film having a low coefficient of linear expansion or to improve heat resistance and durability. More than 50 wt% of monomer (b-1) may lead to a high crosslinking density, resulting in a film which is hard and less adhesive, and allow more alkoxysilyl groups to be left unreacted, leading to a likelihood of post-crosslinking with the lapse of time and cracking.

The vinyl monomer (b-2) is (meth)acrylic monomer having an organic UV-absorbing group in the molecule, which may be benzotriazole group in compounds having the general formula (2) or benzophenone group in compounds having the general formula (3).

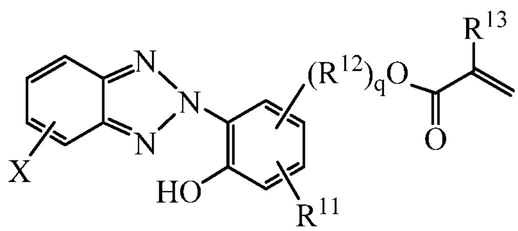

(2)

Herein X is hydrogen or chlorine, $R^{11}$ is hydrogen, methyl or $C_4$-$C_8$ tertiary alkyl group, $R^{12}$ is a straight or branched $C_2$-$C_{10}$ alkylene group, $R^{13}$ is hydrogen or methyl, and q is 0 or 1.

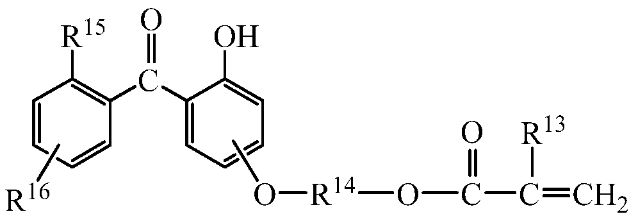

(3)

Herein $R^{13}$ is as defined above, $R^{14}$ is a substituted or unsubstituted, straight or branched $C_2$-$C_{10}$ alkylene group, $R^{15}$ is hydrogen or hydroxyl, and $R^{16}$ is hydrogen, hydroxyl or $C_1$-$C_6$ alkoxy group.

In formula (2), examples of the $C_4$-$C_8$ tertiary alkyl group represented by $R^{11}$ include tert-butyl, tert-pentyl, tert-hexyl, tert-heptyl, tert-octyl, and di-tert-octyl. Examples of the straight or branched $C_2$-$C_{10}$ alkylene group represented by $R^{12}$ include ethylene, trimethylene, propylene, tetramethylene, 1,1-dimethyltetramethylene, butylene, octylene, and decylene.

In formula (3), examples of the straight or branched $C_2$-$C_{10}$ alkylene group represented by $R^{14}$ are as exemplified for $R^{12}$ and substituted forms in which some hydrogen atoms are substituted by halogen atoms. Examples of the alkoxy group represented by $R^{16}$ include methoxy, ethoxy, propoxy, and butoxy.

Examples of suitable benzotriazole derivatives of formula (2) include, but are not limited to, 2-(2'-hydroxy-5'-(meth)acryloxyphenyl)-2H-benzotriazole, 2-(2'-hydroxy-3'-tert-butyl-5'-(meth)acryloxymethylphenyl)-2H-benzotriazole, 2-[2'-hydroxy-5'-(2-(meth)acryloxyethyl)phenyl]-2H-benzotriazole, 2-[2'-hydroxy-3'-tert-butyl-5'-(2-(meth)acryloxyethyl)-phenyl]-5-chloro-2H-benzotriazole, and 2-[2'-hydroxy-3'-methyl-5'-(8-(meth)acryloxyoctyl)phenyl]-2H-benzotriazole.

Examples of suitable benzophenone derivatives of formula (3) include, but are not limited to, 2-hydroxy-4-(2-(meth)acryloxyethoxy)benzophenone, 2-hydroxy-4-(4-(meth)acryloxybutoxy)benzophenone, 2,2'-dihydroxy-4-(2-(meth)acryloxyethoxy)benzophenone, 2,4-dihydroxy-4'-(2-(meth)acryloxyethoxy)benzophenone, 2,2',4-trihydroxy-4'-(2-(meth)acryloxyethoxy)benzophenone, 2-hydroxy-4-(3-(meth)acryloxy-2-hydroxypropoxy)benzophenone, and 2-hydroxy-4-(3-(meth)acryloxy-1-hydroxypropoxy)benzophenone.

The preferred UV-absorbing vinyl monomers are benzotriazole derivatives of formula (2), with 2-[2'-hydroxy-5'-(2-(meth)acryloxyethyl)phenyl]-2H-benzotriazole being most preferred. The UV-absorbing vinyl monomers may be used alone or in admixture of two or more.

An appropriate amount of the vinyl monomer (b-2) having an organic UV-absorbing group is 5 to 40% by weight, preferably 5 to 30% by weight, and more preferably 8 to 25% by weight based on the copolymer composition. Less than 5 wt% of monomer (b-2) may fail to provide weatherability. More than 40 wt% of monomer (b-2) may result in a film which is less adhesive or suffers a defective outer appearance such as whitening.

The other monomer (b-3) which is copolymerizable with monomers (b-1) and (b-2) is not particularly limited as long as it is so copolymerizable. Suitable monomers include (meth)acrylic monomers having a cyclic hindered amine structure, (meth)acrylates, (meth)acrylonitrile, (meth)acrylamides, alkyl vinyl ethers, alkyl vinyl esters, styrene, and derivatives thereof. Where it is intended to copolymerize component (A) with component (B) rather than simply adding component (A), copolymerization reaction may be carried out, provided that component (A) be monomer (b-3).

Examples of the (meth)acrylic monomer having a cyclic hindered amine structure include 2,2,6,6-tetramethyl-4-piperidinyl methacrylate and 1,2,2,6,6-pentamethyl-4-piperidinyl methacrylate.
These (photostabilizer) monomers may be used in admixture of two or more.

Examples of (meth)acrylates and derivatives include
(meth)acrylic acid esters of monohydric alcohols such as methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, t-butyl (meth)acrylate, n-pentyl (meth)acrylate, isopentyl (meth)acrylate, n-hexyl (meth)acrylate, isohexyl (meth)acrylate, n-heptyl (meth)acrylate, isoheptyl (meth)acrylate, 2-ethylhexyl (meth)acrylate, n-octyl (meth)acrylate, isooctyl (meth)acrylate, n-nonyl (meth)acrylate, isononyl (meth)acrylate, n-decyl (meth)acrylate, isodecyl (meth)acrylate, n-undecyl (meth)acrylate, n-dodecyl (meth)acrylate, lauryl (meth)acrylate, palmityl (meth)acrylate, stearyl (meth)acrylate, cyclohexyl (meth)acrylate, 4-methylcyclohexyl (meth)acrylate, 4-t-butylcyclohexyl (meth)acrylate, isobornyl (meth)acrylate, dicyclopentanyl (meth)acrylate, dicyclopentenyloxyethyl (meth)acrylate, and benzyl (meth)acrylate;
(meth)acrylic acid esters of alkoxy(poly)alkylene glycols such as 2-methoxyethyl (meth)acrylate, 2-methoxypropyl (meth)acrylate, 3-methoxypropyl (meth)acrylate, 2-methoxybutyl (meth)acrylate, 3-methoxybutyl (meth)acrylate, 4-methoxybutyl (meth)acrylate, methoxypolyethylene glycol (meth)acrylate (ethylene glycol units, 2 to 20), and methoxypolypropylene glycol (meth)acrylate (propylene glycol units, 2 to 20);

mono(meth)acrylic acid esters of polyols such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, glycerol mono(meth)acrylate, pentaerythritol mono(meth)acrylate, polyethylene glycol mono(meth)acrylate (ethylene glycol units, 2 to 20), and polypropylene glycol mono(meth)acrylate (propylene glycol units, 2 to 20);
poly(meth)acrylic acid esters of polyols such as ethylene glycol di(meth)acrylate, propylene glycol di(meth)acrylate, butylene glycol di(meth)acrylate, glycerol di(meth)acrylate, glycerol tri(meth)acrylate, pentaerythritol di(meth)acrylate, pentaerythritol tetra(meth)acrylate, 1,4-cyclohexane diol di(meth)acrylate, polyethylene glycol di(meth)acrylate (ethylene glycol units, 2 to 20), and polypropylene glycol di(meth)acrylate (propylene glycol units, 2 to 20);
(poly)esters of non-polymerizable polybasic acids with hydroxyalkyl (meth)acrylates such as mono[2-(meth)acryloyloxyethyl] succinate, di[2-(meth)acryloyloxyethyl] succinate, mono[2-(meth)acryloyloxyethyl] adipate, di[2-(meth)acryloyloxyethyl] adipate, mono[2-(meth)acryloyloxyethyl] phthalate, and di[2-(meth)acryloyloxyethyl] phthalate;
amino-containing (meth)acrylates such as 2-aminoethyl (meth)acrylate, 2-(N-methylamino)ethyl (meth)acrylate, 2-(N,N-dimethylamino)ethyl (meth)acrylate, 2-(N-ethylamino)ethyl (meth)acrylate, 2-(N,N-diethylamino)ethyl (meth)acrylate, 3-(N,N-dimethylamino)propyl (meth)acrylate, and 4-(N,N-dimethylamino)butyl (meth)acrylate; and
epoxy-containing (meth)acrylates such as glycidyl (meth)acrylate.

Examples of the (meth)acrylonitrile derivatives include α-chloroacrylonitrile, α-chloromethylacrylonitrile, α-trifluoromethylacrylonitrile, α-methoxyacrylonitrile, α-ethoxyacrylonitrile, and vinylidene cyanide.

Examples of the (meth)acrylamide derivatives include N-methyl(meth)acrylamide, N,N-dimethyl(meth)acrylamide, N-ethyl(meth)acrylamide, N,N-diethyl(meth)acrylamide, N-methoxy(meth)acrylamide, N,N-dimethoxy(meth)acrylamide, N-ethoxy(meth)acrylamide, N,N-diethoxy(meth)acrylamide, diacetone(meth)acrylamide, N-methylol(meth)acrylamide, N-(2-hydroxyethyl)(meth)acrylamide, N,N-dimethylaminomethyl(meth)acrylamide, N-(2-dimethylamino)ethyl(meth)acrylamide, N,N'-methylenebis(meth)acrylamide, and N,N'-ethylenebis(meth)acrylamide.

Examples of the alkyl vinyl ether include methyl vinyl ether, ethyl vinyl ether, butyl vinyl ether, and hexyl vinyl ether. Examples of the alkyl vinyl ester include vinyl formate, vinyl acetate, vinyl acrylate, vinyl butyrate, vinyl caproate, and vinyl stearate. Examples of the styrene and derivatives thereof include styrene, α-methylstyrene, and vinyltoluene.

Of the foregoing monomers, (meth)acrylates are preferred. More preferred are methyl (meth)acrylate, ethyl (meth)acrylate, isopropyl (meth)acrylate, n-butyl (meth)acrylate, isobutyl (meth)acrylate, n-hexyl (meth)acrylate, 2-ethylhexyl (meth)acrylate, isononyl (meth)acrylate, lauryl (meth)acrylate, cyclohexyl (meth)acrylate, 4-methylcyclohexyl (meth)acrylate, 4-t-butylcyclohexyl (meth)acrylate, isobornyl (meth)acrylate, dicyclopentanyl (meth)acrylate, and dicyclopentenyloxyethyl (meth)acrylate.

The other copolymerizable monomer (b-3) may be used alone or in admixture of two or more.

An appropriate amount of the other monomer (b-3) is 10 to 94% by weight, preferably 20 to 94% by weight, and more preferably 35 to 90% by weight based on the copolymer composition. More than 94 wt% of monomer (b-3) may lead to insufficient crosslinking between vinyl copolymer molecules and with the surface-treated titanium oxide microparticles in dispersion (A), failing to form a film having a low coefficient of linear expansion or to improve heat resistance, durability and weatherability. Less than 10 wt% of monomer (b-3) may lead to a high crosslinking density, resulting in a film which is less adhesive and suffers a defective outer appearance such as whitening.

The vinyl copolymer (B) is obtainable from copolymerization reaction of (b-1) the vinyl monomer having an alkoxysilyl group attached thereto via a Si-C bond, (b-2) the vinyl monomer having an organic UV-absorbing group, and (b-3) the other monomer copolymerizable with the foregoing vinyl monomers. The reaction may be performed simply by dissolving the monomers in a solvent, adding a radical polymerization initiator selected from peroxides such as dicumyl peroxide and benzoyl peroxide and azo compounds such as azobisisobutyronitrile to the solution, and heating the solution at 50 to 150°C, especially 70 to 120°C for 1 to 10 hours, especially 3 to 8 hours.

The vinyl copolymer should preferably have a weight average molecular weight (Mw) of 1,000 to 300,000, and more preferably 5,000 to 250,000, as measured by GPC versus polystyrene standards. A vinyl copolymer with too high a Mw may be too viscous to synthesize and to handle. A vinyl copolymer with too low a Mw may lead to a film which suffers a defective outer appearance such as whitening and is less adhesive, durable or weatherable.

## Component C

Component (C) is a solvent. The solvent is not particularly limited as long as components (A) and (B) are dissolvable or dispersible therein. Solvent mainly comprising highly polar organic solvent is preferred. Exemplary solvents include alcohols such as methanol, ethanol, isopropyl alcohol, n-butanol, isobutanol, t-butanol, and diacetone alcohol; ketones such as methyl propyl ketone, diethyl ketone, methyl isobutyl ketone, cyclohexanone, and diacetone alcohol; ethers such as dipropyl ether, dibutyl ether, anisole, dioxane, ethylene glycol monoethyl ether, ethylene glycol monobutyl ether, propylene glycol monomethyl ether, and propylene glycol monomethyl ether acetate; and esters such as ethyl acetate, propyl acetate, butyl acetate, and cyclohexyl acetate. Such solvents may be used alone or in admixture.

Component (C) is preferably added in such an amount that the coating composition may have a solids concentration of 1 to 30% by weight, more preferably 5 to 25% by weight. Outside the range, a coating obtained by applying the composition and curing may be defective. A concentration below the range may lead to a coating which is likely to sag, wrinkle or mottle, failing to provide the desired hardness and mar resistance. A concentration beyond the range may lead to a coating which is prone to brushing, whitening or cracking.

Component D

The composition may further comprise (D) colloidal silica. Particularly when it is desired to enhance the hardness and mar resistance of a coating, an appropriate amount of colloidal silica may be added. It is generally a colloidal dispersion of nano-size silica having a particle size of about 5 to 50 nm in a medium such as water or organic solvent. Commercially available water-dispersed or organic solvent-dispersed colloidal silica may be used herein. Examples include Snowtex-O, OS, OL and Methanol Silica Sol, IPA-ST, IBA-ST, PMA-ST, and MEK-ST by Nissan Chemical Industries Ltd. The colloidal silica may usually be compounded in an amount of 0 to 100 parts, preferably 5 to 100 parts, and more preferably 5 to 50 parts by weight per 100 parts by weight as solids of components (A) and (B) combined.

Other component (s)

If desired, suitable additives may be added to/included in the coating composition insofar as they do not adversely affect the invention. Suitable additives include pH adjustors, leveling agents, thickeners, pigments, dyes, metal oxide nanoparticles, metal powder, antioxidants, UV absorbers, UV stabilizers, heat ray reflecting/absorbing agents, flexibilizers, antistatic agents, anti-staining agents, and water repellents.

For enhanced storage stability, the coating composition may preferably be adjusted to pH 2 to 8, more preferably pH 3 to 6. Since a pH value outside the range may lessen storage stability, a pH adjustor may be added so that the pH falls in the range. For a coating composition having a pH value outside the range, if the pH is more acidic than the range, a basic compound such as ammonia or ethylenediamine may be added for pH adjustment. If the pH is more basic than the range, an acidic compound such as hydrochloric acid, nitric acid, acetic acid or citric acid may be added for pH adjustment. The pH adjustment method is not particularly limited.

The coating composition may lose storage stability in that it absorbs water during storage or service, whereby alkoxysilyl groups on the vinyl copolymer (B) undergo hydrolysis. To prevent water absorption, a dehydrating agent may be added to the composition. Examples of the dehydrating agent include orthocarboxylic acid esters such as methyl orthoformate, ethyl orthoformate, and ethyl orthoacetate, dialkyl carbodimides such as dicyclohexyl carbodimide, and solid adsorbents such as silica gel and molecular sieves.

When the substrate to be coated with the coating composition is made of an organic resin or wood, a UV absorber and/or UV stabilizer other than components (A) and (B) may be added to the coating composition for the purpose of preventing the substrate from yellowing or surface degradation. The UV absorber and/or UV stabilizer which is compatible with the coating composition and low volatile is preferred.

Examples of the UV absorber include well-known inorganic oxides such as cerium oxide and zirconium oxide, excluding the surface-treated titanium oxide microparticles as component (A), and those oxides having controlled photocatalytic activity are preferred for further enhancing the UV shielding function. Metal chelate compounds of zirconium and iron, and (partial) hydrolysates and condensates thereof are also useful. Preferred organic examples include derivatives of compounds having hydroxybenzophenone, benzotriazole, cyanoacrylate and triazine as a main skeleton. Also included are polymers such as vinyl polymers having the UV absorber incorporated in a side chain and copolymers thereof with another vinyl monomer, and silyl-modified UV absorbers, and (partial) hydrolytic condensates thereof.

Exemplary UV absorbers include 2,4-dihydroxybenzophenone, 2,2',4,4'-tetrahydroxybenzophenone, 2-hydroxy-4-methoxybenzophenone, 2-hydroxy-4-methoxybenzophenone-5-sulfonic acid, 2-hydroxy-4-n-octoxybenzophenone, 2-hydroxy-4-n-dodecyloxybenzophenone, 2-hydroxy-4-n-benzyloxybenzophenone, 2,2'-dihydroxy-4,4'-dimethoxybenzophenone, 2,2'-dihydroxy-4,4'-diethoxybenzophenone, 2,2'-dihydroxy-4,4'-dipropoxybenzophenone, 2,2'-dihydroxy-4,4'-dibutoxybenzophenone, 2,2'-dihydroxy-4-methoxy-4'-propoxybenzophenone, 2,2'-dihydroxy-4-methoxy-4'-butoxybenzophenone, 2,3,4-trihydroxybenzophenone, 2-(2-hydroxy-5-t-methylphenyl)benzotriazole, 2-(2-hydroxy-5-t-octylphenyl)benzotriazole, 2-(2-hydroxy-3,5-di-t-butylphenyl)benzotriazole, ethyl-2-cyano-3,3-diphenyl acrylate, 2-ethylhexyl-2-cyano-3,3'-diphenyl acrylate, 2-(2-hydroxy-4-hexyloxyphenyl)-4,6-diphenyltriazine, (co)polymers of 2-hydroxy-4-(2-acryloxyethoxy)benzophenone, (co)polymers of 2-(2'-hydroxy-5'-methacryloxyethylphenyl)-2H-benzotriazole, the reaction product of 2,4-dihydroxybenzophenone with γ-glycidoxypropyltrimethoxysilane, the reaction product of 2,2',4,4'-tetrahydroxybenzophenone with γ-glycidoxypropyltrimethoxysilane, and (partial) hydrolysates thereof. These organic UV absorbers may be used alone or in admixture.

The UV absorber is preferably compounded in an amount of 0 to 100% by weight, and when used, in an amount of more preferably 0.3 to 100%, even more preferably 0.3 to 30% by weight based on the solids in the coating composition.

Preferred as the UV stabilizer are compounds having at least one cyclic hindered amine structure in a molecule,

which are compatible with the coating composition and low volatile. Exemplary UV stabilizers include 3-dodecyl-1-(2,2',6,6'-tetramethyl-4-piperidinyl)pyrrolidine-2,5-dione, N-methyl-3-dodecyl-1-(2,2',6,6'-tetramethyl-4-piperidinyl)-pyrrolidine-2,5-dione, N-acetyl-3-dodecyl-1-(2,2',6,6'-tetramethyl-4-piperidinyl)-pyrrolidine-2,5-dione, bis(2,2',6,6'-tetramethyl-4-piperidyl) sebacate, bis(1,2,2',6,6'-pentamethyl-4-piperidyl) sebacate, tetrakis(2,2',6,6'-tetramethyl-4-piperidyl) 1,2,3,4-butanetetracarboxylate, tetrakis(1,2,2',6,6'-pentamethyl-4-piperidyl) 1,2,3,4-butanetetracarboxylate, the condensate of 1,2,3,4-butanetetracarboxylic acid, 2,2',6,6'-tetramethyl-4-piperidinol and tridecanol, 8-acetyl-3-dodecyl-7,7',9,9'-tetramethyl-1,3,8-triazaspiro-[4,5]decane-2,4-dione, the condensate of 1,2,3,4-butanetetracarboxylic acid, 1,2,6,6'-pentamethyl-4-piperidinol and β,β,β',β'-tetramethyl-3,9-(2,4,8,10-tetraoxaspiro[5,5']-undecane)diethanol, and the condensate of 1,2,3,4-butanetetracarboxylic acid, 2,2',6,6'-pentamethyl-4-piperidinol and β,β,β',β'-tetramethyl-3,9-(2,4,8,10-tetraoxaspiro[5,5']-undecane)diethanol. Also useful are photostabilizers which are modified by silylation for the purpose of anchoring the photostabilizers as described in JP-B S61-56187, for example, 2,2',6,6'-tetramethylpiperidino-4-propyltrimethoxysilane, 2,2',6,6'-tetramethylpiperidino-4-propylmethyldimethoxysilane, 2,2',6,6'-tetramethylpiperidino-4-propyltriethoxysilane, 2,2',6,6'-tetramethylpiperidino-4-propylmethyldiethoxysilane, and (partial) hydrolysates thereof. These photostabilizers may be used in admixture of two or more.

The UV stabilizer is preferably compounded in an amount of 0 to 10% by weight, and when used, in an amount of more preferably 0.03 to 10%, even more preferably 0.03 to 7.5% by weight based on the solids in the coating composition.

Preparation

The coating composition may be obtained by mixing selected amounts of the respective components in a standard manner.

Use

The coating composition may be applied to at least one surface of a substrate, directly or via another layer or layers. It is then cured to yield a coated article. The coating composition may be applied to the substrate by any ordinary coating techniques. Suitable coating techniques include brush coating, spray coating, dipping, flow coating, roll coating, curtain coating, spin coating, and knife coating.

The substrate used herein is not particularly limited and includes molded plastics, wood items, ceramics, glass, metals, and composites thereof. Of these, plastic materials or organic resin substrates are preferred. Examples include polycarbonate, polystyrene, acrylic resins, modified acrylic resins, urethane resins, thiourethane resins, polycondensates of halogenated bisphenol A and ethylene glycol, acrylic urethane resins, halogenated aryl-containing acrylic resins, and sulfur-containing resins. These resin substrates which have been surface treated, specifically by conversion treatment, corona discharge treatment, plasma treatment, acid or alkaline treatment are also useful. Also included are laminated substrates comprising a resin substrate and a surface layer formed thereon from a resin of different type from the substrate. Exemplary laminated substrates include those consisting of a polycarbonate resin substrate and a surface layer of acrylic resin or urethane resin which are prepared by co-extrusion or lamination technique, and those consisting of a polyester resin substrate and a surface layer of acrylic resin formed thereon.

After the coating composition is applied, the coating may be air dried or heated to form a cured film. The curing temperature and time are not particularly limited although the coating is preferably heated at a temperature below the heat resistant temperature of the substrate for 10 minutes to 2 hours. More preferably the coating is heated at a temperature of 80 to 135°C for 30 minutes to 2 hours.

The thickness of the cured film is not particularly limited and may be selected as appropriate for a particular application. The cured film preferably has a thickness of 0.1 to 50 μm, and more preferably in the range of 1 to 20 μm for ensuring that the cured film has hardness, mar resistance, long-term stable adhesion and crack resistance.

Properties

Coating compositions embodying the invention may be characterized by visible light transmittance in coating form. An index of visible light transmittance is the haze of a film. In general, the haze increases as the film becomes thicker. The film having a thickness of up to 5 μm preferably meets a haze of up to 2.0, more preferably up to 1.5, and even more preferably up to 1.0. The haze is as measured by a haze meter NDH2000 (Nippon Denshoku Industries Co., Ltd.).

The coating composition may also be characterized in that a laminate consisting of a coating of the coating composition and a silicone hard coating film laid thereon has improved mar resistance. An index of mar resistance is a delta haze value (ΔHz) in the Taber abrasion test. Specifically, a ΔHz value is determined according to ASTM D1044 by mounting a Taber abrasion tester with abrasion wheels CS-10F, measuring the haze after 500 rounds under a load

of 500 g, and calculating a difference (ΔHz) between haze values before and after the test. The film with a thickness of up to 5 μm preferably has ΔHz of up to 15, more preferably up to 13, and even more preferably less than 10.

The coating composition may also be characterized by weather resistance in coating form. An index of weather resistance is given by a weathering test to see whether or not a coating is kept intact in outer appearance, specifically whether or not a coating is cracked. To examine any change of outer appearance of a coating, the weathering test is carried out by using EYE Super UV tester W-151 (Iwasaki Electric Co., Ltd.), and irradiating UV light having an intensity of $1\times10^3$ W/m$^2$ at a temperature of 60°C and a relative humidity (RH) of 50%, and determining an irradiation time until cracks develop in the coating. For example, when UV radiation having an intensity of $1\times10^3$ W/m$^2$ is irradiated for 1 hour, the accumulative energy quantity is 1 kWh/m$^2$, which is equal to 3.6 megajoule per square meters (MJ/m$^2$) according to the conversion rule of derived units. The cured film or coated article within the scope of the invention undergoes neither cracking nor whitening nor yellowing and maintains aesthetic appearance even after exposure in an accumulative UV energy quantity of 1,500 MJ/m$^2$.

In the weathering test, any environment of test conditions may be selected. An accumulative UV energy quantity of 1,500 MJ/m$^2$ corresponds to outdoor exposure over about 10 years. The correlation of test conditions to outdoor exposure may be readily estimated. For example, an outdoor UV illuminance is $1\times10^1$ W/m$^2$, when measured at noon on fine Vernal Equinox Day at Matsuida, Annaka City, Gunma Pref., Japan, using a UV illuminometer (EYE UV illuminometer UVP365-1 by Iwasaki Electric Co., Ltd.). Assume that the annual average daily sunshine time is 12 hours, the accumulative illuminance is 12 (h/day) $\times$ 365 (day/year) $\times$ 10 (year) $\times$ 10 (W/m$^2$) = 438 (kWh/m$^2$) $\approx$ 1500 (MJ/m$^2$). When the facts that the outdoor environment depends on the latitude and weather, and the weathering test uses an artificial environment are taken into account, it is reasonable that an approximation of 1,500 MJ/m$^2$ corresponds to outdoor exposure over 10 years. The test conditions may be changed depending on a particular environment where the cured film is used.

In the weathering test, the coated article may be examined for a degree of degradation by taking out the article in the course of UV exposure and observing the outer appearance. One factor of appearance change is cracks, which may be evaluated by visual or microscopic observation. The microscope which can be used to this end is, for example, laser scanning microscope Model VK-8710 by Keyence Corp., but not limited thereto.

Another factor of appearance change is whitening, which may be determined in terms of haze of a coated article. The haze is measured by a haze meter NDH2000 (Nippon Denshoku Industries Co., Ltd.), for example. Provided that $Hz^0$ is an initial haze and $Hz^1$ is a haze after the test, weathering haze is determined as $\Delta Hz' = Hz^1 - Hz^0$. Preferably, the weathering haze ΔHz' is less than 10, more preferably up to 8, and even more preferably up to 5. A sample with ΔHz' of greater than 10 is undesirable because of an advance of whitening and worsening of transparency.

A further factor of appearance change is yellowing, which may be determined in terms of yellowness index of a coated article. The yellowness index is measured by a chromaticity meter Z-300A (Nippon Denshoku Industries Co., Ltd.), for example. Provided that $YI^0$ is an initial yellowness index and $YI^1$ is a yellowness index after the test, a difference is determined as $\Delta YI = YI^1 - YI^0$. The yellowness index difference (ΔYI) is preferably up to 10, more preferably up to 8, and even more preferably up to 5. A sample with ΔYI in excess of 10 is undesirable because of an advance of yellowing, degradation of the substrate, and worsening of aesthetic appearance.

The fourth advantage of the coating composition is good adhesion of a cured film to a substrate. An index of adhesion is evaluated by a cross-hatch adhesion test according to JIS K5400, specifically by scribing a coating with a razor along 6 longitudinal and 6 transverse lines at a spacing of 2 mm to define 25 square sections, tightly attaching adhesive tape (Cellotape® by Nichiban Co., Ltd.), and rapidly pulling back the adhesive tape at an angle of 90°. The number (X) of sections remaining intact (not peeled) is expressed as X/25. The closer to 25 the number (X) of remaining sections, the better the sample is in adhesion. An index of water-proof adhesion is available when the film-bearing substrate is immersed in boiling water at 100°C for 2 hours prior to a cross-hatch adhesion test as above.

The coating composition may be applied to the surface of a resin substrate directly or via another layer or layers. Suitable intervening layers include a primer layer, UV-absorbing layer, printing layer, recording layer, heat-ray shielding layer, adhesive layer, inorganic vapor-deposited layer and the like.

The coating composition of the invention may be used as a primer, e.g. where higher mar resistance is desired. On the surface of a cured film of the coating composition, a silicone base hard coating may be formed. The resulting laminate system may provide high mar resistance and long-term weatherability at the same time.

The silicone base hard coating is preferably a cured film of a composition comprising a silicone resin and colloidal silica. Exemplary coatings are described in JP-A S51-002736 and JP-A H09-071654.

Preferably the silicone hard coating is a cured film of a silicone composition comprising components (a) to (d):

(a) a silicone resin obtained from (co)hydrolytic condensation of at least one member selected from alkoxysilanes and partial hydrolytic condensates thereof, the alkoxysilane having the general formula (4):

$$(R^{01})_m(R^{02})_nSi(OR^{03})_{4-m-n} \qquad (4)$$

wherein $R^{01}$ and $R^{02}$ are each independently hydrogen or a substituted or unsubstituted monovalent hydrocarbon group, substituents may bond together, $R^{03}$ is a $C_1$-$C_3$ alkyl group, and m and n are independently 0 or 1 and m+n is 0, 1 or 2,
(b) colloidal silica,
(c) a curing catalyst, and
(d) a solvent.

Optionally the silicone composition may further comprise (e) titanium oxide.

Component (a)

Component (a) is a silicone resin obtainable from (co)hydrolytic condensation of at least one member selected from alkoxysilanes and partial hydrolytic condensates thereof. The alkoxysilane has the general formula (4):

$$(R^{01})_m(R^{02})_nSi(OR^{03})_{4-m-n} \qquad (4)$$

wherein $R^{01}$ and $R^{02}$ are each independently hydrogen or a substituted or unsubstituted monovalent hydrocarbon group, and substituents may bond together, $R^{03}$ is a $C_1$-$C_3$ alkyl group, and m and n are independently 0 or 1 and m+n is 0, 1 or 2.

In formula (4), $R^{01}$ and $R^{02}$ are each independently selected from hydrogen and substituted or unsubstituted monovalent hydrocarbon groups, preferably of 1 to 12 carbon atoms, more preferably 1 to 8 carbon atoms, for example, hydrogen; alkyl groups such as methyl, ethyl, propyl, butyl, pentyl, hexyl, heptyl and octyl; cycloalkyl groups such as cyclopentyl and cyclohexyl; alkenyl groups such as vinyl and allyl; aryl groups such as phenyl; halo-substituted hydrocarbon groups such as chloromethyl, γ-chloropropyl, and 3,3',3"-trifluoropropyl; and (meth)acryloxy, epoxy, mercapto, amino or isocyanato-substituted hydrocarbon groups such as γ-methacryloxypropyl, γ-glycidoxypropyl, 3,4-epoxycyclohexylethyl, γ-mercaptopropyl, γ-aminopropyl, and γ-isocyanatopropyl. An isocyanurate group having a plurality of isocyanato-substituted hydrocarbon groups bonded together is also exemplary. Of these, alkyl groups are preferred for the application where mar resistance and weatherability are required, and epoxy, (meth)acryloxy and isocyanurate-substituted hydrocarbon groups are preferred where toughness and dyeability are required.

$R^{03}$ is selected from $C_1$-$C_3$ alkyl groups, for example, methyl, ethyl, n-propyl, and isopropyl. Of these, methyl and ethyl are preferred because the alkoxysilane is highly reactive in hydrolytic condensation and the alcohol $R^{03}OH$ formed can be readily distilled off due to a high vapor pressure.

The alkoxysilane of formula (4) wherein m=0 and n=0 is (a-1) a tetraalkoxysilane of the formula: $Si(OR^{03})_4$ or a partial hydrolytic condensate thereof. Examples of suitable tetraalkoxysilane and partial hydrolytic condensate thereof include tetramethoxysilane, tetraethoxysilane, tetraisopropoxysilane, tetrabutoxysilane; partial hydrolytic condensates of tetramethoxysilane, which are commercially available under the trade name of M Silicate 51 from Tama Chemicals Co., Ltd., MSI51 from Colcoat Co., Ltd., and MS51 and MS56 from Mitsubishi Chemical Co., Ltd.; partial hydrolytic condensates of tetraethoxysilane, which are commercially available under the trade name of Silicate 35 and Silicate 45 from Tama Chemicals Co., Ltd., ESI40 and ESI48 from Colcoat Co., Ltd.; and partial co-hydrolytic condensates of tetramethoxysilane and tetraethoxysilane, which are commercially available under the trade name of FR-3 from Tama Chemicals Co., Ltd. and EMSi48 from Colcoat Co., Ltd.

The alkoxysilane of formula (4) wherein m=1 and n=0 or m=0 and n=1 is (a-2) a trialkoxysilane of the formula: $R^{01}Si(OR^{03})_3$ or $R^{02}Si(OR^{03})_3$ or a partial hydrolytic condensate thereof. Examples of suitable trialkoxysilane and partial hydrolytic condensate thereof include hydrogentrimethoxysilane, hydrogentriethoxysilane, methyltrimethoxysilane, methyltriethoxysilane, methyltriisopropoxysilane, ethyltrimethoxysilane, ethyltriethoxysilane, ethyltriisopropoxysilane, propyltrimethoxysilane, propyltriethoxysilane, propyltriisopropoxysilane, phenyltrimethoxysilane, vinyltrimethoxysilane, allyltrimethoxysilane, γ-methacryloxypropyltrimethoxysilane, γ-methacryloxypropyltriethoxysilane, γ-acryloxypropyltrimethoxysilane, γ-glycidoxypropyltrimethoxysilane, γ-glycidoxypropyltriethoxysilane, β-(3,4-epoxycyclohexyl)ethyltrimethoxysilane, γ-chloropropyltrimethoxysilane, 3,3,3-trifluoropropyltrimethoxysilane, 3,3,3-trifluoropropyltriethoxysilane, perfluorooctylethyltrimethoxysilane, γ-mercaptopropyltrimethoxysilane, γ-aminopropyltrimethoxysilane, γ-aminopropyltriethoxysilane, N-(2-aminoethyl)aminopropyltrimethoxysilane, γ-isocyanatopropyltrimethoxysilane, γ-isocyanatopropyltriethoxysilane, tris(3-trimethoxysilylpropyl)isocyanurate and tris(3-triethoxysilylpropyl)isocyanurate in which isocyanate groups are bonded together; and partial hydrolytic condensates of methyltrimethoxysilane, which are commercially available as KC-89S and X-40-9220 from Shin-Etsu Chemical Co., Ltd.; and partial hydrolytic condensates of methyltrimethoxysilane and γ-glycidoxypropyltrimethoxysilane, which are commercially available as X-41-1056 from Shin-Etsu Chemical Co., Ltd.

The alkoxysilane of formula (4) wherein m=1 and n=1 is (a-3) a dialkoxysilane of the formula: $(R^{01})(R^{02})Si(OR^{03})2$ or a partial hydrolytic condensate thereof. Examples of suitable dialkoxysilane and partial hydrolytic

condensate thereof include methylhydrogendimethoxysilane, methylhydrogendiethoxysilane, dimethyldimethoxysilane, dimethyldiethoxysilane, methylethyldimethoxysilane, diethyldimethoxysilane, diethyldiethoxysilane, methylpropyldimethoxysilane, methylpropyldiethoxysilane, diisopropyldimethoxysilane, phenylmethyldimethoxysilane, vinylmethyldimethoxysilane, γ-glycidoxypropylmethyldimethoxysilane, γ-glycidoxypropylmethyldiethoxysilane, β-(3,4-epoxycyclohexyl)ethylmethyldimethoxysilane, γ-methacryloxypropylmethyldimethoxysilane, γ-methacryloxypropylmethyldiethoxysilane, γ-mercaptopropylmethyldimethoxysilane, γ-aminopropylmethyldiethoxysilane, and N-(2-aminoethyl)aminopropylmethyldimethoxysilane.

The silicone resin as component (a) may be prepared using the foregoing components (a-1), (a-2) and (a-3) in any desired proportion. For the purpose of improving storage stability, mar resistance and crack resistance, it is preferred to use 0 to 50 Si-mol% of component (a-1), 50 to 100 Si-mol% of component (a-2) and 0 to 10 Si-mol% of component (a-3), based on the total amount of components (a-1), (a-2) and (a-3) which is equal to 100 Si-mol%. It is more preferred to use 0 to 30 Si-mol% of component (a-1), 70 to 100 Si-mol% of component (a-2) and 0 to 10 Si-mol% of component (a-3). If the main component (a-2) is less than 50 Si-mol%, the resin may have a lower crosslinking density and less curability, tending to form a cured film with a lower hardness. If component (a-1) is in excess of 50 Si-mol%, the resin may have a higher crosslinking density and a lower toughness to permit crack formation.

It is noted that Si-mol% is a percentage based on the total Si moles, and the Si mole means that in the case of a monomer, its molecular weight is 1 mole, and in the case of a dimer, its average molecular weight divided by 2 is 1 mole.

The silicone resin as component (a) may be prepared through (co)hydrolytic condensation of components (a-1), (a-2) and (a-3) by a well-known method. For example, an alkoxysilane (a-1), (a-2) or (a-3) or partial hydrolytic condensate thereof or a mixture thereof is (co)hydrolysed in water at pH 1 to 7.5, preferably pH 2 to 7. At this point, metal oxide nanoparticles dispersed in water such as silica sol may be used. A catalyst may be added to the system for adjusting its pH to the described range and to promote hydrolysis. Suitable catalysts include organic acids and inorganic acids such as hydrogen fluoride, hydrochloric acid, nitric acid, formic acid, acetic acid, propionic acid, oxalic acid, citric acid, maleic acid, benzoic acid, malonic acid, glutaric acid, glycolic acid, methanesulfonic acid, and toluenesulfonic acid, solid acid catalysts such as cation exchange resins having carboxylic or sulfonic acid groups on the surface, and water-dispersed metal oxide nanoparticles such as acidic water-dispersed silica sol. Alternatively, a dispersion of metal oxide nanoparticles in water or organic solvent such as silica sol may be co-present upon hydrolysis. In case the dispersing medium of the surface-treated titanium oxide microparticle dispersion as component (A) is water or a water-soluble organic solvent, it is acceptable to mix water, an acidic hydrolytic catalyst and alkoxysilane in the co-presence of this dispersion so that hydrolytic condensation reaction may take place. This process is advantageous because the dispersion of surface-treated titanium oxide microparticles in component (A) is improved, by virtue of a possibility of partial reaction between surfaces of surface-treated titanium oxide microparticles in component (A) and the hydrolytic condensate of alkoxysilane.

In this hydrolysis, water may be used in an amount of 20 to 3,000 parts by weight per 100 parts by weight of the total of alkoxysilanes (a-1), (a-2) and (a-3) and partial hydrolytic condensates thereof. An excess of water may lower system efficiency and in a final coating composition, residual water can adversely affect coating operation and drying. Water is preferably used in an amount of 50 parts by weight to less than 150 parts by weight for the purpose of improving storage stability, mar resistance, and crack resistance. With a smaller amount of water, the silicone resin may fail to reach a weight average molecular weight in the optimum range, as measured by GPC versus polystyrene standards. With an excess of water, the content in the silicone resin of units $R'SiO_{3/2}$ in units $R'SiO_{(3-p)/2}(OX)_p$ derived from component (a-2) may fail to reach the optimum range to maintain a coating crack resistant wherein R' is $R^{01}$ or $R^{02}$; X is hydrogen or $R^{03}$; $R^{01}$, $R^{02}$, and $R^{03}$ are as defined above, and p is an integer of 0 to 3.

Hydrolysis may be effected by adding dropwise or pouring water to the alkoxysilane or partial hydrolytic condensate, or inversely by adding dropwise or pouring the alkoxysilane or partial hydrolytic condensate to water. The reaction system may contain an organic solvent. However, the absence of organic solvent is preferred because there is a tendency that as the reaction system contains more organic solvent, the resulting silicone resin has a lower weight average molecular weight as measured by GPC versus polystyrene standards.

To produce the silicone resin (a), the hydrolysis must be followed by condensation. Condensation may be effected continuous to the hydrolysis while maintaining the liquid temperature at room temperature or heating at a temperature of not higher than 100°C. A temperature higher than 100°C may cause gelation. Condensation may be promoted by distilling off the alcohol formed by hydrolysis at a temperature of at least 80°C and atmospheric or subatmospheric pressure. Also for the purpose of promoting condensation, condensation catalysts such as basic compounds, acidic compounds or metal chelates may be added. Prior to or during the condensation step, an organic solvent may be added for the purpose of adjusting the progress of condensation or the concentration, or a dispersion of metal oxide nanoparticles in water or organic solvent such as silica sol or the surface-treated titanium oxide microparticle dispersion (A) may also be added. For the reason that a silicone resin generally builds up its molecular weight and reduces its solubility in water or alcohol formed as condensation proceeds, the organic solvent added herein should preferably be one having a boiling point of at least 80°C and a relatively highly polarity in which the silicone resin is fully dissolvable.

Examples of the organic solvent include alcohols such as isopropyl alcohol, n-butanol, isobutanol, tert-butanol, and diacetone alcohol; ketones such as methyl propyl ketone, diethyl ketone, methyl isobutyl ketone, cyclohexanone, and diacetone alcohol; ethers such as dipropyl ether, dibutyl ether, anisole, dioxane, ethylene glycol monoethyl ether, ethylene glycol monobutyl ether, propylene glycol monomethyl ether, and propylene glycol monomethyl ether acetate (PGMEA); and esters such as propyl acetate, butyl acetate, and cyclohexyl acetate.

The silicone resin resulting from condensation should preferably have a weight average molecular weight (Mw) of at least 1,500, more preferably 1,500 to 50,000, and even more preferably 2,000 to 20,000, as measured by GPC versus polystyrene standards. With a Mw below the range, a coating tends to be less tough and prone to cracking. On the other hand, a silicone resin with too high a Mw tends to have a low hardness and the resins in a coating undergo phase separation, incurring film whitening.

Component (b)

Component (b) is identical with, i.e. selectable from the same options as, component (D) described above. Description of component (b) is omitted herein to avoid redundancy. An amount of component (b) is 0 to 100 parts, preferably 5 to 100 parts, and more preferably 5 to 50 parts by weight per 100 parts by weight, calculated as solids, of the silicone resin (a).

Component (c)

Component (c) is a curing catalyst which may be selected from those catalysts commonly used in well-known silicone hard coating compositions. The curing catalyst serves to promote condensation reaction of condensable groups such as silanol and alkoxy groups in silicone resin (a). Suitable catalysts include basic compounds such as lithium hydroxide, sodium hydroxide, potassium hydroxide, sodium methylate, sodium propionate, potassium propionate, sodium acetate, potassium acetate, sodium formate, potassium formate, trimethylbenzylammonium hydroxide, tetramethylammonium hydroxide (TMAH), tetramethylammonium acetate, n-hexylamine, tributylamine, diazabicycloundecene (DBU), and and dicyandiamide; metal-containing compounds such as tetraisopropyl titanate, tetrabutyl titanate, acetylacetonatotitanium, aluminum triisobutoxide, aluminum triisopropoxide, tris(acetylacetonato)aluminum, aluminum diisopropoxy(ethyl acetoacetate), aluminum perchlorate, aluminum chloride, cobalt octylate, (acetylacetonato)cobalt, (acetylacetonato)iron, (acetylacetonato)tin, dibutyltin octylate, and dibutyltin laurate; and acidic compounds such as p-toluenesulfonic acid and trichloroacetic acid. Of these, preference is given to sodium propionate, sodium acetate, sodium formate, trimethylbenzylammonium hydroxide, tetramethylammonium hydroxide, tris(acetylacetonato)aluminum, and aluminum diisopropoxy(ethyl acetoacetate).

Another useful curing catalyst is an aromatic-free compound having the general formula (5). The silicone coating composition loaded with this catalyst becomes shelf stable while remaining curable and crack resistant.

$$[(R^5)(R^6)(R^7)(R^8)M]^{+}\cdot X^{-} \qquad (5)$$

Herein $R^5$, $R^6$, $R^7$ and $R^8$ are each independently a $C_1$-$C_{18}$ alkyl group which may be substituted with halogen, each of $R^5$, $R^6$, $R^7$ and $R^8$ has a Taft-Dubois steric substituent constant Es, the total of constants Es of $R^5$, $R^6$, $R^7$ and $R^8$ is up to -0.5, M is an ammonium or phosphonium cation, and $X^-$ is a halide anion, hydroxide anion or $C_1$-$C_4$ carboxylate anion.

Taft-Dubois steric substituent constant Es is a rate of esterification reaction of a substituted carboxylic acid under acidic conditions relative to methyl group $CH_3$ and represented by the equation:

$$Es = \log(k/k0)$$

wherein k is a rate of acidic esterification reaction of a substituted carboxylic acid under specific conditions and k0 is a rate of acidic esterification reaction of methyl-substituted carboxylic acid under the same conditions. See J. Org. Chem., 45, 1164 (1980) and J. Org. Chem., 64, 7707 (1999).

In general, Taft-Dubois steric substituent constant Es is an index representing the steric bulkiness of a substituent. For example, the value of constant Es is 0.00 for methyl, -0.08 for ethyl, -0.31 for n-propyl, and -0.31 for n-butyl, indicating that the lower (or more negative) the Es, the more sterically bulky is the substituent.

In formula (5), the total of constants Es of $R^5$, $R^6$, $R^7$ and $R^8$ should be equal to or more negative than -0.5. If the total of constants Es is above -0.5, a coating composition becomes low in shelf stability and forms a coat which can be cracked or whitened in a water-resistant test and loses adhesion, especially water-resistant adhesion and boiling adhesion. In the event the total of constants Es is above -0.5, for example, $R^5$, $R^6$, $R^7$ and $R^8$ are all methyl, a corresponding

catalyst of formula (5) becomes higher in catalytic activity, but a coating composition comprising the same tends to lose shelf stability and a coat thereof becomes so hygroscopic as to develop defects in a water-resistant test. The total of constants Es of $R^5$, $R^6$, $R^7$ and $R^8$ is preferably not lower than -3.2, and more preferably not lower than -2.8.

In the above formula, $R^5$, $R^6$, $R^7$ and $R^8$ are alkyl groups of 1 to 18 carbon atoms, preferably 1 to 12 carbon atoms, which may be substituted with halogen, for example, alkyl groups such as methyl, ethyl, propyl, butyl, pentyl, hexyl, heptyl, and octyl; cycloalkyl groups such as cyclopentyl and cyclohexyl; and halo-alkyl groups such as chloromethyl, γ-chloropropyl and 3,3',3"-trifluoropropyl.

M is an ammonium or phosphonium cation. $X^-$ is a halide anion, hydroxide anion or $C_1$-$C_4$ carboxylate anion, and preferably a hydroxide anion or acetate anion.

Illustrative examples of the curing catalyst having formula (5) include, but are not limited to, hydroxides such as tetra-n-propylammonium hydroxide, tetra-n-butylammonium hydroxide, tetra-n-pentylammonium hydroxide, tetra-n-hexylammonium hydroxide, tetracyclohexylammonium hydroxide, tetrakis(trifluoromethyl)ammonium hydroxide, trimethylcyclohexylammonium hydroxide, trimethyl(trifluoromethyl)ammonium hydroxide, trimethyl-t-butylammonium hydroxide, tetra-n-propylphosphonium hydroxide, tetra-n-butylphosphonium hydroxide, tetra-n-pentylphosphonium hydroxide, tetra-n-hexylphosphonium hydroxide, tetracyclohexylphosphonium hydroxide, tetrakis(trifluoromethyl)phosphonium hydroxide, trimethylcyclohexylphosphonium hydroxide, trimethyl(trifluoromethyl)phosphonium hydroxide, and trimethyl-t-butylphosphonium hydroxide; salts of the foregoing hydroxides with halogenic acids and with $C_1$-$C_4$ carboxylic acids. Inter alia, tetrapropylammonium hydroxide, tetrapropylammonium acetate, tetrabutylammonium hydroxide, tetrabutylammonium acetate, tetrabutylphosphonium hydroxide, and tetrabutylphosphonium acetate are preferred. These may be used alone or in admixture of two or more, or in combination with any of the aforementioned well-known curing catalysts.

Insofar as component (c) is compounded in an effective amount to cure the silicone resin (a), the amount of the catalyst is not particularly limited. Specifically the curing catalyst is preferably used in an amount of 0.0001 to 30% by weight, more preferably 0.001 to 10% by weight, based on the solids of the silicone resin. Less than 0.0001 wt% of the catalyst may lead to under-cure and low hardness. More than 30 wt% of the catalyst may lead to a coating which is prone to cracking and poorly water resistant.

Component (d)

Component (d) is a solvent. It may be any solvents which are well known in the industry for silicone hard coating compositions. It may be identical or similar to component (C) described above, i.e. selectable from the same options, and its further description is omitted here. Component (d) is preferably added in such an amount that the silicone hard coating composition may have a solids concentration of 1 to 30% by weight, more preferably 5 to 25% by weight.

Component (e)

Component (e) is titanium oxide. Titanium oxide used herein may optionally be core/shell type with a shell of silicon oxide, e.g. similar to the titanium oxide in dispersion (A) described above, i.e. selectable from the same options. Description of component (e) is therefore omitted here to avoid redundancy. Component (e) is preferably used in such amounts that the silicone hard coating composition may have a solids concentration of 1 to 30%, more preferably 5 to 25% by weight.

Typically the silicone hard coating film has a thickness of 0.5 to 50 μm, preferably 1 to 20 μm.

While the cured coating of the coating composition has improved mar resistance as alluded to previously, an inorganic evaporated film may be deposited on the cured coating or on the silicone hard coating film on the cured coating in order to gain a further improvement in mar resistance. The inorganic evaporated film is not particularly limited as long as it is formed by a dry film deposition method. Included are films based on at least one metal or oxide, nitride or sulfide thereof, the metal being selected from the group consisting of Si, Ti, Zn, Al, Ga, In, Ce, Bi, Sb, B, Zr, Sn and Ta. Also included are diamond-like carbon films having a high hardness and insulating properties. The method for depositing an inorganic evaporated film is not particularly limited as long as it is a dry film deposition method. Suitable dry film deposition methods include physical gas phase growth methods such as resistance heating evaporation, electron beam evaporation, molecular beam epitaxy, ion beam deposition, ion plating, and sputtering, and chemical vapor deposition (CVD) methods such as thermal CVD, plasma CVD, photo CVD, epitaxial CVD, atomic layer CVD, and cat-CVD. Preferably the inorganic evaporated film has a thickness of 0.1 to 10 μm.

EXAMPLE

Synthesis Examples, Examples and Comparative Examples are given below by way of illustration and not by way of limitation. All parts are by weight. The viscosity is measured at 25°C according to JIS Z8803, and the weight average molecular weight (Mw) is measured by gel permeation chromatography (GPC) versus polystyrene standards.

Reactants were purchased from chemical suppliers including Wako Pure Chemical Industries, Ltd. (abbreviated Wako) and Shin-Etsu Chemical Co., Ltd. (abbreviated Shin-Etsu).

Synthesis Example 1

Synthesis of surface-treated titanium oxide (A-1)

Step (i)

An inorganic oxide colloidal water dispersion containing core/shell microparticles each consisting of a core of titanium-tin-manganese complex oxide and a shell of silicon oxide as dispersed phase in water as dispersing medium was prepared. First, a dispersion of titanium oxide microparticles serving as the core was prepared, followed by hydrolytic condensation of tetraethoxysilane, thereby yielding a colloidal dispersion of core/shell microparticles.

Specifically, 1.8 g of tin(IV) chloride pentahydrate (Wako) and 0.2 g of manganese(II) chloride tetrahydrate (Wako) were added to 66.0 g of 36 wt% titanium(IV) chloride aqueous solution (TC-36 by Ishihara Sangyo Kaisha, Ltd.). They were thoroughly mixed and diluted with 1,000 g of deionized water. To the metal salt aqueous solution mixture, 300 g of 5 wt% aqueous ammonia (Wako) was gradually added for neutralization and hydrolysis, yielding a precipitate of titanium hydroxide containing tin and manganese. This titanium hydroxide slurry was at pH 8. The precipitate of titanium hydroxide was deionized by repeating deionized water addition and decantation. To the precipitate of titanium hydroxide containing tin and manganese after deionization, 100 g of 30 wt% aqueous hydrogen peroxide (Wako) was gradually added, whereupon stirring was continued at 60°C for 3 hours for full reaction. Thereafter, pure water was added for concentration adjustment, yielding a semitransparent solution of tin and manganese-containing peroxotitanate (solid concentration 1 wt%). An autoclave of 500 mL volume (TEM-D500 by Taiatsu Techno Co., Ltd.) was charged with 350 mL of the peroxotitanate solution synthesized as above, which was subjected to hydrothermal reaction at 200°C and 1.5 MPa for 240 minutes. The reaction mixture in the autoclave was taken out via a sampling tube to a vessel in water bath at 25°C whereby the mixture was rapidly cooled to quench the reaction, obtaining a titanium oxide dispersion.

A separable flask equipped with a magnetic stirrer and thermometer was charged with 1,000 parts by weight of titanium oxide dispersion, 100 parts by weight of ethanol, and 2.0 parts by weight of ammonia at room temperature (25°C), followed by magnetic stirring. The separable flask was placed in an ice bath and cooled until the temperature of the contents reached 5°C. 18 parts by weight of tetraethoxysilane (KBE-04 by Shin-Etsu) was added to the separable flask, which was mounted in μReactor EX (Shikoku Instrumentation Co., Inc.) where microwave was applied at a frequency 2.45 GHz and a power 1,000 W for 1 minute while magnetic stirring was continued. The thermometer was monitored during the microwave heating step, confirming that the temperature of the contents reached 85°C. The mixture was filtered through qualitative filter (Advantec 2B), obtaining a dilute colloidal dispersion. By ultrafiltration through a filter of Andritz, the dilute colloidal dispersion was concentrated to 10 wt%, yielding an inorganic oxide colloidal water dispersion (WT-1). A 1,000-mL separable flask equipped with a magnetic stirrer was charged with 200 g of colloidal dispersion (WT-1).

Step (ii)

To the flask charged with dispersion (WT-1) in step (i), 200 g of isobutyl alcohol (Delta Chemicals Co., Ltd.) was fed. The aqueous titania sol and isobutyl alcohol were not fully compatible and formed two phases. Notably, isobutyl alcohol had a solubility in water at 20°C of 10 (g/100 g water).

Step (iii)

The flask from step (ii) was charged with 20 g of 3-acryloyloxypropyltrimethoxysilane (KBM-5103 by Shin-Etsu). It was observed that the silane dissolved mainly in the organic layer (isobutyl alcohol layer).

Step (iv)

The flask from step (iii) was placed in the cavity of a microwave oven, μReactor Ex (Shikoku Instrumentation Co., Inc.). While the magnetic stirrer was rotated at 700 rpm, microwave was applied for 5 minutes. By means of the program built in the oven, microwave irradiation was controlled so that the liquid temperature reached 82°C at maximum. At the end of microwave irradiation, the flask was allowed to stand at room temperature until the liquid temperature reached 40°C. The colloidal dispersion was in the suspended state.

Step (v)

To the flask from step (iv), 300 g of propylene glycol monomethyl ether (Nippon Nyukazai Co., Ltd.) was added as organic solvent while stirring with the magnetic stirrer (700 rpm). At the end of organic solvent addition, the reaction solution looked uniform and transparent.

Step (vi)

The contents of the flask from step (v) were transferred to a distillation flask, which was heated under a pressure of 760 mmHg for distillation. Distillation started when the flask internal temperature reached about 85°C. Distillation was continued until the distillate amounted to 500 g. At the end of distillation, the internal temperature was about 120°C. The flask contents were cooled to room temperature, whereupon a water concentration was 0.20% as analyzed by the Karl-Fischer method. The organotitania sol thus synthesized was measured for volume average 50% cumulative particle diameter by the dynamic light scattering method. The results of measurement are plotted in FIG. 1. Particles in the organotitania sol synthesized were observed (50,000x) under a TEM model HT-9000 (Hitachi High-Technologies Corp.). The photomicrograph is shown in FIG. 2.

Step (vii)

The organotitania sol resulting from step (vi), 200 g, was treated with 20 g of Molecular Sieve 4A (catalog No. 25958-08, Kanto Chemical Co., Ltd.) whereby the water concentration was reduced to 250 ppm. No agglomerates were found at this point. It was demonstrated that molecular sieve treatment was effective for reducing the water content which had not completely been removed in step (vi).

Step (viii)

Under a nitrogen stream, 200 g (solids 11 wt%) of the organotitania sol resulting from step (vii) was reacted with 10 g of bis{(acryloyloxymethyl)dimethylsilyl}azane at 80°C for 8 hours. At the end of reaction, the reaction mixture was kept in contact with 10 g of cation exchange resin (Amberlite® 200CT(H)-A by Organo Co., Ltd.) to remove ammonia by-product. The mixture was filtered through qualitative filter (Advantec 2B), collecting surface-treated titanium oxide (T-1). Several droplets (ca. 0.2 mL) of 1M solution of trisacetylacetonatoiron(III) (Kanto Chemical Co., Ltd.) in hexadeuterioacetone (Cambridge Isotope Laboratories Inc.) were added to 10 mL of surface-treated titanium oxide (T-1), which was transferred to a NMR tube of PTFE with a diameter 10 mm and analyzed by $^{29}$Si NMR spectroscopy. Analytical conditions included gated decoupling, a pulse sequence of 45° pulses and pulse interval 6 seconds, magnetic field strength 11.75 T, and repetition of 7,200 times. FIG. 3 shows the NMR spectrum. It is evident from FIG. 3 that a proportion $\int T3/\sum T$ of T units (trifunctional polysiloxane) is 70 mol%.

Synthesis Example 2

Synthesis of surface-treated titanium oxide (A-2)

Surface-treated titanium oxide (T-2) was obtained by the same procedure as in Synthesis Example 1 except that in step (viii) of Synthesis Example 1, 8 g of hexamethyldisilazane was used instead of 10 g of bis{(acryloyloxymethyl)dimethylsilyl}azane. Several droplets (ca. 0.2 mL) of 1M solution of trisacetylacetonatoiron(III) (Kanto Chemical Co., Ltd.) in hexadeuterioacetone (Cambridge Isotope Laboratories Inc.) and cyclooctamethyltetrasiloxane as internal standard were added to surface-treated titanium oxide (T-2), which was transferred to a NMR tube of PTFE with a diameter 10 mm and analyzed by $^{29}$Si NMR spectroscopy. Analytical conditions included gated decoupling, a pulse sequence of 45° pulses and pulse interval 6 seconds, magnetic field strength 11.75 T, and repetition of 7,200 times. FIG. 4 shows the NMR spectrum. It is evident from FIG. 4 that a proportion $\int T3/\sum T$ of T units (trifunctional polysiloxane) is 60 mol%.

Synthesis Example 3

Synthesis of surface-treated titanium oxide (A-3)

Surface-treated titanium oxide (T-3) was obtained by the same procedure as in Synthesis Example 1 except that in step (viii) of Synthesis Example 1, 11 g of bis{(acryloyloxypropyl)dimethylsilyl}azane was used instead of 10 g of bis{(acryloyloxymethyl)dimethylsilyl}azane. Several droplets (ca. 0.2 mL) of 1M solution of trisacetylacetonatoiron(III) (Kanto Chemical Co., Ltd.) in hexadeuterioacetone (Cambridge Isotope Laboratories Inc.) were added to surface-treated

titanium oxide (T-3), which was transferred to a NMR tube of PTFE with a diameter 10 mm and analyzed by $^{29}$Si NMR spectroscopy. Analytical conditions included gated decoupling, a pulse sequence of 45° pulses and pulse interval 6 seconds, magnetic field strength 11.75 T, and repetition of 7,200 times. It is evident from the NMR spectrum that a proportion $\int T3/\sum T$ of T units (trifunctional polysiloxane) is 60 mol%.

Comparative Synthesis Example 1

Synthesis of surface-treated titanium oxide (RA-1)

Surface-treated titanium oxide (T-4) was obtained by the same procedure as in Synthesis Example 1 except that step (viii) was omitted. Several droplets (ca. 0.2 mL) of 1M solution of trisacetylacetonatoiron(III) (Kanto Chemical Co., Ltd.) in hexadeuterioacetone (Cambridge Isotope Laboratories Inc.) were added to surface-treated titanium oxide (T-4), which was transferred to a NMR tube of PTFE with a diameter 10 mm and analyzed by $^{29}$Si NMR spectroscopy. Analytical conditions included gated decoupling, a pulse sequence of 45° pulses and pulse interval 6 seconds, magnetic field strength 11.75 T, and repetition of 7,200 times. FIG. 5 shows the NMR spectrum. It is evident from FIG. 5 that a proportion $\int T3/\sum T$ of T units (trifunctional polysiloxane) is 3 mol%.

Reference Example 1

Surface-treated titanium oxide (RA-2)

A dispersion of surface-treated titanium oxide microparticles as synthesized by the arc plasma method (available under the trade name NanoTek RTTDBN-E88 from CI Kasei Co., Ltd.) was analyzed by $^{29}$Si NMR spectroscopy. Analytical conditions included gated decoupling, a pulse sequence of 45° pulses and pulse interval 6 seconds, magnetic field strength 11.75 T, and repetition of 7,200 times. FIG. 6 shows the NMR spectrum. It is evident from FIG. 6 that a proportion $\int (T3+T3')/\sum T$ of T units (trifunctional polysiloxane) is 100 mol%.

Synthesis of vinyl copolymer having alkoxysilyl and UV-absorbing groups attached to side chains (B)

Synthesis Example 4

A 2-L flask equipped with a stirrer, condenser and thermometer was charged with 152 g of diacetone alcohol as a solvent and heated at 80°C under a nitrogen stream. To the flask, a 240-g portion of a previously prepared monomer mix solution (containing 67.5 g of 2-[2'-hydroxy-5'-(2-methacryloxyethyl)phenyl]-2H-benzotriazole under the trade name of RUVA-93 from Otsuka Chemical Co., Ltd., 90 g of γ-methacryloxypropyltrimethoxysilane, 270 g of methyl methacrylate, 22.5 g of glycidyl methacrylate, and 350 g of diacetone alcohol), and a 54-g portion of a previously prepared solution of 2.3 g of 2,2'-azobis(2-methylbutyronitrile) as a polymerization initiator in 177.7 g of diacetone alcohol were added in sequence. The solution was allowed to react at 80°C for 30 minutes, after which the remainder of the monomer mix solution and the remainder of the initiator solution were simultaneously added dropwise at 80-90°C over 1.5 hours. Stirring continued at 80-90°C for a further 5 hours.

The thus obtained vinyl polymer having trimethoxysilyl and organic UV-absorbing groups attached to side chains had a viscosity of 5,050 mPa·s, and the copolymer contained 15 wt% of the UV-absorbing monomer and 20 wt% of the vinyl monomer having trimethoxysilyl attached to a side chain via a Si-C bond. The copolymer had a Mw of 60,800. The vinyl copolymer (solution) thus obtained is designated B-1.

Synthesis Examples 5, 6 and Comparative Synthesis Examples 2, 3

Vinyl copolymers (solutions) designated B-2, B-3, and comparative vinyl copolymers (solutions) designated RB-1, RB-2 were prepared as in Synthesis Example 4 in accordance with the monomer formulation and amount shown in Table 1.

Table 1

| Composition of vinyl copolymer (B) having alkoxysilyl and organic UV-absorbing groups attached to side chains | | | | | |
|---|---|---|---|---|---|
| | Synthesis Example | | | Comparative Synthesis Example | |
| | 4 | 5 | 6 | 2 | 3 |
| (B) Vinyl copolymer | B-1 | B-2 | B-3 | RB-1 | RB-2 |
| MPTMS | 90 | 45 | 135 | 90 | |
| RUVA-1 | 67.5 | 45 | | | 67.5 |
| RUVA-2 | | | 112 | | |
| MMA | 270 | 285 | 203 | 337.5 | 355 |
| GMA | 22.5 | 45 | | 22.5 | 22.5 |
| VIAc | | 25 | | | |
| MHALS | | 5 | | | 5 |
| Total charge | 450 | 450 | 450 | 450 | 450 |
| (Unit: pbw) | | | | | |

MPTMS: γ-methacryloxypropyltrimethoxysilane
RUVA-1: 2-[2'-hydroxy-5'-(2-methacryloxyethyl)phenyl]-2H-benzotriazole under the trade name of RUVA-93 from Otsuka Chemical Co., Ltd.
RUVA-2: 2-hydroxy-4-(2-acryloxyethyl)benzophenone under the trade name of BP-1A from Osaka Organic Chemical Industry, Ltd.
MMA: methyl methacrylate
GMA: glycidyl methacrylate
VIAc: vinyl acetate
MHALS: 1,2,2,6,6-pentamethyl-4-piperidyl methacrylate

Synthesis of colloidal silica-laden organopolysiloxane composition

Synthesis Example 7

A 1-L flask equipped with a stirrer, condenser and thermometer was charged with 336 g of methyltriethoxysilane and 94 g of isobutanol. To the solution which was stirred under ice cooling and kept below 5°C, 283 g of water-dispersed colloidal silica (Snowtex O, Nissan Chemical Industries Ltd., average particle size 15-20 nm, $SiO_2$ content 20 wt%) below 5°C was added. The mixture was stirred under ice cooling for 3 hours and at 20-25°C for a further 12 hours, after which 27 g of diacetone alcohol and 50 g of propylene glycol monomethyl ether were added. Then 3 g of a 10 wt% sodium propionate aqueous solution as a curing catalyst and 0.2 g of a polyether-modified silicone KP-341 (Shin-Etsu) as a leveling agent were added, followed by adjustment to pH 6-7 with acetic acid. It was diluted with isobutanol to a nonvolatile content of 20 wt% (JIS K6833) and aged at room temperature for 5 days, yielding a colloidal silica-laden organopolysiloxane composition having a viscosity of 4.2 $mm^2/s$ and a Mw of 1,100. This colloidal silica-laden organopolysiloxane composition is designated HC-7.

Synthesis of colloidal titania-laden organopolysiloxane composition

Synthesis Example 8

A 2-L flask equipped with a stirrer, condenser and thermometer was charged with 251 g of methyltrimethoxysilane and 78 g of a titanium oxide dispersion (i.e., water dispersion of silica-coated titanium oxide microparticles obtained at the end of step (i) in Synthesis Example 1, solids concentration 10 wt%), which were mixed at room temperature. A rise of flask internal temperature from 28°C to 55°C was observed, indicating self-heating due to hydrolysis and condensation of alkoxysilane. To the mixture were added 210 g of silica sol (Snowtex O, Nissan Chemical Industries Ltd.) and 1.4 g of acetic acid (Wako). The mixture was stirred at 60°C for 3 hours, to which 279 g of cyclohexanone was

added. By heating the mixture, 230 g of cyclohexanone was distilled off. During the heat distillation, the flask internal temperature reached 91°C. The resulting suspension was cooled to room temperature. To the suspension, 372 g of isopropyl alcohol, 0.23 g of a leveling agent (polyether-modified silicone KP-341 by Shin-Etsu), 1.5 g of acetic acid, and 4.1 g of tetrabutylammonium hydroxide were added in sequence. This was aged at 60°C for 4 hours, yielding a colloidal titania-laden organopolysiloxane composition having a viscosity of 4.3 $mm^2/s$ and a Mw of 1,200. This colloidal titania-laden organopolysiloxane composition is designated HC-8.

Examples 1 to 8 and Comparative Examples 1 to 5

Coating compositions were prepared.

Coating compositions were prepared in accordance with the formulation of Tables 2 to 4 and tested. It is noted that among the abbreviations shown in Tables, those abbreviations not described in Synthesis Examples have the following meaning.

-- Silica microparticles dispersed in organic solvent

D-1: colloidal silica dispersed in propylene glycol monomethyl ether acetate (PMA-ST, solids concentration 30 wt%, primary particle size 10-15 nm, Nissan Chemical Industries, Ltd.)

-- Thermoplastic resin

POL-1: 40 wt% diacetone alcohol solution of polymethyl methacrylate resin (Dianal BR-80, Mitsubishi Rayon Co., Ltd.)

-- Organic UV-absorber

UVA-1: 2-[2-hydroxy-4-(1-octyloxycarbonylethoxy)phenyl]-4,6-bis(4-phenylphenyl)-1,3,5-triazine (Tinuvin 479, Ciba Specialty Chemicals)

UVA-2: 2,2',4,4'-tetrahydroxybenzophenone (Seesorb 106, Shipro Kasei Kaisha, Ltd.)

-- Hindered amine photostabilizer

HALS-1: N-acetyl-3-dodecyl-1-(2,2,6,6-tetramethyl-4-piperidinyl)pyrrolidine-2,5-dione (Sandbar 3058Liq, Clariant)

-- Dehydrating agent

E-1: ethyl orthoformate

Measurements of physical properties and evaluation were performed as follows.

A cured film of each coating composition was evaluated in a single film form.

Prior to coating, each of the coating compositions formulated in accordance with the formulation (solids basis) of Tables 2 to 4 was diluted with a 20/80 (weight ratio) solvent mixture of diacetone alcohol and propylene glycol monomethyl ether to a total solids concentration of 10 wt%. The coating solution was applied onto a cleaned surface of a 0.5 mm polycarbonate resin substrate (Iupilon Sheet, Mitsubishi Engineering-Plastics Corp.) by dip coating and heat cured at 120°C for 60 minutes to form a film of about 6-8 μm thick. The film was tested for physical properties, with the results also shown in Tables 2 to 4.

(1) Dispersion stability

The coating composition was allowed to stand at room temperature for one week, after which the dispersed state of surface-treated titanium oxide microparticles was observed and rated according to the following criterion.

○: well dispersed, no settlement
×: agglomerated and settled

(2) Initial film appearance

A cured film of the coating composition in a single film form was visually observed for outer appearance.

(3) Film transparency

A film was measured for haze by a haze meter NDH2000 (Nippon Denshoku Industries Co., Ltd.).

(4) Initial adhesion

The coated substrate was examined for adhesion by a cross-hatch adhesion test according to JIS K5400, specifically by scribing the sample with a razor along 6 longitudinal and 6 transverse lines at a spacing of 2 mm to define 25 square sections, tightly attaching adhesive tape (commercially available cellophane tape) thereto, rapidly pulling back the adhesive tape at an angle of 90°, and counting the number (X) of coating sections kept unpeeled. The result is expressed as X/25.

(5) Appearance and adhesion after water immersion

The coated substrate was immersed in boiling water for 2 hours, after which it was visually observed for appearance and examined for adhesion by the adhesion test (4).

(6) Mar resistance

Mar resistance was analyzed according to ASTM D1044 by mounting a Taber abrasion tester with wheels CS-10F, measuring a haze after 500 turns under a load of 500 g, and calculating a haze difference ($\Delta$Hz, %) before and after the test.

(7) Weathering resistance

<u>Condition setting</u>

Prior to setting of conditions for a weathering test, an outdoor UV dose was measured using a UV illuminometer (EYE UV illuminometer UVP365-1 by Iwasaki Electric Co., Ltd.). When measured at noon on fine Vernal Equinox Day (20th March, 2012) at Matsuida, Annaka City, Gunma Pref., Japan, the UV dose was $1\times10^1$ W/m$^2$. This UV dose is typical in consideration of the prior art report (International Commission on Illumination, 20, 47 (1972), CIE Publication). In the practice of the invention, the weather resistance of a cured film is set so as to correspond to outdoor exposure over 10 years. Assume that the annual average daily sunshine time is 12 hours, the accumulative energy quantity is estimated to be 12 (h/day) $\times$ 365 (day/year) $\times$ 10 (year) $\times$ 10 (W/m$^2$) = 438 (kWh/m$^2$) $\approx$ 1500 (MJ/m$^2$).

<u>Weathering test</u>

Each sample was evaluated for weather resistance, using EYE Super UV tester W-151 (Iwasaki Electric Co., Ltd.). The test conditions included UV radiation having an intensity of $1\times10^3$ W/m$^2$, an environment at a temperature of 60°C and a humidity of 50% RH, and an accumulative UV energy quantity of 750 and 1500 MJ/m$^2$.

[Yellowing]

A yellowness index was measured before and after the weathering test by chromaticity meter Z-300A of Nippon Denshoku Industries Co., Ltd. A change of yellowness index was computed as $\Delta YI = YI^1 - YI^0$ wherein $YI^1$ is a yellowness index after the test and $YI^0$ is a yellowness index before the test.

[Coating crack on weathering]

The outer appearance of a coating after the weathering test was rated according to the following criterion.

○: intact
Δ: some cracks
x: cracks on entire film

[Coating peel on weathering]

The state of a coating after the weathering test was rated according to the following criterion.

○: intact
Δ: some delamination
×: overall delamination

Table 2

| Formulation (as solids) of coating composition and tested properties of coating | | | | | |
|---|---|---|---|---|---|
| Formulation (pbw) | | Example | | | |
| | | 1 | 2 | 3 | 4 |
| (B) Vinyl copolymer containing alkoxysilyl and UV-absorbing groups | | B-1 100 pbw | B-2 100 pbw | B-3 100 pbw | B-1 100 pbw |
| (A) Surface-treated titanium oxide dispersion | | A-1 10 pbw | A-1 10 pbw | A-1 10 pbw | A-1 3 pbw |
| (D) Colloidal silica | | | D-1 5 pbw | | |
| Additives | | | UVA-1 3 pbw Water | POL-1 5 pbw | HALS-1 1 pbw |
| Test results | | | | | |
| Dispersion stability | | ○ | ○ | ○ | ○ |
| Initial appearance | | intact | intact | intact | intact |
| Initial haze | | 0.5 | 0.3 | 1.6 | 0.8 |
| Initial adhesion | | 25/25 | 25/25 | 25/25 | 25/25 |
| Appearance after water immersion | | intact | intact | intact | intact |
| Adhesion after water immersion | | 25/25 | 25/25 | 25/25 | 25/25 |
| Mar resistance, % | | 17 | 15 | 12 | 14 |
| Weathering test @ 750 $MJ/m^2$ | ΔYI | <1 | <1 | <1 | <1 |
| | Crack | ○ | ○ | ○ | ○ |
| | Peel | ○ | ○ | ○ | ○ |
| Weathering test @1500 $MJ/m^2$ | ΔYI | 4 | 6 | 3 | 3 |
| | Crack | ○ | ○ | ○ | ○ |
| | Peel | ○ | ○ | ○ | ○ |

Table 3

| Formulation (as solids) of coating composition and tested properties of coating | | | | |
|---|---|---|---|---|
| Formulation (pbw) | Example | | | |
| | 5 | 6 | 7 | 8 |
| (B) Vinyl copolymer containing alkoxysilyl and UV-absorbing groups | B-1 100 pbw | B-1 100 pbw | B-3 100 pbw | B-1 100 pbw |
| (A) Surface-treated titanium oxide dispersion | A-1 5 pbw | A-2 5 pbw | A-2 10 pbw | A-3 10 pbw |
| Test results | | | | |
| Dispersion stability | ○ | ○ | ○ | ○ |

(continued)

| Formulation (as solids) of coating composition and tested properties of coating | | | | | |
|---|---|---|---|---|---|
| Formulation (pbw) | | Example | | | |
| | | 5 | 6 | 7 | 8 |
| Initial appearance | | intact | intact | intact | intact |
| Initial haze | | 0.7 | 0.4 | 0.8 | 0.5 |
| Initial adhesion | | 25/25 | 25/25 | 25/25 | 25/25 |
| Appearance after water immersion | | intact | intact | intact | intact |
| Adhesion after water immersion | | 25/25 | 25/25 | 25/25 | 25/25 |
| Mar resistance, % | | 17 | 15 | 12 | 14 |
| Weathering test @ 750 $MJ/m^2$ | ΔYI | <1 | <1 | <1 | <1 |
| | Crack | ○ | ○ | ○ | ○ |
| | Peel | ○ | ○ | ○ | ○ |
| Weathering test @1500 $MJ/m^2$ | ΔYI | 3 | 5 | 3 | 3 |
| | Crack | ○ | ○ | ○ | ○ |
| | Peel | ○ | ○ | ○ | ○ |

Table 4

| Formulation (as solids) of coating composition and tested properties of coating | | | | | | |
|---|---|---|---|---|---|---|
| Formulation (pbw) | | Comparative Example | | | | |
| | | 1 | 2 | 3 | 4 | 5 |
| (B) Vinyl copolymer containing alkoxysilyl and UV-absorbing groups | | B-1 100 pbw | B-1 100 pbw | B-1 100 pbw | RB-1 100 pbw | RB-2 100 pbw |
| (A) Surface-treated titanium oxide dispersion | | RA-1 5 pbw | RA-1 10 pbw | RA-2 10 pbw | A-110 pbw | A-1 10 pbw |
| Test results | | | | | | |
| Dispersion stability | | × | × | × | ○ | ○ |
| Initial appearance | | intact | whitened | intact | intact | slightly whitened |
| Initial haze | | 3.5 | 4.5 | 6.0 | 0.7 | 2.2 |
| Initial adhesion | | 25/25 | 25/25 | 25/25 | 25/25 | 25/25 |
| Appearance after water immersion | | slightly whitened | slightly whitened | slightly whitened | intact | intact |
| Adhesion after water immersion | | 25/25 | 25/25 | 25/25 | 25/25 | 10/25 |
| Mar resistance, % | | 20 | 20 | 15 | 12 | 20 |
| Weathering test @ 750 $MJ/m^2$ | ΔYI | 5 | 6 | 3 | 1 | 2 |
| | Crack | × | Δ | Δ | ○ | ○ |
| | Peel | Δ | Δ | ○ | ○ | x |

(continued)

| Formulation (as solids) of coating composition and tested properties of coating | | | | | | |
|---|---|---|---|---|---|---|
| Formulation (pbw) | | Comparative Example | | | | |
| | | 1 | 2 | 3 | 4 | 5 |
| Weathering test @1500 MJ/m$^2$ | ΔYI | - | - | 4 | 5 | - |
| | Crack | - | - | × | Δ | - |
| | Peel | Δ | Δ | - | × | - |

Examples 9 to 16 and Comparative Examples 6 to 10

The coating compositions within the scope of the invention were coated and cured to form a film as a primer. A colloidal silica-laden organopolysiloxane composition was coated and cured onto the cured film. The film laminate was similarly tested.

Prior to coating, each of the coating compositions formulated in accordance with the formulation (solids basis) of Tables 5 to 7 was diluted with a 20/80 (weight ratio) solvent mixture of diacetone alcohol and propylene glycol monomethyl ether to a total solids concentration of 10%. The coating solution was applied onto a cleaned (washed with isopropyl alcohol and dried) surface of a 0.5 mm polycarbonate resin substrate (Iupilon Sheet, Mitsubishi Engineering-Plastics Corp.) by dip coating and heat cured at 120°C for 60 minutes to form a film of about 6-8 μm thick.

The colloidal silica-laden organopolysiloxane composition HC-7 or 8 in Synthesis Example 7 or 8 was applied onto the film by dip coating and heat cured at 120°C for 60 minutes to form a silicone film of about 2-3 μm thick. The film laminate was tested for physical properties, with the results also shown in Tables 5 to 7.

Table 5

| Formulation (as solids) and tested properties of film laminate | | | | | |
|---|---|---|---|---|---|
| Formulation (pbw) | | Example | | | |
| | | 9 | 10 | 11 | 12 |
| (B) Vinyl copolymer containing alkoxysilyl and UV-absorbing groups | | B-1 100 pbw | B-2 100 pbw | B-3 100 pbw | B-1 100 pbw |
| (A) Surface-treated titanium oxide dispersion | | A-1 10 pbw | A-2 10 pbw | A-1 10 pbw | A-1 3 pbw |
| (D) Colloidal silica | | | D-1 10 pbw | | |
| Additives | | | UVA-1 3 pbw | POL-1 5 pbw | HALS-1 1 pbw E-1 |
| Overcoat polysiloxane composition | | HC-8 | HC-7 | HC-8 | HC-8 |
| Test results | | | | | |
| Dispersion stability | | ○ | ○ | ○ | ○ |
| Initial appearance | | intact | intact | intact | intact |
| Initial haze | | 0.5 | 0.3 | 0.9 | 0.7 |
| Initial adhesion | | 25/25 | 25/25 | 25/25 | 25/25 |
| Appearance after water immersion | | intact | intact | intact | intact |
| Adhesion after water immersion | | 25/25 | 25/25 | 25/25 | 25/25 |
| Mar resistance, % | | 4 | 5 | 2 | 4 |
| Weathering test @ 750 MJ/m$^2$ | ΔYI | <1 | <1 | <1 | <1 |
| | Crack | ○ | ○ | ○ | ○ |
| | Peel | ○ | ○ | ○ | ○ |

(continued)

| Formulation (as solids) and tested properties of film laminate | | | | | |
|---|---|---|---|---|---|
| Formulation (pbw) | | Example | | | |
| | | 9 | 10 | 11 | 12 |
| Weathering test @1500 $MJ/m^2$ | ΔYI | 5 | 8 | 4 | 4 |
| | Crack | ○ | ○ | ○ | ○ |
| | Peel | ○ | ○ | ○ | ○ |

Table 6

| Formulation (as solids) and tested properties of film laminate | | | | | |
|---|---|---|---|---|---|
| Formulation (pbw) | | Example | | | |
| | | 13 | 14 | 15 | 16 |
| (B) Vinyl copolymer containing alkoxysilyl and UV-absorbing groups | | B-1 100 pbw | B-1 100 pbw | B-3 100 pbw | B-1 100 pbw |
| (A) Surface-treated titanium oxide dispersion | | A-1 5 pbw | A-2 5 pbw | A-2 10 pbw | A-3 10 pbw |
| Overcoat polysiloxane composition | | HC-8 | HC-7 | HC-8 | HC-8 |
| Test results | | | | | |
| Dispersion stability | | ○ | ○ | ○ | ○ |
| Initial appearance | | intact | intact | intact | intact |
| Initial haze | | 1.0 | 0.8 | 0.8 | 0.8 |
| Initial adhesion | | 25/25 | 25/25 | 25/25 | 25/25 |
| Appearance after water immersion | | intact | intact | intact | intact |
| Adhesion after water immersion | | 25/25 | 25/25 | 25/25 | 25/25 |
| Mar resistance, % | | 6 | 4 | 7 | 5 |
| Weathering test @ 750 $MJ/m^2$ | ΔYI | <1 | <1 | <1 | <1 |
| | Crack | ○ | ○ | ○ | ○ |
| | Peel | ○ | ○ | ○ | ○ |
| Weathering test @1500 $MJ/m^2$ | ΔYI | 5 | 5 | 8 | 7 |
| | Crack | ○ | ○ | ○ | ○ |
| | Peel | ○ | ○ | ○ | ○ |

Table 7

| Formulation (as solids) and tested properties of film laminate | | | | | |
|---|---|---|---|---|---|
| Formulation (pbw) | Comparative Example | | | | |
| | 6 | 7 | 8 | 9 | 10 |
| (B) Vinyl copolymer containing alkoxysilyl and UV-absorbing groups | B-1 100 pbw | B-1 100 pbw | B-1 100 pbw | RB-1 100 pbw | RB-2 100 pbw |
| (A) Surface-treated titanium oxide dispersion | RA-1 5 pbw | RA-1 10 pbw | RA-2 10 pbw | A-110 pbw | A-2 10 pbw |

(continued)

| Formulation (as solids) and tested properties of film laminate | | | | | | |
|---|---|---|---|---|---|---|
| Formulation (pbw) | | Comparative Example | | | | |
| | | 6 | 7 | 8 | 9 | 10 |
| Overcoat polysiloxane composition | | HC-7 | HC-7 | HC-7 | HC-8 | HC-8 |
| Test results | | | | | | |
| Dispersion stability | | × | × | × | ○ | ○ |
| Initial appearance | | whitened | whitened | whitened | intact | slightly whitened |
| Initial haze | | 5.5 | 8.9 | 5.6 | 0.6 | 2.0 |
| Initial adhesion | | 25/25 | 25/25 | 25/25 | 25/25 | 25/25 |
| Appearance after water immersion | | whitened | whitened | whitened | intact | whitened |
| Adhesion after water immersion | | 25/25 | 25/25 | 25/25 | 25/25 | 25/25 |
| Mar resistance, % | | 5 | 4 | 4 | 5 | 3 |
| Weathering test @ 750 $MJ/m^2$ | ΔYI | - | - | - | 9 | 10 |
| | Crack | - | - | - | - | × |
| | Peel | - | - | - | × | - |
| Weathering test @1500 $MJ/m^2$ | ΔYI | - | - | - | - | - |
| | Crack | - | - | - | - | - |
| | Peel | - | - | - | - | - |

The whole contents of Japanese Patent Applications Nos. 2013-228162 and 2014-084096, the priorities of which are claimed herein, are incorporated herein by reference.

Although some preferred embodiments have been described, many modifications and variations may be made thereto in light of the above teachings. It is therefore to be understood that the invention may be practiced otherwise than as specifically described without departing from the scope of the general teachings and claims herein.

## Claims

**1.** A coating composition comprising

(A) surface-treated titanium oxide comprising 100 parts by weight of core/shell type microparticles each consisting of a core of titanium oxide, optionally complexed with another inorganic oxide, and a shell of silicon oxide around the core, obtainable by treatment of said core/shell microparticles with 11 to 200 parts by weight of both surface treating component having the general formula (I) and surface treating component having the general formula (II):

$$R^1Si(OR^2)_3 \qquad (I)$$

wherein $R^1$ is a $C_1$-$C_{15}$ organic group which may have a (meth) acrylic moiety, and $R^2$ are $C_1$-$C_4$ alkyl,

$$(R^3R^4{}_2Si)_2NH \qquad (II)$$

wherein $R^3$ are $C_1$-$C_{15}$ organic group which may have a (meth) acrylic moiety, and $R^4$ are $C_1$-$C_6$ alkyl,
(B) vinyl copolymer having alkoxysilyl and organic UV-absorbing groups attached on side chains and obtainable from copolymerization of

(b-1) 1 to 50% by weight of vinyl monomer having an alkoxysilyl group,

(b-2) 5 to 40% by weight of vinyl monomer having an organic UV-absorbing group and vinyl polymerizable group in the molecule, comprising benzotriazole compound having the general formula (2):

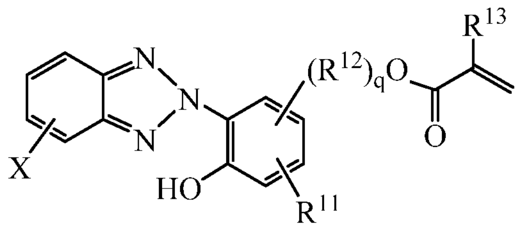

(2)

wherein X is hydrogen or chlorine, $R^{11}$ is hydrogen, methyl, or a tertiary $C_4$-$C_8$ alkyl group, $R^{12}$ is a straight or branched $C_2$-$C_{10}$ alkylene group, $R^{13}$ is hydrogen or methyl, and q is 0 or 1, or benzophenone compound having the general formula (3):

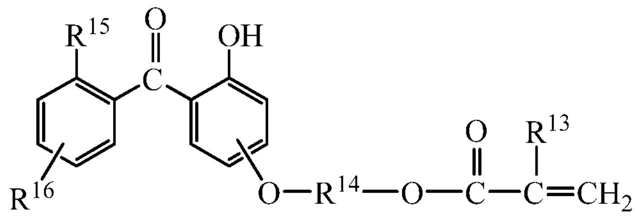

(3)

wherein $R^{13}$ is as defined above, $R^{14}$ is a substituted or unsubstituted, straight or branched $C_2$-$C_{10}$ alkylene group, $R^{15}$ is hydrogen or hydroxyl, and $R^{16}$ is hydrogen, hydroxyl or a $C_1$-$C_6$ alkoxy group, and
(b-3) 10 to 94% by weight of other monomer copolymerizable therewith, not being vinyl monomer having an alkoxysilyl group or vinyl monomer having an organic UV-absorbing group and a vinyl polymerizable group in the molecule, and

(C) solvent,

wherein 1 to 50 parts by weight of the surface-treated titanium oxide (A) is present per 100 parts by weight of the vinyl copolymer (B).

2. The coating composition of claim 1 wherein the weight ratio of the surface treating component of formula (I) and the surface treating component of formula (II) is 10:190 to 199:1.

3. The coating composition of claim 1 or 2 wherein the surface-treated titanium oxide is prepared by or obtainable by a method comprising the steps of: (i) furnishing a water dispersion of the core/shell type microparticles, (ii) adding alcohol which forms a two-phase system with the water dispersion, (iii) adding silane compound having the general formula (I) and/or a (partial) hydrolytic condensate thereof, (iv) heating, such as by irradiating microwaves, (v) adding organic solvent, (vi) removing water, e.g. by azeotroping off, (vii) optionally, removing further water to 1,000 ppm or less, and (viii) reacting with silane compound having the general formula (II).

4. The coating composition of any one of claims 1 to 3 wherein the core/shell type microparticles are core/shell type tetragonal titanium oxide solid-solution microparticles each consisting of a core of tetragonal titanium oxide having tin and manganese incorporated in solid solution and a shell of silicon oxide around the core,
the amount of tin incorporated in solid solution providing a molar ratio of titanium to tin (Ti/Sn) of 10/1 to 1,000/1, and the amount of manganese incorporated in solid solution providing a molar ratio of titanium to manganese (Ti/Mn) of 10/1 to 1,000/1.

5. The coating composition of any one of claims 1 to 4 wherein the cores of the the core/shell type microparticles have a volume average 50% cumulative distribution diameter of up to 30 nm, and the core/shell type microparticles have a volume average 50% cumulative distribution diameter of up to 50 nm, both as measured by the dynamic light scattering method.

6. The coating composition of any one of claims 1 to 5 wherein the surface treating component having formula (I) is

3-acryloyloxypropyltrimethoxysilane or 3-methacryloyloxypropyltrimethoxysilane.

**7.** The coating composition of any one of claims 1 to 6 wherein the surface treating component of formula (II) is selected from hexamethyldisilazane, bis[(acryloyloxymethyl)dimethylsilyl]azane, bis[(acryloyloxypropyl)dimethylsilyl]azane, hexaethyldisilazane and hexapropyldisilazane.

**8.** The coating composition of any one of claims 1 to 7, further comprising:

- (D) colloidal silica, and/or
- UV absorber and/or UV stabilizer.

**9.** The coating composition of any one of claims 1 to 8 wherein the vinyl copolymer (B) has a weight average molecular weight of 5,000 to 250,000 as measured by GPC versus polystyrene standards.

**10.** The coating composition of any one of claims 1 to 9 wherein component (b-3) is selected from (meth)acrylic monomers having a cyclic hindered amine structure, (meth)acrylates, (meth)acrylonitrile, (meth)acrylamide, alkyl vinyl ethers, alkyl vinyl esters, styrene, and derivatives thereof.

**11.** Use of a coating composition of any one of claims 1 to 10 as a primer for silicone hard coating film.

**12.** The use of claim 11 wherein the silicone hard coating film is a cured film of a silicone composition comprising

(a) silicone resin obtainable from (co)hydrolytic condensation of an alkoxysilane having the formula (4):

$$(R^{01})_m(R^{02})_nSi(OR^{03})_{4-m-n} \qquad (4)$$

wherein $R^{01}$ and $R^{02}$ are each independently hydrogen or a substituted or unsubstituted monovalent hydrocarbon group and may bond together, $R^{03}$ is $C_1$-$C_3$ alkyl, m and n are each independently 0 or 1, m+n is 0, 1 or 2, a partial hydrolytic condensate thereof, or a mixture thereof,
(b) colloidal silica,
(c) curing catalyst,
(d) solvent, and optionally
(e) titanium oxide.

**13.** A coated article comprising a substrate, preferably an organic resin substrate, and a cured film of a coating composition of any one of claims 1 to 10 disposed on at least one surface of the substrate, directly or via at least one layer.

**14.** The coated article of claim 13 wherein the cured film of the coating composition of any one of claims 1 to 10 is a primer for a silicone hard coating film.

**15.** A method of making a coated article comprising applying a coating composition of any one of claims 1 to 10 to a substrate, preferably an organic resin substrate, directly or via at least one other layer, and curing to form a cured film.

## Patentansprüche

**1.** Beschichtungszusammensetzung, die Folgendes umfasst:

(A) oberflächenbehandeltes Titanoxid, das 100 Gewichtsteile Mikropartikel vom Hülle-Kern-Typ umfasst, die jeweils aus einem Titanoxidkern, gegebenenfalls mit einem anderen anorganischen Oxid komplexiert, und einer Siliciumoxidhülle um den Kern herum bestehen, und das durch die Behandlung der Hülle-Kern-Mikropartikel mit 11 bis 200 Gewichtsteilen sowohl einer Oberflächenbehandlungskomponente der allgemeinen Formel (I) als auch einer Oberflächenbehandlungskomponente der allgemeinen Formel (II) erhältlich sind:

$$R^1Si(OR^2)_3 \qquad (I)$$

worin $R^1$ eine organische $C_1$-$C_{15}$-Gruppe ist, die gegebenenfalls eine (Meth)acryl-Gruppierung aufweist, und die $R^2$ $C_1$-$C_4$-Alkyl sind,

$(R^3R^4{}_2Si)_2NH$ (II)

worin die $R^3$ organische $C_1$-$C_{15}$-Gruppen sind, die gegebenenfalls eine (Meth)acryl-Gruppierung aufweisen, und die $R^4$ $C_1$-$C_6$-Alkyl sind,

(B) Vinylcopolymer mit Alkoxysilyl- und an Seitenketten gebundenen organischen UV-absorbierenden Gruppen, das durch Copolymerisation folgender Monomere erhältlich ist:

(b-1) 1 bis 50 Gew.-% eines Vinylmonomers mit einer Alkoxysilylgruppe.

(b-2) 5 bis 40 Gew.-% eines Vinylmonomers mit einer organischen UV-absorbierenden Gruppe und einer polymerisierbaren Vinylgruppe im Molekül, umfassend eine Benzotriazolverbindung der allgemeinen Formel (2):

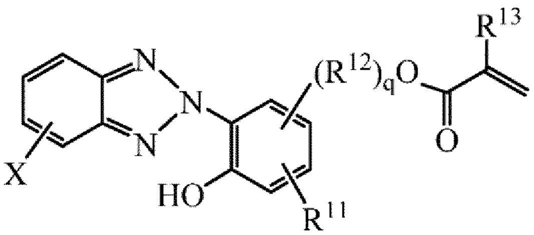

(2)

worin X Wasserstoff oder Chlor ist, $R^{11}$ Wasserstoff, Methyl oder eine tertiäre $C_4$-$C_8$-Alkylgruppe ist, $R^{12}$ eine unverzweigte oder verzweigte $C_2$-$C_{10}$-Alkylengruppe ist, $R^{13}$ Wasserstoff oder Methyl ist und q = 0 oder 1 ist, oder eine Benzophenonverbindung der allgemeinen Formel (3):

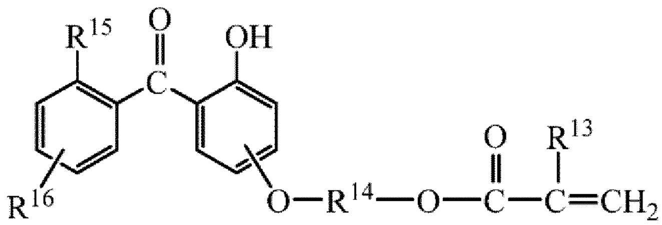

(3)

worin $R^{13}$ wie oben definiert ist, $R^{14}$ eine substituierte oder unsubstituierte, unverzweigte oder verzweigte $C_2$-$C_{10}$-Alkylengruppe ist, $R^{15}$ Wasserstoff oder Hydroxyl ist und $R^{16}$ Wasserstoff, Hydroxyl oder eine $C_1$-$C_6$-Alkoxygruppe ist und

(b-3) 10 bis 94 Gew.-% eines anderen Monomers, das mit diesen copolymerisierbar ist und kein Vinylmonomer mit einer Alkoxysilylgruppe oder Vinylmonomer mit einer organischen UV-absorbierenden Gruppe und einer polymerisierbaren Vinylgruppe im Molekül ist, und

(C) Lösungsmittel,

worin 1 bis 50 Gewichtsteile des oberflächenbehandelten Titanoxids (A) pro 100 Gewichtsteile des Vinylcopolymers (B) vorliegen.

2. Beschichtungszusammensetzung nach Anspruch 1, wobei das Gewichtsverhältnis zwischen der Oberflächenbehandlungskomponente der Formel (I) und der Oberflächenbehandlungskomponente der Formel (II) 10:190 bis 199:1 beträgt.

3. Beschichtungszusammensetzung nach Anspruch 1 oder 2, wobei das oberflächenbehandelte Titanoxid durch ein Verfahren hergestellt oder erhältlich ist, das folgende Schritte umfasst: (i) das Bereitstellen einer Wasserdispersion der Hülle-Kern-Mikropartikel, (ii) das Zusetzen von Alkohol, der mit der Wasserdispersion ein ZweiPhasen-System bildet, (iii) das Zusetzen einer Silanverbindung der allgemeinen Formel (I) und/oder eines hydrolytischen (partiellen) Kondensats davon, (iv) das Erhitzen, beispielsweise durch Bestrahlung mit Mikrowellen, (v) das Zusetzen eines organischen Lösungsmittels, (vi) das Entfernen von Wasser, z.B. durch Azeotropdestillation, (vii) gegebenenfalls das Entfernen von weiterem Wasser bis auf 1.000 ppm oder weniger und (viii) das Umsetzen mit einer Silanverbindung der allgemeinen Formel (II).

4. Beschichtungszusammensetzung nach einem der Ansprüche 1 bis 3, wobei die Hülle-Kern-Mikropartikel Hülle-Kern-Mikropartikel aus tetragonalem Titanoxid in fester Lösung sind, die jeweils aus einem Kern aus tetragonalem Titanoxid mit in fester Lösung eingebautem Zinn und Mangan und einer Hülle aus Siliciumoxid um den Kern herum bestehen,
wobei die Menge an in fester Lösung eingebautem Zinn ein Molverhältnis von Titan zu Zink (Ti/Sn) von 10:1 bis 1000:1 bereitstellt und die Menge an in fester Lösung eingebautem Mangen ein Molverhältnis von Titan zu Mangan (Ti/Mn) von 10:1 bis 1000:1 bereitstellt.

5. Beschichtungszusammensetzung nach einem der Ansprüche 1 bis 4, worin die Kerne der Hülle-Kern-Mikropartikel einen volumensmittleren Durchmesser bei 50 % der kumulativen Verteilung von bis zu 30 nm aufweisen und die Hülle-Kern-Mikropartikel einen volumensmittleren Durchmesser bei 50 % der kumulativen Verteilung von bis zu 50 nm aufweisen, die beide durch das dynamische Lichtstreuungsverfahren gemessen werden.

6. Beschichtungszusammensetzung nach einem der Ansprüche 1 bis 5, worin die Oberflächenbehandlungskomponente der Formel (I) 3-Acryloxyoxypropyltrimethoxysilan oder 3-Methacryloxyloxypropyltrimethoxysilan ist.

7. Beschichtungszusammensetzung nach einem der Ansprüche 1 bis 6, worin die Oberflächenbehandlungskomponente der Formel (II) aus Hexamethyldisilazan, Bis-[(acryloyloxymethyl)dimethylsilyl]azan, Bis[(acryloyloxypropyl)dimethylsilyl]azan, Hexaethyldisilazan und Hexapropyldisilazan ausgewählt ist.

8. Beschichtungszusammensetzung nach einem der Ansprüche 1 bis 7, die weiters Folgendes umfasst:

- (D) hochdisperses Silicumdioxid und/oder
- UV-Absorber und/oder UV-Stabilisatoren.

9. Beschichtungszusammensetzung nach einem der Ansprüche 1 bis 8, worin das Vinylcopolymer (B) ein gewichtsmittleres Molekulargewicht von 5.000 bis 250.000 aufweist, gemessen durch GPC relativ zu Polystyrol-Standards.

10. Beschichtungszusammensetzung nach einem der Ansprüche 1 bis 9, worin Komponente (b-3) aus (Meth)acrylmonomeren mit einer zyklischen Struktur eines sterisch gehinderten Amins, (Meth)acrylaten, (Meth)acrylnitril, (Meth)acrylamid, Alkylvinylethern, Alkylvinylestern, Styrol und Derivaten davon ausgewählt ist.

11. Verwendung einer Beschichtungszusammensetzung nach einem der Ansprüche 1 bis 10 als Primer für einen Silikonhartbeschichtungsfilm.

12. Verwendung nach Anspruch 11, worin der Silikonhartbeschichtungsfilm ein gehärteter Film aus einer Silikonzusammensetzung ist, die Folgendes umfasst:

(a) Silikonharz, das durch die (co)hydrolytische Kondensation eines Alkoxysilans der Formel (4):

$$(R^{01})m(R^{02})nSi(OR^{03})4\text{-}m\text{-}n \qquad (4)$$

worin $R^{01}$ und $R^{02}$ jeweils unabhängig voneinander Wasserstoff oder eine substituierte oder unsubstituierte einwertige Kohlenwasserstoffgruppe sind und gegebenenfalls miteinander verbunden sind, $R^{03}$ $C_1$-$C_3$-Alkyl ist, m und n jeweils unabhängig voneinander 0 oder 1 sind, m+n = 0, 1 oder 2 ist, erhältlich ist, ein partielles hydrolytisches Kondensat oder ein Gemischs davon;
(b) hochdisperses Silicumdioxid,
(c) Härtungskatalysator,
(d) Lösungsmittel und gegebenenfalls
(e) Titanoxid.

13. Beschichteter Gegenstand, der ein Substrat, vorzugsweise ein organisches Harzsubstrat, und einen gehärteten Film aus einer Beschichtungszusammensetzung nach einem der Ansprüche 1 bis 10 umfasst, die auf zumindest einer Oberfläche des Substrats direkt der über zumindest eine Schicht aufgebracht ist.

14. Beschichteter Gegenstand nach Anspruch 13, worin der gehärtete Film aus der Beschichtungszusammensetzung

nach einem der Ansprüche 1 bis 10 ein Primer für einen Silikonhartbeschichtungsfilm ist.

**15.** Verfahren zur Herstellung eines beschichteten Gegenstands, das das Aufbringen einer Beschichtungszusammensetzung nach einem der Ansprüche 1 bis 10 auf ein Substrat, vorzugsweise ein organisches Harzsubstrat, direkt oder über zumindest eine andere Schicht, und das Härten zur Ausbildung eines gehärteten Films umfasst.

**Revendications**

**1.** Composition de revêtement comprenant

(A) un oxyde de titane traité en surface comprenant 100 parties en poids de microparticules de type noyau/enveloppe étant chacune constituée d'un noyau d'oxyde de titane, facultativement complexé avec un autre oxyde inorganique, et d'une enveloppe d'oxyde de silicium autour du noyau, pouvant être obtenu par traitement desdites microparticules de type noyau/enveloppe par 11 à 200 parties en poids du composant de traitement de surface répondant à la formule générale (I) et du composant de traitement de surface répondant à la formule générale (II) :

$R^1Si(OR^2)_3$ (I)

dans laquelle $R^1$ représente un groupe organique en $C_1$ à $C_{15}$ qui peut comporter un groupement (méth)acrylique, et les radicaux $R^2$ représentent un groupe alkyle en $C_1$ à $C_4$,

$(R^3R^4{}_2Si)_2NH$ (II)

dans laquelle les radicaux $R^3$ représentent un groupe organique en $C_1$ à $C_{15}$ qui peut comporter un groupement (méth)acrylique, et les radicaux $R^4$ représentent un groupe alkyle en $C_1$ à $C_6$,
(B) un copolymère vinylique comportant des groupes alcoxysilyles et organiques absorbant les UV fixés sur les chaînes latérales et pouvant être obtenu par copolymérisation de

(b-1) de 1 à 50 % en poids de monomère vinylique comportant un groupe alcoxysilyle,
(b-2) de 5 à 40 % en poids de monomère vinylique comportant un groupe organique absorbant les UV et un groupe vinylique polymérisable dans la molécule, comprenant un composé benzotriazole répondant à la formule générale (2) :

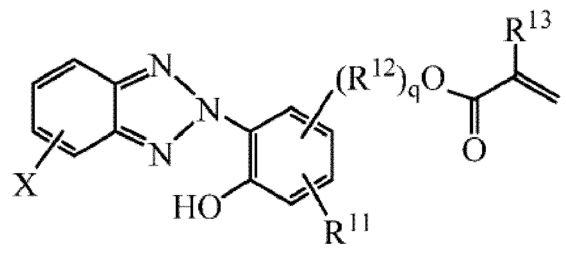

(2)

dans laquelle X représente un atome d'hydrogène ou de chlore, $R^{11}$ représente l'atome d'hydrogène, un groupe méthyle ou un groupe alkyle tertiaire en $C_4$ à $C_8$, $R^{12}$ représente un groupe alkylène en $C_2$ à $C_{10}$, linéaire ou ramifié, $R^{13}$ représente l'atome d'hydrogène ou un groupe méthyle, et q vaut 0 ou 1, ou un composé benzophénone répondant à la formule générale (3) :

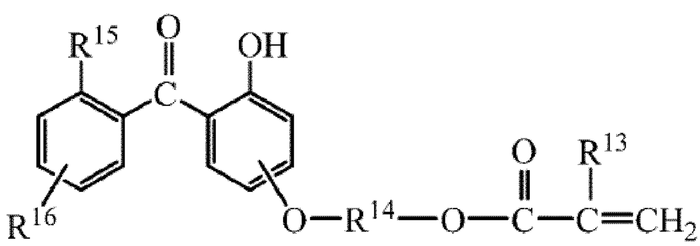

(3)

dans laquelle $R^{13}$ est tel que défini ci-dessus, $R^{14}$ représente un groupe alkylène en $C_2$ à $C_{10}$, linéaire ou

ramifié, substitué ou non substitué, $R^{15}$ représente l'atome d'hydrogène ou un groupe hydroxyle, et $R^{16}$ représente l'atome d'hydrogène, un groupe hydroxyle ou un groupe alcoxy en $C_1$ à $C_6$, et
(b-3) de 10 à 94 % en poids d'un autre monomère copolymérisable avec celui-ci, n'étant pas un monomère vinylique comportant un groupe alcoxysilyle ou un monomère vinylique comportant un groupe organique absorbant les UV et un groupe vinylique polymérisable dans la molécule, et

(C) un solvant,

dans laquelle de 1 à 50 parties en poids de l'oxyde de titane traité en surface (A) sont présentes pour 100 parties en poids du copolymère vinylique (B).

**2.** Composition de revêtement selon la revendication 1 dans laquelle le rapport pondéral du composant de traitement de surface de formule (I) et du composant de traitement de surface de formule (II) est de 10/190 à 199/1.

**3.** Composition de revêtement selon la revendication 1 ou 2 dans laquelle l'oxyde de titane traité en surface est préparé ou peut être obtenu par un procédé comprenant les étapes suivantes : (i) apport d'une dispersion dans l'eau des microparticules de type noyau/enveloppe, (ii) ajout d'un alcool qui forme un système biphasique avec la dispersion dans l'eau, (iii) ajout d'un composé silane répondant à la formule générale (I) et/ou d'un condensat hydrolytique (partiel) de celui-ci, (iv) chauffage, par exemple par irradiation de microondes, (v) ajout d'un solvant organique, (vi) élimination de l'eau, par exemple par élimination azéotropique, (vii) facultativement, nouvelle élimination de l'eau jusqu'à une teneur inférieure ou égale à 1 000 ppm, et (viii) réaction avec le composé silane répondant à la formule générale (II).

**4.** Composition de revêtement selon l'une quelconque des revendications 1 à 3 dans laquelle les microparticules de type noyau/enveloppe sont des microparticules en solution solide d'oxyde de titane tétragonal de type noyau/enveloppe étant chacune constituée d'un noyau d'oxyde de titane tétragonal comportant de l'étain et du manganèse incorporés en solution solide et d'une enveloppe d'oxyde de silicium autour du noyau,
la quantité d'étain incorporée en solution solide conduisant à un rapport molaire du titane à l'étain (Ti/Sn) de 10/1 à 1 000/1, et la quantité de manganèse incorporée en solution solide conduisant à un rapport molaire du titane au manganèse (Ti/Mn) de 10/1 à 1 000/1.

**5.** Composition de revêtement selon l'une quelconque des revendications 1 à 4 dans laquelle les noyaux des microparticules de type noyau/enveloppe ont un diamètre moyen en volume pour une distribution cumulée de 50 % pouvant atteindre 30 nm, et les microparticules de type noyau/enveloppe ont un diamètre moyen en volume pour une distribution cumulée de 50 % pouvant atteindre 50 nm, tous deux mesurés par la méthode par diffusion dynamique de la lumière.

**6.** Composition de revêtement selon l'une quelconque des revendications 1 à 5 dans laquelle le composant de traitement de surface répondant à la formule (I) est le 3-acryloyloxypropyltriméthoxysilane ou le 3-méthacryloyloxypropyltriméthoxysilane.

**7.** Composition de revêtement selon l'une quelconque des revendications 1 à 6 dans laquelle le composant de traitement de surface de formule (II) est choisi parmi l'hexaméthyldisilazane, le bis[(acryloyloxyméthyl)diméthylsilyl]azane, le bis[(acryloyloxypropyl)diméthylsilyl]azane, l'hexaéthyldisilazane et l'hexapropyldisilazane.

**8.** Composition de revêtement selon l'une quelconque des revendications 1 à 7, comprenant en outre :

- (D) de la silice colloïdale, et/ou
- un absorbeur d'UV et/ou un stabilisant d'UV.

**9.** Composition de revêtement selon l'une quelconque des revendications 1 à 8 dans laquelle le copolymère vinylique (B) a un poids moléculaire moyen en poids de 5 000 à 250 000 tel que mesuré par GPC par rapport à des standards de polystyrène.

**10.** Composition de revêtement selon l'une quelconque des revendications 1 à 9 dans laquelle le composant (b-3) est choisi parmi les monomères (méth)acryliques ayant une structure de type amine encombrée cyclique, les (méth)acrylates, le (méth)acrylonitrile, le (méth)acrylamide, les éthers alkyl vinyliques, les esters alkyl vinyliques, le styrène, et les dérivés de ceux-ci.

**11.** Utilisation d'une composition de revêtement selon l'une quelconque des revendications 1 à 10 en tant qu'amorce pour un film de revêtement dur en silicone.

**12.** Utilisation selon la revendication 11 dans laquelle le film de revêtement dur en silicone est un film durci d'une composition de silicone comprenant

(a) une résine de silicone pouvant être obtenue par condensation (co)hydrolytique d'un alcoxysilane répondant à la formule (4) :

$$(R^{01})_m(R^{02})_nSi(OR^{03})_{4-m-n} \qquad (4)$$

dans laquelle $R^{01}$ et $R^{02}$ représentent chacun indépendamment un atome d'hydrogène ou un groupe hydrocarbure monovalent, substitué ou non substitué, et peuvent être liés l'un à l'autre, $R^{03}$ représente un groupe alkyle en $C_1$ à $C_3$, m et n valent chacun indépendamment 0 ou 1, m + n vaut 0, 1 ou 2, un condensat hydrolytique partiel de celui-ci, ou un mélange de ceux-ci,
(b) de la silice colloïdale,
(c) un catalyseur de durcissement,
(d) un solvant, et facultativement
(e) de l'oxyde de titane.

**13.** Article revêtu comprenant un substrat, de préférence un substrat de résine organique, et un film durci d'une composition de revêtement selon l'une quelconque des revendications 1 à 10 disposé sur au moins une surface du substrat, directement ou via au moins une couche.

**14.** Article revêtu selon la revendication 13 dans lequel le film durci de la composition de revêtement selon l'une quelconque des revendications 1 à 10 est un primaire pour un film de revêtement dur en silicone.

**15.** Procédé de préparation d'un article revêtu comprenant l'application d'une composition de revêtement selon l'une quelconque des revendications 1 à 10 sur un substrat, de préférence un substrat de résine organique, directement ou via au moins une autre couche, et le durcissement pour former un film durci.

FIG.1

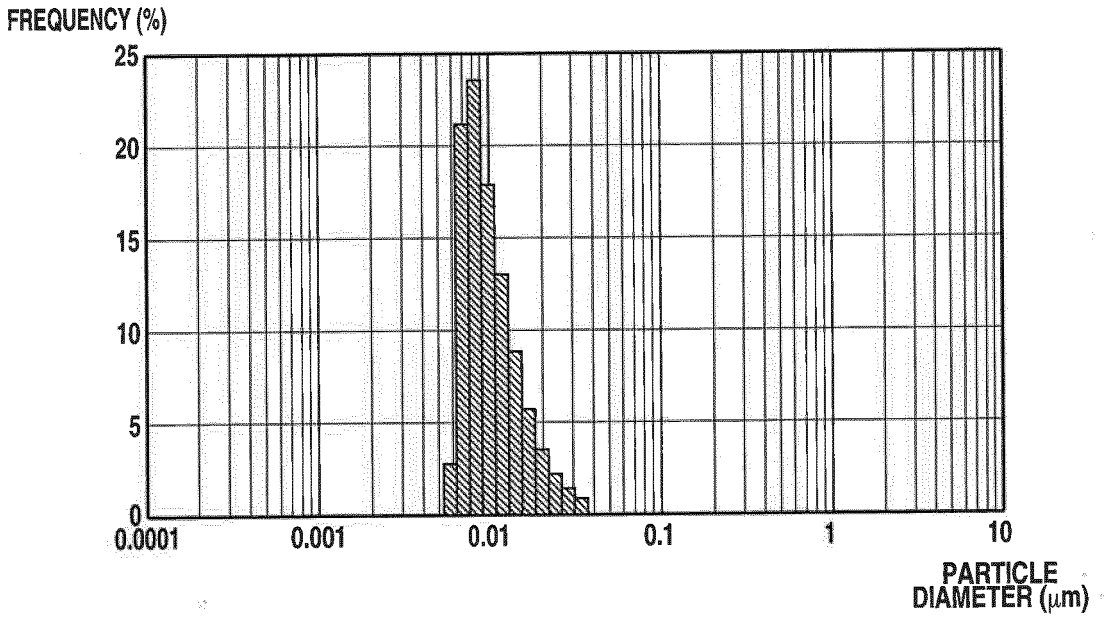
FREQUENCY (%)
25
20
15
10
5
0
0.0001
0.001
0.01
0.1
1
10
PARTICLE DIAMETER (μm)

FIG.2

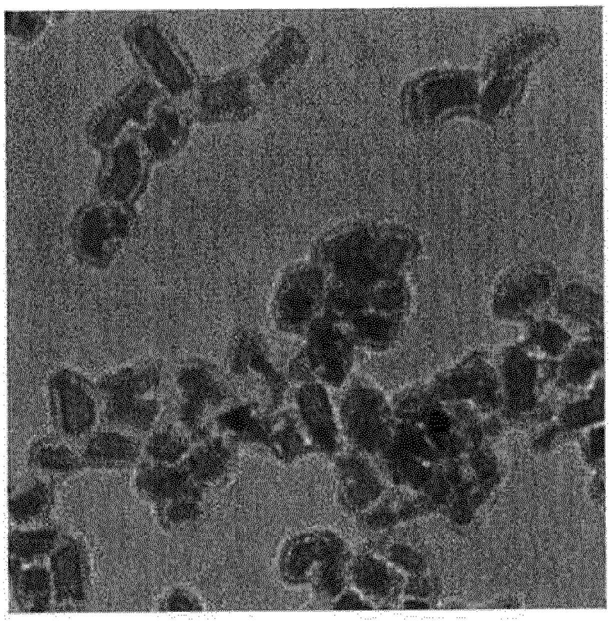

FIG.3

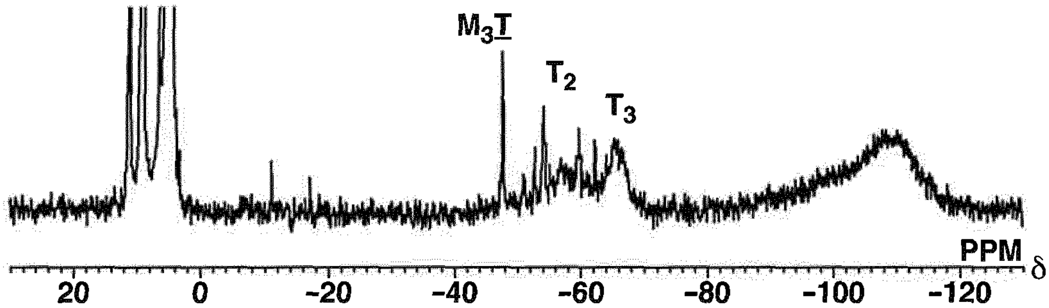
M3T
T2
T3
PPM
δ
20
0
-20
-40
-60
-80
-100
-120

FIG.4

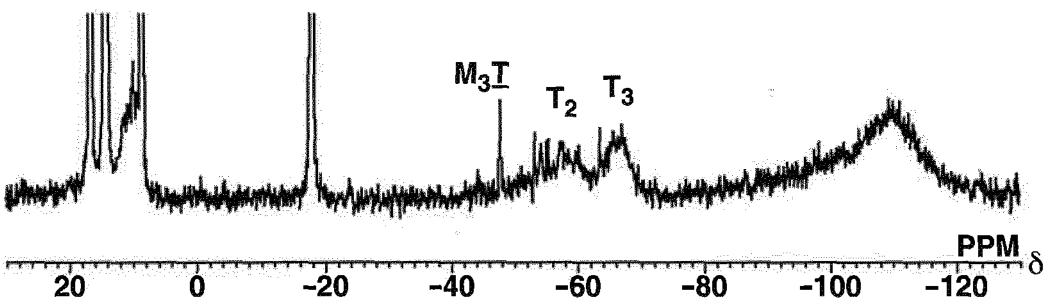
M3T
T2
T3
PPM
δ
20
0
-20
-40
-60
-80
-100
-120

FIG.5

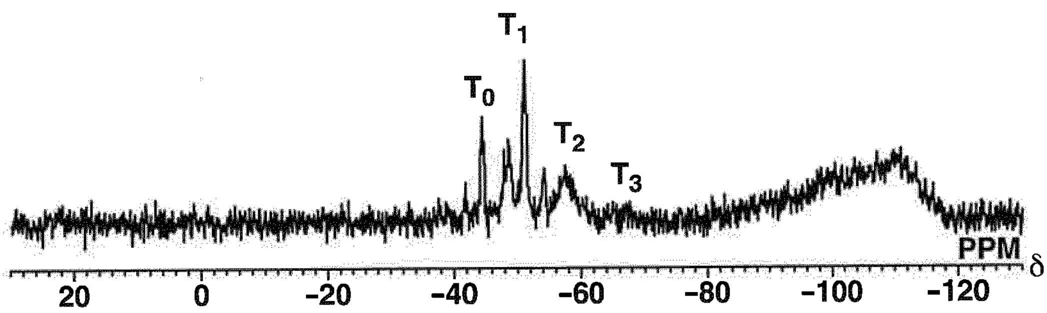
T1
T0
T2
T3
PPM
δ
20
0
-20
-40
-60
-80
-100
-120

FIG.6

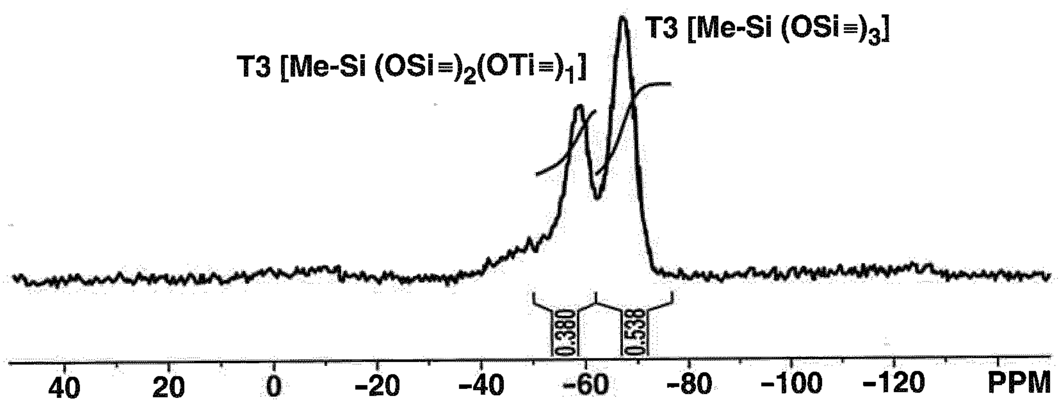
T3 [Me-Si (OSi≡)3]
T3 [Me-Si (OSi≡)2(OTi≡)1]
0.380
0.538
40
20
0
-20
-40
-60
-80
-100
-120
PPM

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S5692059 A
- JP H01149878 A
- JP H08151415 A
- JP 2001114841 A
- JP 3102696 B
- JP 2001214122 A
- JP 2001047574 A
- JP 2007231060 A
- JP 2008120986 A
- JP 2010261012 A
- JP 2011225660 A
- JP 2012077267 A
- US 8809438 B
- EP 2239308 A
- JP 2009067778 A
- JP B A
- JP S6156187 B
- JP S51002736 A
- JP H09071654 A
- JP 2013228162 A
- JP 2014084096 A


### Non-patent literature cited in the description


- *Organometallics,* 2008, vol. 27 (4), 500-502
- *J. Org. Chem.,* 1980, vol. 45, 1164
- *J. Org. Chem.,* 1999, vol. 64, 7707